# EUROPÄISCHE PATENTSCHRIFT

(11) **EP 4 226 446 B1**
(45) Veröffentlichungstag und Bekanntmachung des Hinweises auf die Patenterteilung: **10.12.2025**
(21) Anmeldenummer: 22758556.9
(22) Anmeldetag: 17.08.2022
(51) Int. Cl.: H01M 8/04119, H01M 8/2484, H01M 8/10

(54) **EIN AN BRENNSTOFFZELLENSYSTEMLEISTUNGEN ADAPTIERBARER STACKANSCHLUSSBLOCK SOWIE EIN DAZUGEHÖRIGES BRENNSTOFFZELLENSYSTEM UND EIN ENTSPRECHENDES VERFAHREN**
STACK CONNECTION BLOCK ADAPTABLE TO FUEL CELL SYSTEM OUTPUTS, AND ASSOCIATED FUEL CELL SYSTEM, AND CORRESPONDING METHOD
BLOC DE RACCORDEMENT D'EMPILEMENT ADAPTABLE AUX PERFORMANCES D'UN SYSTÈME DE PILE À COMBUSTIBLE ET SYSTÈME DE PILE À COMBUSTIBLE ASSOCIÉ ET PROCÉDÉ CORRESPONDANT

(30) Priorität: 07.09.2021 DE 102021123174
(43) Veröffentlichungstag der Anmeldung: 16.08.2023
(73) Patentinhaber: FutureE GmbH, 72622 Nürtingen (DE)
(72) Erfinder: RATHJE, Matthias, 72664 Kohlberg (DE); LIMMER, Siegfried, 72622 Nürtingen (DE)
(74) Vertreter: Cremer & Cremer
(86) Internationale Anmeldenummer: PCT/EP2022/072909
(87) Internationale Veröffentlichungsnummer: WO 2023/036573

(56) Entgegenhaltungen:
- DE-A1- 102018 217 322
- JP-A- 2001 216 983
- JP-A- 2001 216 983
- JP-A- 2008 010 306
- US-A1- 2008 226 964

## Beschreibung

Die vorliegende Erfindung behandelt eine Stackanschlusseinheit mit einem Stackanschlussblock, der für gestapelte Brennstoffzellen verwendbar ist, wobei eine Anzahl und eine aktive Konversionsfläche der einzelnen Brennstoffzellen und der anzuschließende Stackanschlussblock (wozu auch seine Komponenten gehören) aufeinander abstimmbar sind. Mit anderen Worten, die Erfindung zeigt auf, wie der gleiche Stackanschlussblock sowohl bei kleineren als auch bei größeren Brennstoffzellenstacks (auch im Deutschen Brennstoffzellenstapel genannt) zum Einsatz kommen kann, z. B. bei Leistungen im dreistelligen Wattbereich als auch bei Leistungen im zwei- und höherstelligen Kilowattbereich.

Des Weiteren behandelt die vorliegende Erfindung ein Brennstoffzellensystem, das mit einem solchen Stackanschlussblock ausgestattet ist, bei dem ein zumindest teilweise in dem Stackanschlussblock platzierter Befeuchter für eine möglichst exakte Medienaufbereitung für eine bestimmte Leistungsklasse des Brennstoffzellenstacks, ergo auch des Brennstoffzellensystems dimensioniert bzw. ausgelegt ist.

Außerdem behandelt die vorliegende Erfindung eine Umbau- und Adaptionsmethode, wie in Orientierung an eine Größe eines Brennstoffzellenstacks unter einer Mehrfachverwendung bzw. einer Weiterverwendung des Stackanschlussblocks eine Medienaufbereitung durchführbar ist.

Mit anderen Worten, die vorliegende Erfindung behandelt eine Stackanschlusseinheit mit einem Stackanschlussblock nach dem Oberbegriff von Anspruch 1, ein Brennstoffzellensystem nach dem Oberbegriff von Anspruch 13 und ein Verfahren zu einer Mehrfachverwendung eines Stackanschlussblocks gemäß Anspruch 14.

### Technisches Gebiet

Brennstoffzellen sind elektrochemische Energiewandler, die mehrfach identisch aufgebaut gestapelt werden können. Für verblockte, häufig länglich realisierte Brennstoffzellenstapel wird auch der aus dem Englischen entlehnte Ausdruck "Stack" in der deutschen Sprache verwendet. Daher werden häufig die Begriffe "Brennstoffzellenstapel" und "Brennstoffzellenstack" als Synonyme verwendet.

Die einzelnen Zellen werden dabei üblicherweise zwischen zwei Endplatten gestapelt und über eine Verspannung mit den Endplatten wird ein gasdichter und für die benötigte elektrische Leitfähigkeit elektrisch kontaktierter Brennstoffzellenstapel erzeugt.

In einer solchen Brennstoffzelle wird ein wasserstoffhaltiges Gas an der Anode oxidiert, während an der Kathode Luft bzw. ein in der Luft vorhandener Sauerstoff reduziert wird. Als Reaktionsprodukt entsteht ein Produktwasser (je nach Betriebsparametern wie Temperatur als gasförmiges und/oder flüssiges Produktwasser), welches mit der Restluft, d. h. mit der Luft (mit der sauerstoffabgereicherten Luft), die nach Reaktionsvorgängen noch an der Kathode übrigbleibt, aus der Brennstoffzelle abgeführt wird.

| | |
|---|---|
| Anode: | H₂ → 2H⁺ + 2e⁻ |
| Kathode: | ½ O₂ + 2e⁻ + 2H⁺ → H₂O |

Die Elektronen wandern über einen äußeren Stromkreis zur Kathode und treiben dabei einen elektrischen Verbraucher an. H⁺-Ionen (Protonen) wandern von der Anode durch einen Polymerelektrolyt, der als dünne Membran zwischen den Elektroden (Anode/Kathode) angeordnet ist, zur Kathode, wo diese mit dem Sauerstoff und den über den äußeren Stromkreis zurückgelangten Elektronen Wasser bilden.

Eine Leitfähigkeit und eine Langlebigkeit der Polymerelektrolytmembranen (jeweils eine Membran in einer einzelnen Brennstoffzelle), und damit des gesamten Brennstoffzellenstacks, sind dabei unter anderem abhängig von deren Wassergehalt, weshalb einer Brennstoffzelle meist feuchte Luft zugeführt wird. Diese Feuchte in der Luft wird erzeugt, indem das feuchte Abgas (Restluft mit Produktwasser) über einen Membranbefeuchter geleitet wird. Über die Membran des Befeuchters wird Wasser transportiert. Luft, die aus einer Umgebung bezogen wird, kann als Frischluft bezeichnet werden. Luft, die zu dem Brennstoffzellenstack gelangen soll, kann als Zuluft bezeichnet werden. Luft, die aus dem Brennstoffzellenstack abgeleitet wird, kann als Abluft bezeichnet werden. Luft, die durch den Befeuchter, z. B. den Membranbefeuchter, durchgeleitet nicht mehr weiter benötigt wird, kann als Fortluft bezeichnet werden. Eine Strömung des Luftstroms im Befeuchter von der Frischluft zur Zuluft auf einer Seite einer Befeuchtermembran und eine Strömung des Luftstroms im Befeuchter von der Abluft zur Fortluft auf einer anderen Seite der Befeuchtermembran können in zwei unterschiedlichen Weisen durch den Befeuchter durchgeleitet werden, zum einen ist ein Gegenstrom und zum anderen ist ein Kreuzstrom der Durchströmungen möglich und besonders sinnvoll. Auf diese Weise wird auf der anderen Seite der Membran Frischluft aus der Umgebung für den Betrieb im Brennstoffzellenstapel aufbereitet und befeuchtet.

An den Endplatten des Brennstoffzellenstacks befinden sich die sogenannten Medienports, die auch als Stackanschlüsse bezeichnet werden, für die Zufuhr bzw. die Abfuhr der Edukte und Produkte, wie des wasserstoffhaltigen Gases, wie der Luft oder wie des Sauerstoffs, wie des Kühlmediums, wie des abgereicherten, wasserstoffhaltigen Gases, wie der Restluft mit Produktwasser sowie wie des erwärmten Kühlmediums.

Ein Brennstoffzellenstapel bzw. -stack ist aber in der Regel nicht alleine stehend als elektrochemischer Energiewandler betreibbar, da ihm von außen eben die Reaktionsmedien mit festgelegten Zusammensetzungen, Massenströmen und Bedingungen, wie z. B. Temperatur und Druck, sowie Kühlmittel zugeführt werden müssen. Hierzu bedarf es deshalb unter anderem des oben angesprochenen Befeuchters, aber auch bedarf es entsprechender Sensorik und Aktuatorik und einer speziellen Steuerung.

Zur besseren Integration in das Brennstoffzellensystem muss der Brennstoffzellenstack Schnittstellen und Befestigungen bzw. Befestigungspunkte besitzen bzw. anbieten, über die Versorgungen mit den Medien (wasserstoffhaltiges Gas und Luft bzw. Sauerstoff) an einer der Endplatten des Stacks angeschlossen werden können (natürlich können auch einige Medien an der ersten Endplatte und andere Medien an der zweiten Endplatte ein- und ausgeleitet werden).

### Stand der Technik

Die Bedeutung der Befeuchtung der Medien und somit die Bedeutung eines Befeuchters für den Betrieb von auf Polymerelektrolytmembranen basierenden Brennstoffzellen lässt sich unter anderem der EP 3 171 442 A2 (Anmelderin: Hyundai Motor Company; Veröffentlichungstag: 24. Mai 2017), die auch als KR 10 2017 0 059 117 A veröffentlicht worden ist, der DE 10 2007 054 826 A1 (Anmelderin: Daimler AG und Ford Global Technologies, LLC; Veröffentlichungstag: 20. Mai 2009) sowie der DE 10 2014 224 275 A1 (Anmelderin: Hyundai Motor Company; Offenlegungstag: 17. Dezember 2015) entnehmen. Hierbei wird auch diskutiert, dass es Betriebsphasen geben sollte, in denen mit einer anderen Befeuchtung bzw. einem anderen Kondensatanteil (bzw. Feuchtegehalt) in den Medien, die zu einzelnen Brennstoffzellen strömen sollen, zu operieren ist.

Während die DE 10 2014 224 275 A1 mit einem räumlich abgesetzten Befeuchter in ihrem Prinzipschaubild operiert, schlagen die beiden japanischen Patentanmeldungen JP 2001 - 216 983 A (Anmelderin: Honda Motor Co. Ltd.; Offenlegungstag: 10. August 2001) sowie JP 2007 - 141 716 A (Anmelderin: Honda Motor Co. Ltd.; Veröffentlichungstag: 7. Juni 2007) vor, den Befeuchter als Teil eines an dem Brennstoffzellenstack anschließbaren Blocks, sozusagen seitlich daran angeschlossen, zu gestalten.

In der WO 03/090 300 A2 (Anmelderin: Hydrogenics Corp.; Veröffentlichungstag: 30. Oktober 2003), die als eine "continuation-in-part"-Anmeldung aus der US 6 875 535 B2 hervorgegangen ist, wird ein Brennstoffzellensystem und eine als eine Platte ausgebildete Einheit zur Versorgung der Brennstoffzellen, genauer des sogenannten "manifold 10" beschrieben. Wie in den Figuren zu sehen ist, ist an dieser Platte ein Befeuchter montiert. Der Befeuchter dient zur Aufbereitung des Brennstoff- bzw. Anodengases. Außerdem ist an der "manifold 10" ein sog. "enthalpy wheel 80" vorhanden, das dazu dienen soll, den Kathodengasstrom vor der Zuleitung zu den Brennstoffzellen zu erwärmen und zu befeuchten. Um auf zusätzliche Dichtungen verzichten zu können, wird in der WO 03/090 300 A2 vorgeschlagen, dass die "manifold plate" selbst die Stapel-Endplatte bilden solle.

Ein etwas anders gestalteter Befeuchter, der die Gestalt eines Plattenbefeuchters haben soll, wird in der DE 10 2015 122 144 A1 (Anmelderin: Volkswagen AG; Offenlegungstag: 22.06.2017) beschrieben. In einem solchen Befeuchter sind spezielle Abscheiderelemente vorgesehen, um Wasser aus einem der Medienströme separieren zu können.

In der WO 03/007 414 A2 (Anmelderin: Hydrogenics Corp.; Veröffentlichungstag: 23. Januar 2003) wird eine Anordnung vorgestellt, bei der das sogenannte "manifold 70" aus drei Platten aufgebaut sein soll. An einer Frontplatte als Teil des "manifold 70" sollen zwei Befeuchter angeordnet sein. Eine mittlere Platte enthält Verbindungskanäle. Eine rückseitige Platte dient dem Anschluss an den Brennstoffzellenstack. Als "ports" sind in dieser rückseitigen Platte sechs Durchgangslöcher vorgesehen, die zur Verbindung mit drei Einlässen und drei Auslässen des Brennstoffzellenstacks für Gase bzw. ein Kühlmittel ausgebildet sein sollen.

In der Patentanmeldung US 2010/0 068 600 A1 (Anmelderin: Honda Motor Co., Ltd.; Veröffentlichungstag: 18. März 2010) wird eine mit einem Befeuchter für das sauerstoffenthaltende Gas bzw. Luft ausgestattete, blockähnliche Anordnung für eine Versorgung eines an den Block angeschlossenen Brennstoffzellenstack graphisch dargestellt. Die gleichen Bilder sind auch in der JP 5 249 177 B2 (Anmelderin: Honda Motor Co., Ltd.; Veröffentlichungstag: 31. Juli 2013) abgedruckt worden.

Generalisierend kann die Behauptung aufgestellt werden, je mehr Ports auszurichten sind, desto präziser sind der Brennstoffzellenstack und sein "manifold" zu fertigen. Werden "manifold" und Brennstoffzellenstapel zudem noch seitlich nebeneinander arrangiert, sind zusätzlich Ausrichtungsschwierigkeiten zu bedenken.

Die beiden japanischen Patentanmeldungen JP 2001/216 983 A, die die Basis für den Oberbegriff des Anspruchs 1 bildet, (Anmelderin: Honda Motor Co. Ltd.; Offenlegungstag: 10. August 2001) sowie JP 2007/141 716 A (Anmelderin: Honda Motor Co. Ltd.; Veröffentlichungstag: 07. Juni 2007) schlagen Anordnungen vor, bei denen ein Befeuchter als Teil eines an dem Brennstoffzellenstack anschließbaren Blocks, sozusagen seitlich daran angeschlossen, zu gestalten ist.

Die US 6 541 148 B1 (Anmelderin: Plug Power Inc.; Veröffentlichungstag: 01. April 2003) beschreibt einen Versorgungsblock für Brennstoffzellen. Der Versorgungsblock sei mit einem Scharnier zu versehen, sodass der Block von einem Brennstoffzellenstack weggeklappt werden kann. Ein in der Gasverteilplatte angeordneter Separator soll aus einem der Gasflüsse Wasser extrahieren, z. B. mittels Kondensation, wobei das Wasser anschließend in einem Tank gesammelt werden soll. In einem solchen Block seien Messeinrichtungen vorzuhalten, über die ein Druck und/oder eine Temperatur der Durchflüsse überwacht werden können. Die US 6 541 148 B1 dürfte sich aber ausschließlich mit einem Separator beschäftigen, der Wasser aus den Gasen zu separieren hat.

In der DE 10 2004 003 670 B4 (Inhaberin: MTU Friedrichshafen GmbH; Veröffentlichungstag: 14. Februar 2008) wird im Zusammenhang mit der beschriebenen Brennstoffzellenanordnung ein Verteilermodul behandelt, an dem mehrere Brennstoffzellenmodule zusammengeschaltet werden können. Das Verteilermodul soll als Gussteil interne Kanäle aufweisen und mit Anschlussstellen ausgestattet sein. Dabei sollen die internen Kanäle in Längsrichtung des Verteilermoduls veränderliche Querschnitte haben, um eine Druckanpassung für die in Längsrichtung aufgereihten Module bereitzustellen. Ein Unterscheidungskriterium für die Kanäle sind die Medien, die die Kanäle transportieren sollen; es gibt nämlich einen Kanal für Kühlwasser, einen Kanal für Brenngas und einen Kanal für ein Oxidationsgas. Durch eine besondere Führung der Kanäle soll es möglich sein, die Temperatur in den Kanälen für Brenngas und/oder Oxidationsgas nicht unter die Kondensationstemperatur der befeuchteten Gase abfallen zu lassen. Als besondere Kanalformen werden Kanäle mit Verengungen, Rippen oder Blenden vorgestellt, die zur Verwirbelung der Gase gedacht sind.

Gemäß der US 6 875 535 B2 (Inhaberin: Hydrogenics Corporation; Veröffentlichungstag: 05.04.2005) soll eine Armatur für ein Brennstoffzellensystem mehrere Anschlüsse und mehrere Leitungen für eine Brennstoffzellenversorgung aufweisen. Hierbei schlägt das Dokument vor, Durchleitungen und Anschlüsse mit Einrichtungen zur Überwachung von Fluidzuständen auszustatten. Die Armatur könne durch einen Formguss, z. B. aus einem Polymer, hergestellt worden sein. Zur Armatur können nicht nur die Überwachungsgeräte, sondern auch Geräte und/oder Komponenten für eine Enthalpieanpassung gehören. Auf diese Weise sei der Systemintegrationsgrad, indem möglichst viele Komponenten in der Armatur integriert werden, steigerbar. Der Versorgungsblock wird auf diese Weise aber sicherlich erheblich massiver.

Die CN 112 913 062 A (Anmelderin: FCP Fuel CellPowertrain GmbH; Veröffentlichungstag: 04.06.2021) beschreibt eine integrierende Platte, die zur Halterung von einem Paar Brennstoffzellenmodulen und von einem Luftmodul gestaltet sein soll und die mithilfe einer Positioniervorrichtung auf der Platte eine symmetrische Positionierung des Luftmoduls bezüglich des Brennstoffzellenmodulpaars ermöglichen soll. Die Platte soll außerdem mit einem Medien- und mit einem elektrischen Interface ausgestattet sein, wobei das Interface eine Verbindung des Brennstoffzellenmoduls und des Luftmoduls ermöglichen soll. Damit soll Druckluft über das Luftmodul dem Brennstoffzellenmodul zugeführt und verbrauchte Luft bzw. Abgas von dem Brennstoffzellenmodul abgeführt werden können. Das Interface kann außerdem einen Befeuchter umfassen, über den Duckluft aus dem Druckluftmodul zum Brennstoffzellenmodul geleitet werden kann. Mittels weiterer Leitungen soll verbrauchte, feuchte Luft aus dem Brennstoffzellenmodul dem Befeuchter zugeführt und überschüssige Luft von dem Befeuchter weggeleitet werden können. Mittels Bypassleitungen soll es möglich sein, Brennstoffzellenmodule für deren Deaktivierung bei der Versorgung zu umgehen. Des Weiteren werden in dem chinesischen Schutzrecht Ausstattungen zur Brennstoffzufuhr, zur Kühlung und zur Wandlung einer elektrischen Spannung beschrieben. Während die CN 112 913 062 A also die Idee in den Vordergrund rückt, möglichst viele Peripheriekomponenten einer Brennstoffzelle in einer Platte zu integrieren, wird in Bezug auf die Art der Betriebsweise an der üblichen Volumenstromsteuerung der Medien festgehalten.

Die zuvor genannten Druckschriften gelten mit ihrer Benennung als vollumfänglich in vorliegende Erfindungsbeschreibung inkorporiert. Hierdurch soll vermieden werden, nicht mehr erneut und wiederholt allgemein bekannte Zusammenhänge zwischen Versorgungsblock bzw. Versorgungsverteiler, Medien und adaptierbaren Brennstoffzellenstack erörtern zu müssen, sondern durch Verweis auf die Druckschriften als ebenfalls definiert für vorliegende Erfindung ansehen zu dürfen.

### Aufgabenstellung

Unterschiedliche Anforderungen an Energieversorgungssysteme, welche Versorgungsprofile diese erfüllen können sollen (Vorgaben bezüglich eines maximalen elektrischen Stroms, bezüglich einer maximalen Spannung, bezüglich einer Anzahl, einer Häufigkeit und von Dauern von Transienten, bezüglich thermisch zu liefernder Energie usw.), bedingen unterschiedlich ausgelegte Brennstoffzellensysteme mit einer unterschiedlichen Anzahl an einzelnen Brennstoffzellen und damit unterschiedlicher Leistungsfähigkeit. Hieraus bedingt sich auch die Anpassung der Größe des Befeuchters für den Brennstoffzellenstack, sofern der Brennstoffzellenstack darauf angewiesen ist, ein befeuchtetes Gas aufzunehmen.

Bei Systementwicklungen und Systemauslegungen beschäftigen sich Konstrukteure von Brennstoffzellensystemen daher immer wieder mit der Fragestellung, wie ein dem Grunde nach fertig entworfenes System zu skalieren ist. Bei kleineren Systemstückzahlen werden also erhebliche Entwicklungsleistungen und damit Entwicklungsaufwendungen darin investiert, dem Grunde nach bekannte Systemkonfigurationen auf den konkreten Anwendungsfall anzupassen. Diese intellektuell nicht besonders herausfordernde Auslegungstätigkeit, für die Ingenieure eingespannt werden, wobei die Aufgabenstellung aber den Anwendungsingenieur eigentlich unterfordert, müsste standardisiert werden können, ohne dass jedes Mal wieder jede einzelne Komponente neu entworfen und ausgelegt werden müsste.

Es besteht also der Wunsch, Brennstoffzellenkomponenten zur Verfügung zu haben, die als sogenannte "off-the-shelf"-Komponenten in größeren Stückzahlen gefertigt werden können, obwohl sie in Kleinstserien ihren Einsatz finden sollen.

### Erfindungsbeschreibung

Die erfindungsgemäße Aufgabe wird durch eine Stackanschlusseinheit mit einem Stackanschlussblock nach Anspruch 1 gelöst,
ein Brennstoffzellensystem wird in Anspruch 13 vorgestellt und eine geeignete Design- bzw. Entwurfsvorschrift lässt sich Anspruch 14 entnehmen. Vorteilhafte Weiterbildungen lassen sich den abhängigen Ansprüchen entnehmen.

Wie aus der Beschreibungseinleitung schon angeklungen, bestimmt die Anzahl der Brennstoffzellen in einem Brennstoffzellenstack die prinzipielle Leistungsfähigkeit des Brennstoffzellenstacks (auch Brennstoffzellenstapel genannt). Ein weiterer wesentlicher Einflussfaktor auf die Leistungsfähigkeit des Brennstoffzellenstacks ist die Medienzusammensetzung am Einlass des Brennstoffzellenstacks, da eine Protonenleitfähigkeit und damit ein Zellwiderstand abhängig ist vom Wassergehalt der Membran, weshalb es vorteilhaft ist, den Brennstoffzellenstack mit mindestens einem befeuchteten Medium zu versorgen.

Ein vorteilhaftes Bauteilarrangement eines Brennstoffzellenstapels (auch Brennstoffzellenstack genannt) wird häufig mit einer ersten Platte und einer letzten Platte geschaffen, die den Brennstoffzellenstack abschließen. Diese Endplatten können sich von den üblichen Bipolarplatten eines Brennstoffzellenstacks unterscheiden. Die Endplatten werden häufig, wie eingangs gesagt, dafür benötigt, die einzelnen Brennstoffzellen zu einem Brennstoffzellenstack zu verspannen. Brennstoffzellenstacks können mit aktiver Kühlung durch eine Flüssigkeit wie einem Kühlwasser oder wie einem Gemisch aus Wasser und Ethylenglykol ausgestattet sein. Brennstoffzellenstacks für eine kleinere Leistung, wie z. B. für weniger als 1 kW, können aber auch nur luftgekühlt sein. Ist der Stack luftgekühlt, so übernehmen die Endplatten lediglich die Weiterleitung des Anodengases und je nach Ausführung auch des Kathodengases. Je nach Kühlung des Brennstoffzellenstacks ist die Verteilplatte entweder nur eine Gasverteilplatte oder eine Medienverteilplatte. Solche Platten können daher als Stapelendplatten, als Medienverteilplatten oder auch als Gasverteilplatten bezeichnet werden.

Häufig haben die Platten außerdem die Funktion, als Montageplatte (bzw. als Flanschplatte) zur Verfügung zu stehen, damit an einer solchen Platte eine Medienweiterführung angeschlossen werden kann. Wie aus der Zusammenstellung ähnlicher Begriffe ersichtlich ist, wird in der Fachwelt nicht wirklich konsequent eine schlüssige Differenzierung durchgeführt, sondern die Begriffe werden untereinander austauschend verwendet. Mit anderen Worten, die sogenannten Endplatten einer stapelförmigen Brennstoffzellenanordnung mit einer oder mehreren Zellen, von denen jede eine Brennstoffzelle ist, werden durch viele Begriffe und Namen betitelt.

Manche solcher Endplatten wirken auch schon blockartig.

Ein, ggf. weiterer, Block, der in dem Brennstoffzellensystem vorhanden sein kann, ist der Stackanschlussblock. In einer ersten Art der Ausgestaltung kann der Stackanschlussblock mit einer der Endplatten identisch sein. Natürlich ist es auch möglich, den Stackanschlussblock zusätzlich zu einer Endplatte an einem Brennstoffzellenstack zu integrieren oder zu befestigen. In dem zweiten Fall schließt eine Endplatte einen Brennstoffzellenstack ab, der Stackanschlussblock ist zusätzlich vorhanden.

Als ein erstes generelles Resümee darf festgehalten werden, dass der Stackanschlussblock verschiedene medienführende Verbindungen in seinem Inneren aufweisen kann. Solche Verbindungen können in den Stackanschlussblock eingebettet sein, z. B. in Gestalt von Kanälen, die durch Wände des Stackanschlussblocks gebildet werden. Einzelne Kanäle können bestimmte Aufgaben bzw. Funktionen übernehmen, z. B. ein Medium oder einen Reaktanden zu oder von dem Brennstoffzellenstack leiten - in einem solchen Fall kann auch von einem Zuleitungskanal (in Bezug auf den Brennstoffzellenstack) respektive von einem Ableitungskanal (in Bezug auf den Brennstoffzellenstack) gesprochen werden. Die Kanäle übernehmen die Aufgabe, Leitungen zumindest in einem Teil des Inneren des Stackanschlussblocks zu bilden. Besonders vorteilhaft ist dabei eine geschlossene Kanalstruktur, die vollständig im Inneren des Stackanschlussblocks durch den Stackanschlussblock gebildet ist.

Neben den Kanälen, die vorzugsweise eingebettet in Komponenten des Brennstoffzellensystems verlaufen, können Leitungen Verbindungen zur Medienleitung ausbilden. Zwischen den Komponenten können somit auch Leitungen angeordnet sein. Besonders vorteilhaft ist es, wenn durch die einzelne Komponente geschützte Kanäle zur Medienführung genutzt werden.

In die Kanalstruktur können von außen Komponenten eingebracht bzw. angebracht werden. So können Sensoren (z. B. Temperatursensoren, Drucksensoren, Feuchtesensoren etc.) oder Aktuatoren in den Stackanschlussblock eingebracht werden. Die Komponenten verschließen dann die Kanalstruktur und dichten diese ab.

Eine (weitere bzw. andere) Komponente, die für jeden einzelnen Brennstoffzellenstack zusätzlich vorhanden sein sollte, ist ein Befeuchter (sofern der Brennstoffzellenstack oder die Brennstoffzellenstacks als Teil des Energieversorgungsystems von einem solchen Typ ist/sind, dass Wasser, Wasserstoffbrücken oder ähnliche Transportmechanismen einem Protonen- oder Medien-Transport durch das Diaphragma, wie z. B. durch eine Polymerelektrolytmembran, zuträglich sind). In einer Ausgestaltung ist ein Befeuchter pro Brennstoffzellenstack als Peripheriekomponente dem jeweiligen Brennstoffzellenstack (neben weiteren Komponenten) beigestellt. Eine Vereinheitlichung und damit Stückzahlsteigerung kann somit dadurch erzielt werden, dass eine Standardisierung, insbesondere in Bezug auf welche Befeuchtergröße zwischen verschiedenen Befeuchtergrößen auswählbar ist, und eine gewisse Unabhängigkeit von dem konkreten Anwendungsfall bei den Befeuchtern für Brennstoffzellenstacks herbeiführbar ist.

Wird ein Brennstoffzellensystem dimensioniert, so ist die Dimensionierung des Befeuchters von dem Brennstoffzellenstack und dem einen gewählten bzw. dem einen vorherrschenden Betriebspunkt (bei einem eher statisch betriebenem Stapel bzw. Stack), alternativ von den mehreren gewählten bzw. überwiegend angesteuerten Betriebspunkten (bei einem eher dynamisch betriebenen Stapel bzw. Stack) abhängig. In die Größe bzw. in eine benötigte Befeuchtungsleistung, den ein Befeuchter liefern können soll, gehen die Größe des Brennstoffzellenstacks und damit die Menge an benötigter Luft ein. In die Größe bzw. in die Befeuchtungsleistung bzw. an die Erwartung der Leistungsfähigkeit des Befeuchters gehen aber auch die vorgesehenen Betriebsweisen bzw. der eine Hauptbetriebspunkt, ggf. auch die mehreren Hauptbetriebspunkte, des Brennstoffzellenstacks ein. So ist der Widerstand des Brennstoffzellenstacks auch davon abhängig, ob die Membranen eines Stacks, der aus mehreren Polymerelektrolytmembranbrennstoffzellen aufgebaut ist, (eher) trocken oder feuchtigkeitsgesättigt betrieben werden.

Am Rande bemerkt sei, dass die bisherige Beschreibung von einem Brennstoffzellensystem geredet hat, ohne sämtliche Komponenten des Brennstoffzellensystems vorzustellen. Wie sich aus dem Stand der Technik ergibt, gehören zu einem gängigen Brennstoffzellensystem zahlreiche weitere Komponenten, Bauteile und Baugruppen, um das Brennstoffzellensystem zu einem vollständigen System zu machen.

Gängige Brennstoffzellensysteme haben zumindest eine Regelungselektronik. Außerdem haben viele Brennstoffzellensysteme eine Leistungselektronik, einen Luftkompressor und entsprechende Luftzuleitungen.

Es sei noch einmal hervorgehoben, welche Feuchtigkeit ein Brennstoffzellenstack am Lufteingang erwartet, ist abhängig von einer ganzen Reihe von Parametern und Einstellungen des Brennstoffzellenstacks und des Brennstoffzellensystems, z. B. - neben weiteren - von:
- einer Zellenzahl des Brennstoffzellenstacks,
- von einer Zellenfläche jeder der Zellen eines Brennstoffzellenstacks,
- von einer Stromdichte des zu betreibenden Brennstoffzellenstacks sowie
- von einer Stöchiometrie des Mediums, das in den Brennstoffzellenstack eingeleitet wird.

Welche Wassermenge und welchen Befeuchtungsgrad ein Befeuchter liefern kann, hängt von vielen Parametern ab, wie zum Beispiel von einem lokalen Feuchtegradienten zwischen feuchtem und trockenem Medium, von einer Temperatur, von einem Druck, von einer Dicke der Membran und von einer Größe einer Austauschfläche.

Die Leistungsfähigkeit eines Brennstoffzellenstacks ergibt sich z. B. aus dem elektrischen Strom und aus der Betriebsspannung, die sich in dem Brennstoffzellenstack bei dem entsprechenden Strom einstellt bzw. den die Zellen liefern können.

Der Stackanschlussblock ist dafür bestimmt, an einem Brennstoffzellenstack, z. B. an dessen Endplatten, angeschlossen zu werden, der mit einem befeuchteten Medium zu betreiben ist. So ein befeuchtetes Medium kann z. B. ein mit Wasserdampf beaufschlagter Luftstrom in den Brennstoffzellenstack hinein sein. Auf einer Seite der Diaphragmen wird wasserdampfbeaufschlagte Luft durch den Brennstoffzellenstack hindurchgeleitet. Dieses Medium muss einen gewissen Befeuchtungsgrad am Stackeingang einhalten. Zur Vermeidung externer Leckagen der Medien können die Übergänge des Stackanschlussblocks zu der weiterführenden Komponente, z. B. der Endplatte, Dichtungen, insbesondere eingelegte Dichtungen, aufweisen.

Je nach Betriebsweise des Brennstoffzellenstacks ist es aber auch denkbar, dass nicht nur eines der Medien befeuchtet in den Brennstoffzellenstack eingeleitet wird, sondern beide im Brennstoffzellenstack reagierende und so einen elektrischen Strom liefernde Medien befeuchtet in den Brennstoffzellenstack eingebracht werden.

Ein Brennstoffzellenstack ist eine gestapelte Anordnung mehrerer Brennstoffzellen, wobei jede Brennstoffzelle eine Elektrolytmembran besitzt. Wasser, das in der Elektrolytmembran einlagerbar ist, steuert die Protonenleitfähigkeit der Elektrolytmembran. Polymerelektrolytmembranen, die durch Wassereinlagerungen unterschiedliche Protonenleitfähigkeiten, d. h. in Abhängigkeit zum eingelagerten Wasser eine Protonenleitfähigkeitsänderung aufweisen, sind z. B. auf perfluorierten Sulfonsäuregruppen basierende Polymerelektrolytmembranen. Bei solchen Brennstoffzellentypen hat der Wasserdampfpartialdruck in zumindest dem einen Medium Luft einen Einfluss auf den inneren Widerstand jeder der mit Luft versorgten Brennstoffzellen. Daher beeinflusst die Umsetzgenauigkeit des vorgeschalteten Befeuchters die Leistungsfähigkeit und den elektrischen Wirkungsgrad des Brennstoffzellenstacks (insgesamt).

Über den Stackanschlussblock können mehrere Medien weitergeleitet sein. Der Stackanschlussblock kann z. B. einen Stackanschluss für einen Brennstoff aufweisen. Der Stackanschlussblock kann z. B. einen Stackanschluss für einen Reaktionspartner aufweisen. Der Stackanschlussblock kann darüber hinaus einen Stackanschluss für ein Kühlmedium aufweisen. Häufig wird eine Polymerelektrolytmembran mit Wasserstoff als Brennstoff und mit Luft als Reaktionspartner des Wasserstoffs betrieben. Von den Stackanschlüssen (strömungstechnisch startend), z. B. von den drei Stackanschlüssen Kühlmedium, Luft und Wasserstoff aus betrachtet, kann der Stackanschlussblock als verbindungsbildende Kanalplatte mit Verbindungen zum Brennstoffzellenstack ausgeführt sein.

Innerhalb des Stackanschlussblocks gibt es einen Hohlraum, der sozusagen im Inneren des Stackanschlussblocks liegt und als Bauraum bzw. Einbauraum für den Befeuchter genutzt werden kann. Der Hohlraum ist in dem Stackanschlussblock integriert. Der Stackanschlussblock umhüllt den in ihm vorhandenen Hohlraum. Der Hohlraum ist ein integraler Bestandteil des Stackanschlussblocks. Besonders vorteilhaft ist es, wenn der Hohlraum als ein vollständig einen Befeuchter aufnehmender Raum konzipiert bzw. auf maximale Abmessungen abgestimmter Raum ist. Die maximalen Abmessungen ergeben sich aus der größten zu erwartenden Leistung des Brennstoffzellenstacks oder der maximalen Anzahl der Brennstoffzellen des Brennstoffzellenstacks.

Der Hohlraum wird für die Integration des Befeuchters genutzt, vor allem wenn der Stackanschlussblock Teil eines Brennstoffzellensystems ist. Hierbei wird der Befeuchter, z. B. in Gestalt eines Plattenbefeuchters, so dimensioniert, dass seine Leistungsfähigkeit auf eine Leistungsfähigkeit des angeschlossenen Brennstoffzellenstacks angepasst ist (Wasserumsatz pro Liter in Bezug zum elektrischen Strom des Brennstoffzellensystems). Der Befeuchter ist für eine bestimmte Befeuchtungsleistung gestaltet. Wasserdampfpartialdruck ist für einen optimalen Betriebspunkt des über den Stackanschlussblock versorgten Brennstoffzellenstacks ausgelegt.

In dem Stackanschlussblock ist nicht nur ein Zuleitungskanal geführt, sondern auch wenigstens ein Ableitungskanal. Es kann auch gesagt werden, der Stackanschlussblock hat wenigstens einen Zuleitungskanal. Es kann auch gesagt werden, der Stackanschlussblock hat wenigstens einen Ableitungskanal. Neben der Aufnahme des Befeuchters im Inneren des Stackanschlussblocks ist der Stackanschlussblock für wenigstens einen Zuleitungskanal und für wenigstens einen Ableitungskanal, jeweils im Inneren des Stackanschlussblocks, gestaltet. Der Ableitungskanal ist für einen Anschluss an dem Stackanschluss ausgebildet, an dem der Reaktionspartner zur Verfügung stehen soll.

So ist es möglich, trotz großer Bandbreite zusammenbaubarer, d. h. zu gestaltender Brennstoffzellenstacks, z. B. mit mehr oder weniger Brennstoffzellen, immer wieder den gleichen Stackanschlussblock zu verwenden. Der Stackanschlussblock muss nicht mehr auf die tatsächliche Dimensionierung, Auslegung und Leistungsklasse des Brennstoffzellenstacks individuell adaptiert werden, wenn der den Befeuchter aufnehmende Hohlraum im Stackanschlussblock so groß ist, dass unterschiedlich große, unterschiedlich breite und/oder unterschiedlich lange Befeuchter in dem Stackanschlussblock eingelegt bzw. eingebaut werden können.

Der Stackanschlussblock ist dafür vorgesehen, Teil eines Brennstoffzellensystems mit einem Brennstoffzellenstack zu werden. Ein Brennstoffzellenstack kann so gestaltet sein, dass er entweder wenigstens eine Medienanschlussplatte oder wenigstens eine Endplatte aufweist. Eine solche Medienanschlussplatte oder eine solche Brennstoffzellenstackendplatte kann mit wenigstens drei Anschlüssen ausgestattet sein. Vorteilhaft ist es, wenn die wenigstens drei Anschlüsse an einer ersten Seite der Medienanschlussplatte oder der Brennstoffzellenstackendplatte vorhanden sind.

Vorteilhafterweise ist auf einer zweiten Seite der Medienanschlussplatte oder der Brennstoffzellenstackendplatte eine in wenigstens einem Stapel arrangierte Zellenanordnung vorhanden.

Der zuvor ausführlicher dargestellte Stackanschlussblock kann Teil des Brennstoffzellensystems sein. Der Stackanschlussblock ist dafür vorgesehen, in ein Brennstoffzellensystem eingebaut zu werden, um so Teil des Brennstoffzellensystems zu sein.

Wenigstens drei Stackanschlüsse des Stackanschlussblocks können in einer mediendichten Verbindung mit der Medienanschlussplatte des Brennstoffzellenstacks arrangiert sein.

Hierbei ist vorteilhafterweise der für den Betrieb des Brennstoffzellenstacks notwendige Befeuchter ein integraler Teil des Stackanschlussblocks. Nimmt jemand den Stackanschlussblock in seine Hand, so trägt er auch dadurch den Befeuchter.

Ein und der gleiche Stackanschlussblock kann mehrfach verwendet werden bzw. der Stackanschlussblock kann als Gleichteil in unterschiedlichen Brennstoffzellensystemen aufgehen, wenn der Stackanschlussblock entsprechend der zuvor dargelegten besonderen Aspekte gestaltet ist. Der Stackanschlussblock ist besonders gut einsetzbar bei Polymerelektrolytmembranbrennstoffzellenstapeln, deren Betriebstemperatur üblicherweise unterhalb von 100 Grad Celsius bleibt.

Der Stackanschlussblock hat ein Leervolumen in seinem Inneren, das durch den Befeuchter (zumindest teilweise) auszufüllen ist, bevor der Stackanschlussblock Teil des Brennstoffzellensystems wird. Der Befeuchter selbst ist durch seine Leistungsfähigkeit und somit durch seine Abmessungen, wie Länge, Breite und Höhe, konfigurierbar. In Abhängigkeit von dem zu betreibenden Brennstoffzellenstack wird die Größe des Befeuchters ausgelegt.

Hierbei ist das Volumen vorteilhafterweise so groß, dass ein maximal sich erstreckender Befeuchter immer noch in den Stackanschlussblock aufgenommen werden kann. Der Befeuchter ist für eine bestimmte Obergrenze des Brennstoffzellenstapels dimensioniert. Wird ein Brennstoffzellensystem aufgebaut, das eine geringere Leistung erbringen muss, so kann trotzdem der gleiche Stackanschlussblock verwendet werden und lediglich der Befeuchter im Inneren des Stackanschlussblocks wird auf den Brennstoffzellenstack abgestimmt (kleiner) dimensioniert.

Wie sich aus den weiter oben stehenden Ausführungen ergibt, kann immer wieder der gleiche Stackanschlussblock verwendet werden, obwohl das aufzubauende Brennstoffzellensystem jeweils individuell bezüglich seiner Parameter ausgelegt ist. Der Stackanschlussblock ist in unterschiedlichen Anwendungsfällen verwendbar; es kann auch gesagt werden, der Stackanschlussblock ist mehrfach verwendbar. Eventuell ist der Befeuchter im Inneren des Stackanschlussblocks anzupassen.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Es kann auch gesagt werden, dass der Stackanschlussblock für die Aufnahme eines Befeuchters in seinem Hohlraum (auch Bauraum genannt) derart dimensioniert ist, dass der Hohlraum solch ein Volumen aufweist, dass ein Befeuchter einbaubar ist, der die Luftmenge für einen maximal dimensionierten Brennstoffzellenstack ausreichend befeuchten kann. Idealerweise ist der Stackanschlussblock aufgrund seines Befeuchters auf die Stackgröße über die maximal zu erzielende Befeuchtungsleistung abgestimmt.

Sollte ein kleinerer (Brennstoffzellen-)Stack als der maximal mögliche Stack an den Stackanschlussblock angeschlossen werden, wird der kleinere Befeuchter (im Vergleich mit dem als maximal vorgesehenen Befeuchter) zwar ebenfalls in den Hohlraum in dem Stackanschlussblock eingesetzt, das verbleibende Freivolumen kann aber vorteilhafterweise durch Füllkörper (zumindest durch einen Füllkörper) ausgefüllt werden. Durch die Verwendung von Füllkörpern, also unter Nutzung der Füllkörper wird der nicht vom Befeuchter ausgefüllte Hohlraum gefüllt, sodass der Befeuchter sicher und fixiert in dem Stackanschlussblock abgedichtet angeordnet ist, insbesondere in dem bzw. Bauraum verharren kann und die Gasströme gegeneinander abgedichtet sind.

Die Gestaltung des Stackanschlussblocks und des gesamten Brennstoffzellenstacksystems ist modular realisiert. Dank der Modularität kann einem Monteur eines Brennstoffzellensystems eine Konkordanztabelle zur Montage und Zusammenstellung des Brennstoffzellensystems ausgehändigt werden. Der Monteur kann dank der Konkordanztabelle selbständig zusammenstellen, welchen Brennstoffzellenstack er an dem Stackanschlussblock anzuschließen hat, wobei die Größe des Befeuchters sich auch aus der Konkordanztabelle ergibt. Soll z. B. ein Brennstoffzellenstack mit 200 Zellen in einer Leistungsklasse von 60 kW in einem Brennstoffzellensystem verbaut werden, so kann ein Befeuchter mit 70 Befeuchterzellen in dem Stackanschlussblock integriert werden. Ist der Stackanschlussblock für die Aufnahme eines Befeuchters mit 100 Befeuchterzellen gestaltet, so wird der aufgrund der geringeren Zellenanzahl kleinere Befeuchter von Füllkörpern im Hohlraum im Stackanschlussblock eingespannt. In einer ähnlichen Ausführungsform ist es auch vorstellbar, dass kein Füllkörper zur Einspannung verwendet wird, sondern der übrige Raum, der sich aufgrund der geringeren Anzahl an Befeuchterzellen ergibt, durch einen Schaum ausgespritzt bzw. ausgefüllt wird. Der Schaum ist in dem Fall der Füllkörper. Besonders günstig ist es, wenn der Füllkörper oder der Schaum zugleich eine dichtende Aufgabe übernehmen können, also dicht sind. Eine Kleinserienfertigung mit immer wieder den gleichen Bauteilen ist an einem Montageplatz umsetzbar.

Vorteilhafterweise ist der Befeuchter an wenigstens drei Seiten, idealerweise an allen Seiten durch den Stackanschlussblock eingehüllt. Hierdurch ist es möglich, den Stackanschlussblock als thermische Dämmung des Befeuchters vorzusehen. Außerdem kann der Stackanschlussblock einen mechanischen Schutz für den Befeuchter darstellen. Der Stackanschlussblock schirmt den Befeuchter vor äußeren Temperaturen ab. Der Umsatz des Wassers im Befeuchter hängt u. a. von der Betriebstemperatur des Befeuchters ab. Ein thermisch isoliert bzw. gedämmt angeordneter Befeuchter liefert einen Wasserdampfpartialdruck bzw. Feuchte in einem engeren Parameterband.

Der Stackanschlussblock hat vorteilhafterweise vier luftführende Kanäle. Die Kanäle sind (zumindest teilweise) durch ein Inneres des Stackanschlussblocks geführt. Der Befeuchter im Inneren des Stackanschlussblocks ist an jenen vier Kanälen angeschlossen.

Wird die Strömungsrichtung bzw. die Funktionsangabe der einzelnen Kanäle näher untersucht, so sind im Falle von vier luftführenden Kanälen zwei der vier Kanäle Zuleitungskanäle. Zwei der vier Kanäle sind Ableitungskanäle. Zuleitungskanäle leiten das Medium Luft zu dem Befeuchter. Die Ableitungskanäle leiten das Medium Luft von dem Befeuchter weg.

Neben den zuvor bezeichneten Zuleitungskanälen und Ableitungskanälen kann im Inneren des Stackanschlussblocks ein Bypasskanal für das Medium, z. B: für die Luft, vorhanden sein. Somit gibt es einen weiteren Kanal, den Bypasskanal. Vorzugsweise ist der Bypasskanal mit einem von dem Befeuchter kommenden Kanal im Bereich eines Medienversorgungsports des Stackanschlussblocks zusammengeschlossen. Dieser Medienversorgungsport ist dazu bestimmt, dass der Brennstoffzellenstack daran angeschlossen wird.

In einer günstigen Ausgestaltung ist im Inneren des Stackanschlussblocks ein Ventil integriert. Die Steuerung des Brennstoffzellensystems ist einfacher zu gestalten, wenn ein regelbares Ventil Teil des Stackanschlussblocks ist.

Andere Typen von Ventilen, die in dem Stackanschlussblock integriert sein können, sind solche Ventile wie
- die Purgeventile,
- ein Wasserabscheiderventil,
- ein Sicherheitsventil,
- ein Druckregelventil,
- ein Überdruckventil für den Stackeingangsdruck oder
- ein Überdruckventil für einen Mitteldruck.

Ein Ventil steckt mit seinem hydraulischen oder pneumatischen Teil in einem Kanal des Stackanschlussblocks. Der elektrische Teil des Ventils ist von außen elektrisch zugänglich.

Mit anderen Worten, in dem Stackanschlussblock kann ein Ventil oder es können mehrere Ventile integriert sein. Ein Medienstrom lässt sich über ein regelbares Ventil steuern. Z. B. kann ein Proportionaldurchflussventil (ein proportional arbeitendes Stromregelventil) eines der Medien "Brenngas", "Reaktionspartner" und/oder "Kühlmedium" wie z. B. Kühlwasser mengenmäßig begrenzen. Zu anderen Zeitpunkten kann das Proportional-(Fluss)-Regelventil einen Durchfluss freigeben. Brennstoffzellenstacks können mit einem oder mehreren Purgeventilen ausgestattet werden.

Eine geeignete Stelle für ein Purgeventil wird z. B. durch eine eigene Stichleitung im Stackanschlussblock geschaffen, die eine Verbindung zur Zuluft (bzw. zum Lufteinlass) herstellen kann. Durch diese Verbindung kann das wasserstoffhaltige, aber abgereicherte Brenngas des Brennstoffzellenstacks austreten. Ein Purgeventil kann mit seinem Ausgang zu einem Lufteinlass an einer Eingangsseite des Befeuchters geführt sein. Ein Purgeventil kann mit seinem Ausgang zu einem Luftausgang an einer Ausgangsseite des Befeuchters geführt sein.

Ein weiteres Ventil, das als ein einbaubares Ventil in den Stackanschlussblock Platz in einem Stackanschlussblock finden kann, ist ein Wasserabscheiderventil. Der Stackanschlussblock kann Sicherheitsfunktionen übernehmen, indem ein Sicherheitsventil in dem Stackanschlussblock eingebaut ist, z. B. das bei Überdrücken öffnet und so Schäden an dem strömungsmäßig nachgelagerten Brennstoffzellenstack verhindert. Mithilfe von einem oder mehreren Druckregelventilen kann ein eingangsseitig des Stackanschlussblocks vorhandener Überdruck soweit reduziert werden, dass das durch das Druckregelventil geleitete Medium auf ein Druckniveau für den Brennstoffzellenstack reduziert worden ist. Eine Druckreduzierung kann z. B. von 5 bar (rel.) auf 2 bar (rel.) reduziert werden. Auf diese Weise kann das als Überdruckventil arbeitende Druckregelventil eine erste Sicherheitseinrichtung für einen Stackeingangsdruck darstellen.

Ein Überdruckventil kann als Sicherheitseinrichtung für einen Mitteldruck genutzt werden. Ein Mitteldruck ist ein Druck, der als ein Versorgungsdruck zur Verfügung steht. Zum Beispiel wird der Brennstoff bzw. der Reaktionspartner Wasserstoff üblicherweise durch ein Tanksystem zur Verfügung gestellt. Der Druck, den der Reaktionspartner durch die Zurverfügungstellung aus einem Tank hat, wird durch ein Druckreduzier- und Stabilisierungssystem auf einen Mitteldruck reduziert. Der Mitteldruck steht somit an dem Stackanschlussblock, z. B. als Stackeingangsdruck, zur Verfügung. Der Mitteldruck kann in einer Ausgestaltung auch als Brennstoffeingangsdruck bezeichnet werden. Der Druck des Reaktionsmittels (im Sinne eines "Mitteldrucks") bzw. des Reaktionspartners wird in den Stackanschlussblock eingeleitet. Aus Gründen der Sicherheit kann ein Überdruckventil sicherstellen, dass der eingeleitete Druck in den Stackanschlussblock ein bestimmtes Druckniveau nicht überschreitet (z. B. 2 bar, z. B. 3 bar, z. B. 5 bar, z. B. 10 bar).

In einer vorteilhaften Weiterbildung kann in dem Stackanschlussblock eine Rezirkulationseinrichtung vorhanden sein. Rezirkulationseinrichtungen gibt es in unterschiedlichen Ausgestaltungen. Besonders vorteilhafte Ausgestaltungen sind Rezirkulationsdüsen, eine Jet-Pump und eine Rezirkulationspumpe.

Eine Rezirkulationspumpe hat in der Regel einen Pumpenmotor, der einen Teil der umgesetzten Energie durch den Brennstoffzellenstack "verbraucht". Die im Vergleich zu Rezirkulationspumpen eher als passive Bauteile zu bezeichnenden Rezirkulationseinrichtungen "Rezirkulationsdüse" bzw. "Jet-Pump" sind in Bezug auf Eigenverbrauch vorteilhafter, können aber womöglich nicht zu den gleichen Leistungssteigerungen des Brennstoffzellenstacks führen wie eine Rezirkulationspumpe. So ist es eine weitere Auslegungsfrage, welche Rezirkulationseinrichtung vorzusehen ist. Sind die Kanäle in dem Stackanschlussblock so gestaltet, dass grundsätzlich eine Rezirkulation möglich ist, und ist ein Hohlraum für eine Rezirkulationskomponente wie Rezirkulationsdüse, Jet-Pump oder Rezirkulationspumpe in dem Stackanschlussblock vorhanden, so kann die jeweils für die Auslegung des Brennstoffzellensystems optimale Rezirkulationseinrichtung in den Hohlraum des Stackanschlussblocks eingesetzt werden. Kleinere Systeme, die eher passiv zu betreiben sind, können z. B. mit einer Rezirkulationsdüse ausgestattet werden, während größere Brennstoffzellensysteme, insbesondere im kW-Bereich, mit einer Rezirkulationspumpe einen Rückfluss eines Abstroms der Brennstoffzelle erhalten.

Eine Pumpe wird häufig durch einen (Elektro-)Motor angetrieben. Auf der einen Seite ist es günstig, wenn der Stackanschlussblock kompakt ist. Auf der anderen Seite ist es günstig, wenn der Stackanschlussblock so groß und so massiv ist, dass er die in ihm integrierten Teile und Komponenten schützen kann, z. B. im Sinne eines Gehäuses. Bei einer Pumpe ist es dann vorteilhaft, wenn zumindest die eigentliche Pumpe in dem Stackanschlussblock integriert ist. Der Pumpenantrieb, z. B. in Gestalt eines an dem Pumpkörper angebrachten Elektromotors, kann oberflächlich des Stackanschlussblocks an diesem befestigt sein.

Ein Befeuchter umfasst je nach Dimensionierung des Brennstoffzellensystems eine oder mehrere (Befeuchter-)Platten, zwischen denen jeweils eine Befeuchtermembran eingebracht ist, welche im Gegen- oder Kreuzstromverfahren je nach Feuchtegradient Feuchtigkeit von einem feuchten Medium (einer feuchteren Luft) zu einem trockeneren Medium (einer trockenen Luft) transportiert. Außerdem kann zu dem Befeuchter ein Füllkörper gehören. In einer alternativen Ausgestaltung kann der Füllkörper auch durch einen Füllschaum geschaffen werden. Der Füllkörper oder der Füllschaum ersetzt (Befeuchter-)Platten, die nicht in den Befeuchter einzubringen sind, weil der Befeuchter für einen Brennstoffzellenstack mit einer geringeren Leistung gestaltet ist. Durch eine besondere Form des Befeuchters, der auch durch eine Befeuchterkartusche und durch einen in die Befeuchterkartusche eingesetzten Befeuchterplattenblock zusammengestellt sein kann, kann der in dem Stackanschlussblock einsetzbare Befeuchter für eine selbst integrierende und selbst abdichtende Einbauweise gestaltet sein. Die Befeuchterkartusche kann Ausnehmungen aufweisen, die Kanäle bilden. Durch die Kanäle kann das Medium, das befeuchtet werden soll, hindurchströmen. Die Kanäle können auch als (Teil-)Hohlräume bezeichnet werden, weil sie als Ausnehmungen Medien hindurchströmen lassen. Mit anderen Worten, im Stackanschlussblock ist ein Bauraum ausgebildet, in dem eine Befeuchterkartusche mit ihrem Befeuchterblock eingebracht wird. Dadurch ist ein Befeuchter in dem Stackanschlussblock einsetzbar. Besonders günstig ist es, wenn der Füllkörper durch einen Schaum geschaffen wird, der die Befeuchterplatten einschließt bzw. umschließt und so als komplette Baugruppe in der Kartusche eingesetzt ist. Auch ist es möglich, den Füllkörper so zu gestalten, dass Befeuchterkartusche und (Befeuchter-)Füllkörper ein und das gleiche Bauteil ergeben. Die Befeuchterkartusche wird durch den Befeuchterfüllkörper geschaffen.

Des Weiteren kann, wie gesagt, die Befeuchterkartusche aus einem Füllkörper, der die Befeuchterplatten aufnimmt, hergestellt werden. Im Bereich der Befeuchterplatten ist die Befeuchterkartusche so gestaltet, dass ein Frischluft-, ein Zuluft-, ein Abluft- und ein Fortluftkanal zum Betrieb des Befeuchters formschlüssig mit dem Bauraum im Brennstoffzellenanschlussblock ausgebildet sind. In dieser Ausführungsform wird der für diese spezifische Dimensionierung nicht benötigte Befeuchterbauraum ausgefüllt.

Der Befeuchter kann in Gestalt eines stumpfen Körpers geformt sein. Ein solcher stumpfer Körper ist z. B. ein Pyramidenstumpf. Der Befeuchter bzw. das den Befeuchter aufnehmende Gehäuse kann die Form eines Pyramidenstumpfes haben. Ein ebenfalls verwendbarer stumpfer Körper kann ein Quader sein. Ist der Befeuchter ein Plattenbefeuchter, dessen Platten nebeneinander angeordnet einer Pyramidenstumpfform nachempfunden sind, so kann die kleinere Basisseite des Pyramidenstumpfes weiter in dem Stackanschlussblock hineingeführt sein als eine hierzu im Vergleich größere Basis des Pyramidenstumpfes. Die Schrägen des Pyramidenstumpfes erstrecken sich in eine vertiefende Richtung, d. h. in ein Inneres des Stackanschlussblocks. Über die größere Basis des Pyramidenstumpfes kann ein Anpressdruck auf den Befeuchter ausgeübt werden. Hierzu kann ein Deckel vorgesehen sein, der den Stackanschlussblock verschließt. Eine Innenseite des Deckels drückt gegen die Basis des Pyramidenstumpfes. An wenigstens einer Schrägseite des Pyramidenstumpfes ist eine Gas- oder Medienübergabeöffnung. Die Übergabestelle wird idealerweise von einer Dichtung begrenzt. Der Befeuchter ist (ein wenig) größer (z. B. weniger als 5 %, vorzugsweise sogar weniger als 3 % in Bezug auf seine Pyramidenstumpfhöhe) als der Aufnahmeraum für den Befeuchter (insbesondere aufgrund der seitlich angeordneten Dichtung oder aufgrund der seitlich angeordneten Dichtungen). Mithilfe des Deckels kann ein Druck auf die größere Basisseite des Pyramidenstumpfes aufgebracht werden, damit der Befeuchter gegen eine schräg verlaufende Wand des Stackanschlussblocks gegengedrückt wird. So ist es möglich, den flachen Deckel als großflächige Anpressfläche gegen den Befeuchter, z. B. gegen die Kartusche des Befeuchters, zu nutzen. Durch ein Verschlussmittel kann ein Dichtpressdruck (also ein Druck, der zum Abdichten genutzt wird, weil er den Befeuchter gegen die (schräg verlaufende) Wand presst) zwischen Deckel und einem weiteren Teil des Stackanschlussblocks hergestellt werden. Geeignete Verschlussmittel, die sowohl einzeln als auch in Kombination oder mehrfach vorhanden den Deckel mit dem übrigen Stackanschlussblock verbinden können sind
- Blechfeder,
- Verschlussschraube,
- Schnappniete,
- Schraub-Bajonett-Verschluss,
- Klemmfeder,
- eine Schubkanal-Nasen-Verbindung und/oder
- ein Rasthaken.

Von den aufgezählten Verschlussmitteln können jeweils mehrere am Rand des Deckels den Deckel mit einem weiteren Teil des Stackanschlussblocks verbinden.

Eine Verschlussschraube kann durch eine seitlich in den Block eingeführte form- und kraftschlüssige Verbindung eine Verbindung zwischen Deckel und Gehäuse des Stackanschlussblocks bilden. Eine Verschlussschraube kann durch eine senkrechte Verbindung eine Verbindung zwischen Deckel und Gehäuse des Stackanschlussblocks bilden. Im Falle der Ausbildung einer seitlichen Verbindung ist der Deckel mit einem Rand ausgestattet, durch den eine Verbindungsöffnung durchreicht. Im Falle der Ausbildung einer senkrechten Verbindung geht die Verschlussschraube unmittelbar von der großen Fläche des Deckels in das Gehäuse des Stackanschlussblocks.

Der Stackanschlussblock kann sich aus wenigstens zwei Spritzgussteilen zusammensetzen, die zunächst getrennt gegossen werden und anschließend zu dem Stackanschlussblock zusammengesetzt werden. So ist es möglich, den Stackanschlussblock aus Kunststoffspritzgussteilen zusammenzubauen. Solche Teile können schalenartig, z. B. halbschalenartig (wenn zwei Schalen den Stackanschlussblock bilden sollen), geformt sein. Die Gussteile, z. B. die Kunststoffspritzgussteile, können mechanisch stabil genug ausgelegt sein und trotzdem für beliebige Brennstoffzellenstacks verwendet werden, nicht zuletzt, weil sie elektrisch nicht leitfähig sind.

Der Stackanschlussblock kann so massiv gestaltet sein, dass er stabilisierend für den Brennstoffzellenstack da ist, ergo diesen stützt. Der Stackanschlussblock kann (in dem Fall) auch als Träger bezeichnet werden. Wird ein solcher Träger auf der Unterseite des Brennstoffzellenstacks angeordnet, so kann der Träger als Tablett den auf ihm ruhenden Brennstoffzellenstack tragen. Durch Befestigungsanschlusspunkte lässt sich der Brennstoffzellenstack an dem Stackanschlussblock fixieren.

Zusätzlich oder als besonderer Vorteil können Sensoren in dem Stackanschlussblock integriert sein. Geeignete Sensoren sind z. B. Drucksensoren oder Temperatursensoren. Der Stackanschlussblock kann z. B. einen Drucksensor für die Bestimmung eines Wasserstoffdrucks aufweisen. In einer weiteren Ausgestaltung kann der Stackanschlussblock einen Drucksensor zur Bestimmung eines Luftdrucks aufweisen. Natürlich ist es auch möglich, dass in dem Stackanschlussblock sowohl ein Wasserstoffdrucksensor als auch ein Luftdrucksensor vorhanden sind. Temperaturen, die sinnvollerweise an einem Brennstoffzellensystem gemessen werden, sind Temperaturen des Luftabstroms und/oder Temperaturen des Kühlmittelstroms. So kann ausgangsseitig des Brennstoffzellenstacks das Kühlmittel, insbesondere ein Kühlwasser, gemessen werden, genauer die Temperatur des Wassers kann gemessen werden. Einer oder mehrere der Sensoren können in dem Stackanschlussblock integriert sein.

Der Stackanschlussblock kann wenigstens eine Stell- und Regelkomponente aufweisen. Als eine mögliche Regelkomponente kommt ein Ventil, wie z. B. ein Druckregelventil oder Durchflussstromventil, in Betracht.

Entweder für eine weitere Verwendung eines Abstroms aus dem Brennstoffzellenstack oder für eine besondere Nutzung des produzierten Wassers kann in dem Stackanschlussblock ein Wasserabscheider vorhanden sein. Der Wasserabscheider kann Teil des Stackanschlussblocks sein. Mithilfe des Wasserabscheiders kann z. B. Wasser aus einem Wasserstoffstrom abgeschieden werden. Der aus dem Brennstoffzellenstack abströmende Wasserstoffstrom, der zwar abgereichert ist, aber immer noch Wasserstoff enthält (überstöchiometrische Wasserstoffversorgung), lässt sich, insbesondere nach einer Reduktion des in ihm enthaltenden Wassers durch einen Wasserabscheider, wieder in den Brennstoffzellenstack rezirkulieren, insbesondere über eine Rezirkulationseinrichtung im Stackanschlussblock.

Die zuvor dargestellten Kombinationen und Ausführungsbeispiele lassen sich auch in zahlreichen weiteren Verbindungen und Kombinationen betrachten.

Durch den zuvor vorgestellten Stackanschlussblock, insbesondere wenn er als Teil eines Brennstoffzellensystems in ein solches System eingebaut ist, schafft einen Aufnahmeraum für einen Befeuchter (Befeuchterraum), der z. B. als Platten-Membran-Befeuchter realisiert sein kann. Ein solcher Befeuchter kann leicht skaliert bzw. an die umzusetzende Menge Wasser adaptiert werden. Werden mehr Platten-Membran-Einheiten in einem Befeuchter zusammengefasst, ist der Befeuchter für eine größere Menge eines Wasserdampfeintrags gestaltet als ein mit weniger Platten-Membran-Einheiten aufgebauter und daher kürzer gestalteter Befeuchter. Der Raum im Stackanschlussblock, also im Inneren des Stackanschlussblocks, ist für eine maximale Größe des Befeuchters dimensioniert. Soll ein kleinerer Befeuchter zusammen mit dem Brennstoffzellenstapel verwendet werden, so kann der nicht genutzte Raum (der Befeuchterraum) im Stackanschlussblock mit einem oder mit mehreren Füllkörpern befüllt werden. Die Füllkörper füllen den Leerraum in dem Befeuchterraum auf, der zwischen Befeuchter und Wand des Raums vorhanden wäre, wenn kein Füllkörper zwischen Befeuchter und Wand hineingesteckt ist.

Durch eine Integration mehrerer Komponenten in den Stackanschlussblock lässt sich ein universelles Brennstoffzellensystem mit nur wenigen Komponenten realisieren. Ein vorkonfigurierter bzw. vorkonfektionierter Stackanschlussblock mit einigen in ihm integrierten Bauteilen wie Rezirkulationseinrichtung, Befeuchter, Ventile und/oder Wasserabscheider ist als Stütze des Brennstoffzellenstacks gestaltet, wobei der Brennstoffzellenstack ein mechanisch stabiler Block mit einer ersten Endplatte und einer zweiten Endplatte ist. Der Stackanschlussblock hat Ports, die auf Ports, insbesondere in den Endplatten, des Brennstoffzellenstacks abgestimmt sind. An den Übergangsstellen zwischen den Ports werden Dichtungen vorgesehen. Der Befeuchter ist im Inneren des Stackanschlussblocks angesiedelt. Je nach Gestaltung des Befeuchters, z. B. im Falle eines Plattenbefeuchters, handelt es sich um ein fragiles Bauteil, das durch den Stackanschlussblock geschützt wird. Hat der Stackanschlussblock einen Deckel, über den eine Anpresskraft auf den Befeuchter aufgebracht wird, kann der Anpressdruck, insbesondere dank der Verbindungsmittel, eindeutig dosiert werden.

Außerdem hat es sich gezeigt, dass eine Verbindung zwischen den Medienanschlüssen am Brennstoffzellenstack und dem Rest des Brennstoffzellensystems inkl. dem Befeuchter so gestaltet werden kann, dass eine möglichst einfache Verbindung hergestellt werden kann. Zugleich ist eine Möglichkeit aufgezeigt worden, wie eine kompakte, thermisch gedämmte und damit vor Kondensation geschützte Bauweise erzielt wird.

Mit anderen Worten, ein Stackanschlussblock für einen Brennstoffzellenstack weist einen Stackanschluss für einen Brennstoff wie Wasserstoff, einen Stackanschluss für einen Reaktionspartner wie Luft und einen Stackanschluss für ein Kühlmedium auf. Alle drei Stackanschlüsse sind für eine Verbindung mit dem Brennstoffzellenstack ausgebildet. Der Stackanschlussblock ist für einen in seinem Inneren integrierten, in seiner Leistungsfähigkeit in Abhängigkeit eines Widerstands und/oder einer Leistungsfähigkeit des zu betreibenden Brennstoffzellenstacks anpassbaren Befeuchter gestaltet. Zu dem Befeuchter sind in dem Stackanschlussblock wenigstens ein Zuleitungskanal und wenigstens ein Ableitungskanal geführt. Der Zuleitungskanal mündet in den Stackanschluss für den Reaktionspartner aus. Die Erfindung betrifft auch ein entsprechendes Brennstoffzellensystem mit einem Stackanschlussblock sowie ein geeignetes Verfahren zur Mehrfachverwendung eines Stackanschlussblocks.

Einige Aspekte der vorliegenden Erfindung können auch wie folgt erläutert werden.

Das Umsatzvermögen bzw. eine Leistungsfähigkeit eines Befeuchters, also welcher (maximale) Volumenstrom (bei) betriebsgerecht(er Brennstoffzellensystemnutzung) befeuchtbar ist, lässt sich durch verschiedene Anpassungen, Maßnahmen und bauliche Eingriffe und Veränderungen, z. B. an einem zu nutzenden Befeuchter, einstellen bzw. dimensionieren.

Parameter, die verändert werden können, sind (u. a. die) Partialdrücke der Konstituenten der Medien (also der einzelnen Elemente und Molekülanteile der Zusammensetzung), sowohl auf der medienzuleitenden als auch der medienableitenden Seite. Wie zuvor schon angesprochen, können sowohl der Wasserdampfpartialdruck als auch andere Partialdrücke der Gasströme eingestellt werden.

Eine Möglichkeit, wie eine Dimensionierung eines Befeuchters verändert werden kann, besteht in der Vorgabe einer Größe einer Austauschfläche, über die Wasser aus einem wasser- bzw. wasserdampfhaltigen Fluid auf das zu befeuchtende Gas übertragen wird.

Handelt es sich bei dem Befeuchter um einen Plattenbefeuchter, so hat der Befeuchter mehrere Flächen, deren Gesamtfläche sich additiv bildet. Einem Befeuchter des Typs Plattenbefeuchter können somit mehr oder weniger Ebenen gegeben werden. Der Befeuchter des Typs Plattenbefeuchter kann mit einer frei wählbaren Anzahl Befeuchterkammern aufgebaut werden.

Wenn die Austauschfläche, wie bei einem Plattenbefeuchter, eine im Wesentlichen ebene Fläche ist, wird deren Flächenmaß zumeist durch einen in zwei Dimensionen beschränkten Bauraum vorgegeben. Ein Befeuchter mit für einen Brennstoffzellenstapel ausreichender Leistungsfähigkeit kann durch Stapelung mehrerer Befeuchtersegmente bzw. Befeuchterelemente bereitgestellt werden (mehrere Kammern werden gestapelt). Eine Erstreckung des Befeuchters in einer dritten Dimension, also wie dick der Befeuchter letztlich ist, wird insbesondere durch die Anzahl erforderlicher Befeuchtersegmente bzw. Befeuchterkammern festgelegt. Eine maximal mögliche Anzahl von Befeuchtersegmenten ist durch die Dimension eines Befeuchterraums im Stackanschlussblock festgelegt. Jedes Befeuchtersegment weist standardisierte Anschlüsse für die Fluidzuführung (über einen Zuleitungskanal) und für die Abführung des humidisierten bzw. befeuchteten Gases (über einen Ableitungskanal) auf.

Soll ein Befeuchter verwendet werden, der eine geringere Leistungsfähigkeit hat als ein Befeuchter, der den Befeuchterraum in Gänze ausfüllt, so kann der Befeuchter in Bezug auf seine Breite und seine Höhe und seine Dicke verkürzt dimensioniert sein. In einem solchen Fall ist der Befeuchter schlanker bzw. kleiner als ein den Befeuchterraum komplett ausfüllender Befeuchter.

Wenn die Befeuchterkammern in einem Stackanschlussblock parallel verschaltet werden, wird ein besonders großvolumiger Luftdurchfluss durch den Befeuchter hindurch ermöglicht (z. B. geringerer Druckabfall).

Wenn die Befeuchterkammern in einem Stackanschlussblock seriell verschaltet werden, wird eine besonders hohe oder ausgeglichene Befeuchtung eines Luftdurchflusses durch den Befeuchter hindurch ermöglicht.

Statt einer Stapelung von kompletten Befeuchtersegmenten bzw. Befeuchterkammern mit vorgegebenen Anschlüssen ist es auch möglich, Befeuchterplatten mit Abstandshaltern in einem Befeuchterraum eines Stackanschlussblocks zu positionieren. Kanäle für eine Fluidzuführung und für die Abführung des befeuchteten Gases können an oder in den Wänden des Raums, also in den Raumbegrenzungen des Befeuchterraums, eingearbeitet sein.

In einer Ausgestaltung des zuvor Gesagten sieht ein Befeuchter derart aus, dass sich jeweils zwischen zwei Befeuchterplatten ein Zwischenraum für ein Fluid, wie für feuchte Abluft von Brennstoffzellen, oder ein Zwischenraum für befeuchtetes Gas, wie befeuchtete Frischluft, befindet. Die Abstandshalter sind vorzugsweise mit umlaufenden Plattendichtungen ausgestattet. Zuströmöffnungen und Abströmöffnungen können in den Dichtungen oder in einem als Abstandshalter ausgebildeten Plattenrahmen vorhanden sein.

Wenn der Befeuchterraum aufgrund der Dimensionierung des Befeuchters nicht vollständig durch den in den Befeuchterraum eingelegten Befeuchter ausgefüllt wird, kann der verbleibende Raum mit einem Wärmedämmblock, mit einem Füllkörper, mit einem Dämpfungsmittel oder mit einem Thermostat ausgefüllt werden, um den Befeuchter im Betrieb in einem für die Befeuchtung vorteilhaften Temperaturfenster operieren zu lassen. Es ist auch möglich, in einem Restraum des Befeuchters ein Wasserreservoir unterzubringen, um damit eine Notbetriebsbefeuchtung zu ermöglichen.

Wenn die Austauschfläche eine Membran ist, die wölbbar ist und durch ihre Wölbung einem Krümmungsradius folgen kann, kann der Befeuchter auch als Wickelzylinder aufgebaut sein. Bei einer Gasdurchleitung entlang einer Wickelkrümmung wird strömungstechnisch ein besonders guter Kontakt der Gase auf beiden Seiten der Membran sichergestellt. Eine Größe bzw. das Flächenmaß der Austauschfläche kann z. B. über eine Anzahl Wicklungen dimensioniert sein. Zusammen mit der Membran kann ein Abstandshalter gewickelt sein. Der Abstandshalter stellt sicher, dass die Membran nicht in radialer Richtung zur Auflage kommt. Wenn ein Befeuchterraum im Stackanschlussblock in nur einer Dimension eng begrenzt vorgegeben ist, lässt sich in den zwei anderen Dimensionen durch eine geeignete Wicklungslänge ein für einen Brennstoffzellenstapel passend dimensionierter Befeuchter bereitstellen.

Ein verbleibender Restraum im Stackanschlussblock ist z. B. durch ein Hüllmaterial ausfüllbar. Das Hüllmaterial kann eine Lage des Befeuchters im Stackanschlussblock fixieren und die Membran gegen mechanische Einwirkungen schützen.

Befeuchter können als Befeuchtersatz mit abgestufter Leistungsfähigkeit für einen Einbau in einen Stackanschlussblock unabhängig von einem bevorzugten Betriebspunkt eines Brennstoffzellenstacks bereitgestellt werden.

Die zuvor vorgestellten Ausführungsbeispiele abstrahierter zusammenfassend, kann ein Stackanschlussblock einen Befeuchterraum in seinem Inneren bzw. als integrierten Bauraum vorhalten, der in Teilen oder in Gänze von einem Befeuchter auszufüllen ist.

Wird ein Befeuchter in den Stackanschlussblock gesetzt, der nur ein Teil des Volumens des Befeuchterraums ausmacht, so sollten weitere Mittel vorgehalten werden, die den übrigen, nicht ausgefüllten Bauraum des Befeuchterraums an den Befeuchter adaptieren können.

Solche Mittel sind verschiedenartige Mittel.

Insbesondere ein Mittel für eine Trennung des Raums für den Befeuchter von dem Raum, der nicht von dem Befeuchter beansprucht wird, kann ein geeignetes Mittel für den Befeuchterraum sein.

Insbesondere ein Mittel für eine Befestigung des Befeuchters im Befeuchterraum kann ein geeignetes Mittel sein.

Insbesondere ein Mittel für ein Ausfüllen des Raums des Befeuchterraums, der nicht von dem Befeuchter beansprucht wird, ist ein geeignetes Mittel.

Insbesondere ein Mittel für die Zuführung von Medien an den Befeuchter kann ein geeignetes Mittel für den Befeuchterraum sein.

Insbesondere ein Mittel für die Abführung von Medien von dem Befeuchter kann ein geeignetes Mittel sein.

Ein Mittel kann auch mehrere der zuvor erwähnten Mittel vereinigen.

Ein Füllkörper mit Ausnehmungen für Kanäle ist z. B. ein Mittel für das Ausfüllen sowie ein Mittel für die Zuführung und auch ein Mittel für die Abführung.

Ein Membranbefeuchter kann, je nach konkreter Form und Gestaltung, ein Mittel für das Trennen bzw. für eine Trennung der Raumteile des Befeuchterraums sein.

Ein identisch gestalteter Stackanschlussblock kann für unterschiedliche Leistungsklassen an Brennstoffzellenstacks und für unterschiedliche Leistungsklassen an Befeuchtern, sozusagen als standardisiertes Bauteil, verwendet werden, wenn der Befeuchterraum für einen maximalen Befeuchter dimensioniert (im Sinne von überdimensioniert) ist und Mittel zur Kompensation des durch den tatsächlich genutzten Befeuchters nicht benötigten Bauraum vorgesehen sind.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
- Figur 1: ein erstes, schematisch dargestelltes Ausführungsbeispiel eines Stackanschlussblocks zusammen mit einem Brennstoffzellenstack zeigt,
- Figur 2: ein zweites, schematisch dargestelltes Ausführungsbeispiel eines Stackanschlussblocks zusammen mit einem Brennstoffzellenstack zeigt,
- Figur 3: ein drittes, schematisch dargestelltes Ausführungsbeispiel eines Stackanschlussblocks zusammen mit einem Brennstoffzellenstack zeigt,
- Figur 4: ein viertes, schematisch dargestelltes Ausführungsbeispiel eines Stackanschlussblocks zusammen mit einem Brennstoffzellenstack zeigt,
- die Figuren 5 bis 8: eine praktische Konstruktion eines Stackanschlussblocks, zum Teil (siehe Figur 8) mit einem schematisch dargestellten (Brennstoffzellen-)Stack, zeigen,
- Figur 9: eine erste Befestigungsvariante zwischen Deckel und Stackanschlussblockgehäuse des Stackanschlussblocks zeigt,
- Figur 10: eine zweite Variante einer Befestigungstechnik zwischen Stackanschlussblockgehäuse und Deckel zeigt,
- Figur 11: eine dritte Variante einer Befestigungstechnik zwischen Stackanschlussblockgehäuse und Deckel zeigt,
- Figur 12: eine vierte Variante einer Befestigungstechnik zwischen Stackanschlussblockgehäuse und Deckel zeigt,
- Figur 13: eine fünfte Variante einer Befestigungstechnik zwischen Stackanschlussblockgehäuse und Deckel zeigt,
- Figur 14: eine sechste Variante einer Befestigungstechnik zwischen Stackanschlussblockgehäuse und Deckel zeigt und
- Figur 15: eine siebte Variante einer Befestigungstechnik zwischen Stackanschlussblockgehäuse und Deckel bzw. zwischen Deckel und Stackanschlussblockgehäuse zeigt.

### Figurenbeschreibung

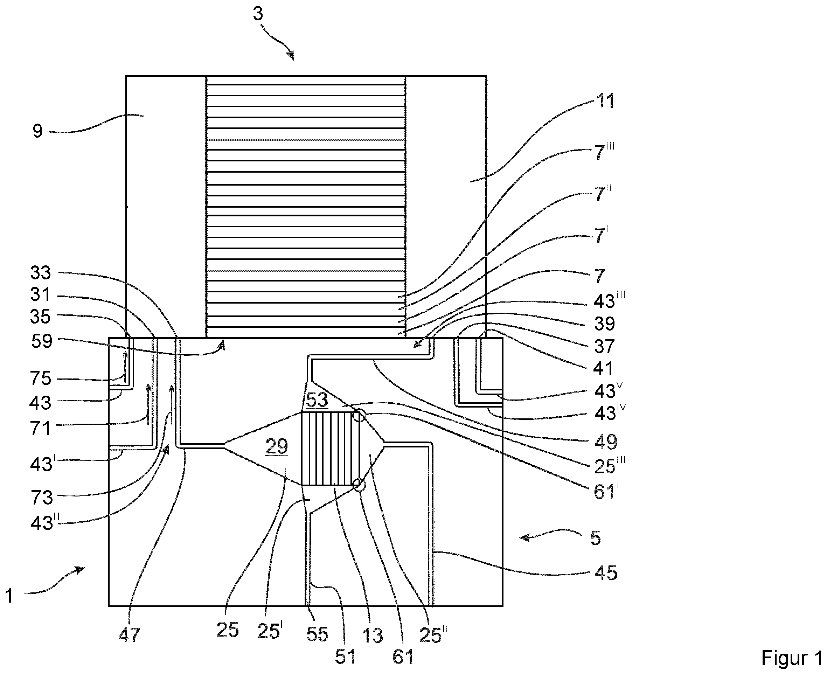

In den Figuren 1 bis 4 wird der Stackanschlussblock 5, 105, 205, 305 mit seiner internen Verrohrung (im Sinne eines Schnittbildes) gezeigt, wobei der auf dem Stackanschlussblock 5, 105, 205, 305 aufliegende Brennstoffzellenstack 3, 103, 203, 303 in einer Ansicht von außen dargestellt ist. Zu dem Stackanschlussblock 5, 105, 205, 305 wird in schematischer Weise der innere Aufbau gezeigt, aus dem der Verlauf von Kanälen ersichtlich ist, während Kanalverläufe des Brennstoffzellenstacks 3, 103, 203, 303 zur Förderung der Übersichtlichkeit nicht im Detail dargestellt werden.

In Figur 1 wird ein erstes Ausführungsbeispiel eines Stackanschlussblocks 5 gezeigt.

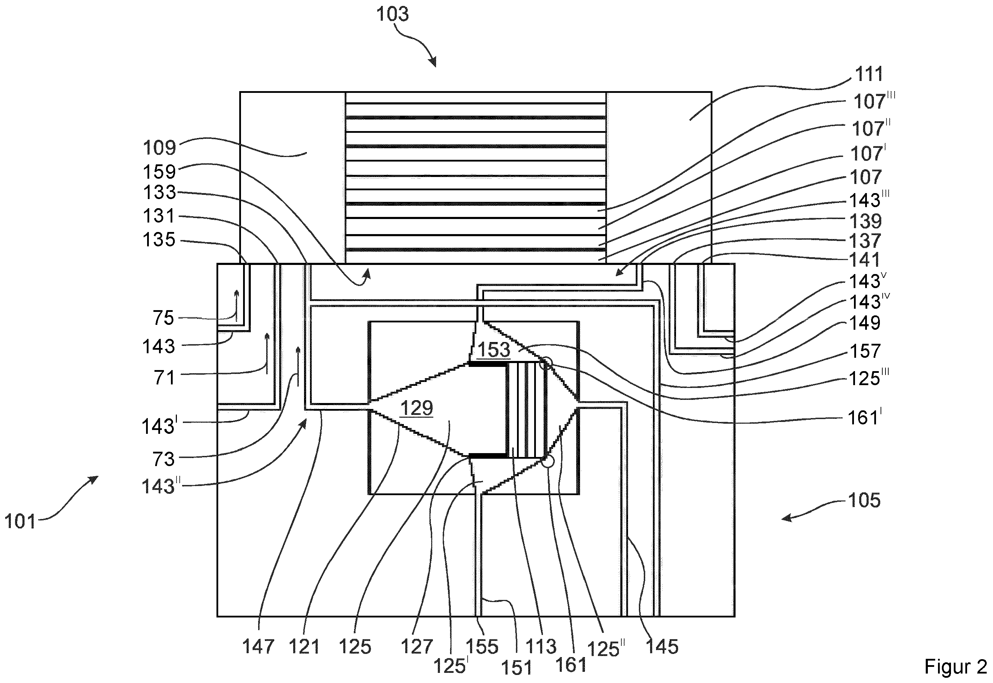

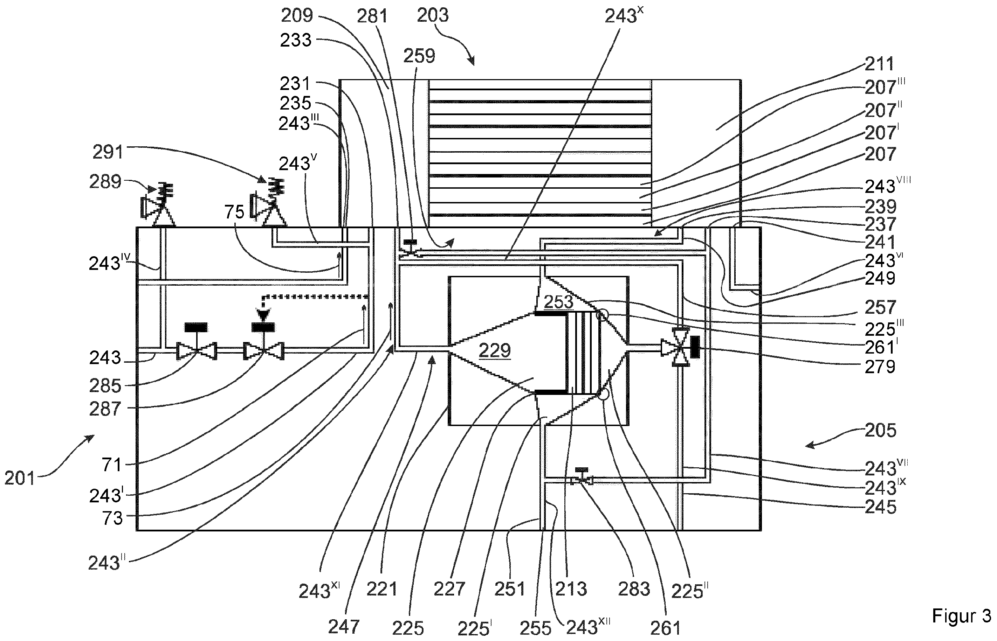

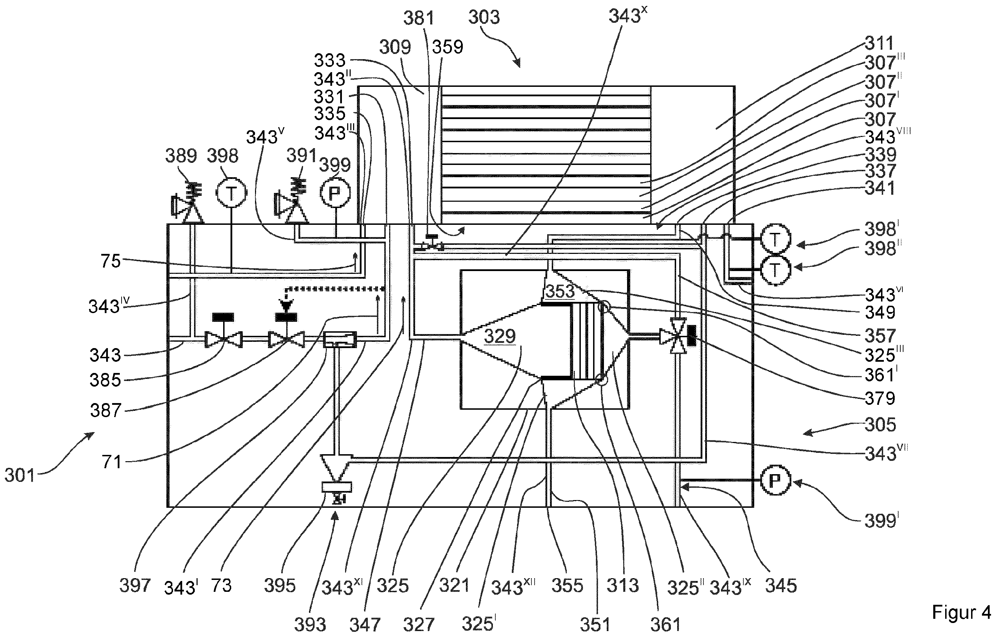

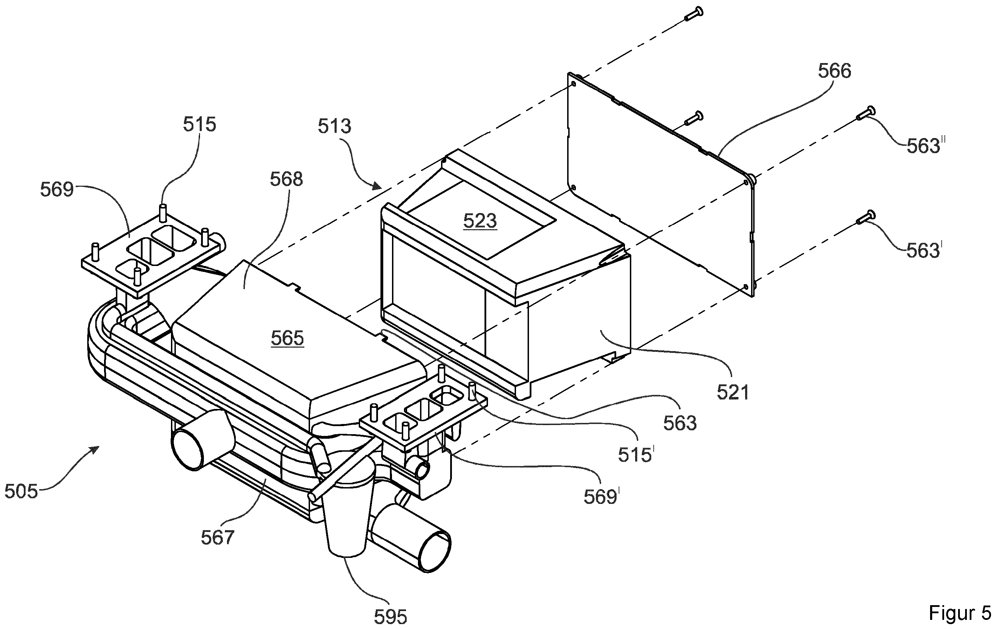

Der Stackanschlussblock 5 ist als rechteckiges Kästchen dargestellt. Wird das schematische Beispiel konstruktiv umgesetzt, so ist für einen Fachmann klar, dass nicht alle Teile des Stackanschlussblocks 5 blockartig auszuführen sind, sondern es handelt sich um miteinander verbundene Komponenten und Teile, die insgesamt eine Stackanschlusseinheit ergeben. Folglich kann zumindest zum Teil an Stelle von Stackanschlussblock 5 (bzw. Stackanschlussblock 105 (nach Figur 2), Stackanschlussblock 205 (nach Figur 3), Stackanschlussblock 305 (nach Figur 4), Stackanschlussblock 505 (nach Figur 5)) auch von einer Stackanschlusseinheit gesprochen werden.

In Figur 1 ist der Stackanschlussblock 5 zusammen mit einem Brennstoffzellenstack 3 dargestellt, die zusammen Teile eines Brennstoffzellensystems 1 sind. Der Stackanschlussblock 5 liegt an einer Unterseite 59 des Brennstoffzellenstacks 3 an und trägt den auf ihm lastenden Brennstoffzellenstack 3. Der Stackanschlussblock 5 unterspannt den Brennstoffzellenstack 3. Der Brennstoffzellenstack 3 und der Stackanschlussblock 5 bilden zusammen eine kompakte Einheit, die zusammen Teil des Brennstoffzellensystems 1 sind. Aus Vereinfachungsgründen sind weitere Teile, die üblicherweise Teile eines Brennstoffzellensystems 1 sind, in der schematischen Darstellung der Figur 1 weggelassen worden: z. B. eine Steuerungsplatine, z. B. eine Regelelektronik, z. B. ein Tank, z. B. ein Produktwassersammelbehälter usw.

An einer Übergangsstelle zwischen Stackanschlussblock 5 und Brennstoffzellenstack 3, genauer an den Übergangsstellen zu den beiden Verteilern 9, 11 des Brennstoffzellenstacks 3, gibt es Stackanschlüsse 31, 33, 35, 37, 39, 41. In der Figur 1 ist der vereinfacht dargestellte Brennstoffzellenstack 3 durch seine einzelnen Brennstoffzellen 7, 7^{I}, 7^{II}, 7^{III}, wobei hierdurch tatsächlich der aktive Bereich der einzelnen Brennstoffzellen 7, 7^{I}, 7^{II}, 7^{III} dargestellt wird, und durch die beiden Verteiler 9, 11 symbolisch abgebildet worden. Der zweite Verteiler 11 ist funktionell ein Sammler für die aus den einzelnen Brennstoffzellen 7, 7^{I}, 7^{II}, 7^{III} in ihn einströmenden Medien. Klarstellend sei hervorgehoben, dass jedes der Medien in einem eigenen Kanal (im Verteiler 9, 11) bzw. in einem eigenen Kanalsystem (in den Brennstoffzellen 7, 7^{I}, 7^{II}, 7^{III}) geführt ist. Praktisch ausgeführt wird ein Teil eines ersten Verteilers 9, die einzelne Brennstoffzelle, wie z. B. die Brennstoffzelle 7, und ein Teil des Sammlers 11 durch eine einzige Platte mit aktivem Flächenabschnitt und passivem Flächenabschnitt realisiert. Somit wird ein Verteiler 9, 11 im Endeffekt durch eine größere Anzahl aufeinanderliegender passiver Abschnitte bzw. Flächenabschnitte von Brennstoffzellen 7, 7^{I}, 7^{II}, 7^{III} gebildet.

Zentral im Stackanschlussblock 5 befindet sich ein Hohlraum 25, 25^{I}, 25^{II}, 25^{III}, 29, der sich durch seine vier Teilhohlräume 25, 25^{I}, 25^{II}, 25^{III} zu einem Gesamthohlraum 29 zusammensetzt. Die Teilhohlräume 25, 25^{I}, 25^{II}, 25^{III} ergeben ein für die Aufnahme des Plattenbefeuchters 13 bestimmtes größeres Volumen als das Volumen, das für einen für eine maximale Wasserumsetzung bzw. Befeuchtung ausgelegten Plattenbefeuchter 13 zur Verfügung zu stellen ist. Der Gesamthohlraum 29 ist ein wenig überdimensioniert. Der Gesamthohlraum 29, der sich aus den Teilhohlräume 25, 25', 25", 25^{III} bildet, ist somit größer im Vergleich mit dem Hohlraum, der für den größten einzubauenden Plattenbefeuchter benötigt würde. Durch die Teilhohlräume 25, 25', 25", 25^{III} ist ein konisch verlaufender bzw. mit Schrägen ausgestatteter Raum geschaffen. An den Berührungsstellen 61, 61^{I}, die zwischen Wand eines Teilhohlraums 25^{I}, 25^{III} und dem Plattenbefeuchter 13 gegeben sind, übt der Stackanschlussblock 5 eine dichtende Anpresskraft derart aus, dass eine Medienvermengung zwischen einzelnen Teilströmen des Reaktionspartners 73 unterbunden bleibt. Eine Formgebung der Teilhohlräume 25, 25^{I}, 25", 25^{III} sorgt für eine Abdichtung zwischen den Zirkulationen bzw. den Abschnitten der Zirkulationen, die durch die Kanäle 43^{II}, 43^{III}, 45, 51 in dem Stackanschlussblock 5 hergestellt sind.

Über den Stackanschlussblock 5 kann der Brennstoffzellenstack 3 über die Verbindung durch die Verteiler 9, 11 bzw. durch den Verteiler 9 und den Sammler 11 mit Medien wie den Reaktionspartnern 71, 73 und dem Kühlmedium 75 versorgt werden. Einer der Stackanschlüsse 31, 33, 35, nämlich der dritte Stackanschluss 35, ist für ein Zuliefern eines Kühlmediums 75 gestaltet. Die Durchmesser des Kanals 43, der zu dem dritten Stackanschluss 35 führt, ist für das Durchströmen eines Kühlmediums 75 wie deionisiertes Wasser oder wie ein Gemisch aus deionisiertem Wasser und Ethylenglykol, d. h. in ausreichender Menge, gestaltet. Auf der einen Seite des Stackanschlussblocks 5 gibt es noch neben dem dritten Stackanschluss 35 einen ersten Stackanschluss 31 und einen zweiten Stackanschluss 33. Der Stackanschluss 31 ist für die Lieferung eines Brennstoffs an die Brennstoffzelle 3. Der zweite Stackanschluss 33 ist für die Lieferung eines Reaktionspartners zuständig. Über diese drei Stackanschlüsse 31, 33, 35 kann der Brennstoffzellenstack 3 versorgt werden. Für die Verteilung der Medien bzw. der Reaktionspartner 71, 73, 75 an die einzelnen Brennstoffzellen 7, 7^{I}, 7^{II}, 7^{III} ist der Verteiler 9 zuständig.

Abströmseitig gibt es sinngleich drei weitere Stackanschlüsse 37, 39, 41. Aufgrund der Kanalführung über den Hohlraum 25, 25^{I}, 25^{II}, 25^{III} mittels eines ersten Zuleitungskanals 43 und eines zweiten Zuleitungskanals 45 und insbesondere aufgrund des im Gesamthohlraum 29 angeordneten Befeuchters 13 ist der Verteiler 9 mit einem ausreichend befeuchteten Reaktionspartner 73 (befeuchtete Luft) versorgbar.

Durch den Befeuchter 13 im Hohlraum 25, 25^{I}, 25^{II}, 25^{III} kann das durch den ersten Zuleitungskanal 45 zuströmende Medium 73 mit einer ausreichenden Feuchtigkeit aufbereitet werden, wobei der entsprechende Wasseranteil für die Befeuchtung über den ersten Ableitungskanal 49 auf die eine Reaktions- bzw. Austauschseite des Plattenbefeuchters 3 gebracht wird.

Für eine gleichmäßige Verteilung des zurückströmenden Mediums (mit Wasser) ist die Mündung 53 des ersten Ableitungskanals 49 in den Befeuchter 13 aufgefächert. Die zweite Mündung 55 des zweiten Ableitungskanals 51 ist im Vergleich zur ersten Mündung 53 deutlich schmaler gestaltet.

Wie aus Figur 1 zu entnehmen ist, ist der Stackanschlussblock 5 ein den Befeuchter 13 komplett umhüllender Kasten, der auch zur thermischen Stabilisierung des Befeuchters 13 beiträgt. Der Befeuchtungsgrad des zu befeuchtenden Mediums 73, der Luft, durch den passiv arbeitenden Befeuchter 13 hängt wesentlich von den Betriebsparametern, wie von den Partialdrücken des Wasserdampfes im Befeuchter 13, ab. Ist der Befeuchter 13 in dem Stackanschlussblock 5 integriert, kann die Wandstärke des Stackanschlussblocks 5 als thermische Isolation bzw. als eine Art von Dämmung gestaltet sein.

Der Stackanschlussblock 5 kann besonders günstig aus mehreren Spritzgussteilen zusammengesetzt werden. Dadurch ist es möglich, Teile des Stackanschlussblocks 5 dicker und andere Teile des Stackanschlussblocks 5 dünner auszulegen, z. B. in Abhängigkeit von zu erwartenden mechanischen Impulsen bzw. Schlägen oder z. B. in Abhängigkeit von gewünschten thermischen Dämmungen.

Werden die Richtungen der Zu- und der Ableitung bezüglich des Wasserstoffs umgedreht, so kann ein Brennstoffzellenstack 3 gem. Figur 1 auch in einem "Counter-Flow-Betrieb" versorgt werden.

Figur 2 zeigt ein weiteres Ausführungsbeispiel eines Brennstoffzellensystems 101, zu dem ein Stackanschlussblock 105 und ein Brennstoffzellenstack 103 gehören.

Der Brennstoffzellenstack 103 setzt sich aus einer größeren Anzahl geschichtet angeordneter Brennstoffzellen 107, 107^{I}, 107^{II}, 107^{III} zusammen. Wird der Brennstoffzellenstack 103 nach Figur 2 mit dem Brennstoffzellenstack 3 nach Figur 1 verglichen, so ist die unterschiedliche Stackgröße festzustellen; der Brennstoffzellenstack 103 hat weniger Brennstoffzellen 107, 107^{I}, 107", 107^{III} als der Brennstoffzellenstack 3. Jede Brennstoffzelle 107, 107^{I}, 107", 107^{III} umfasst einen Teil einer ersten Bipolarplatte, einen Teil einer zweiten Bipolarplatte und eine auf perfluorierten Sulfonsäuregruppen basierenden Polymerelektrolytmembran als Diaphragma sowie entsprechende Katalysatoren (auf Trägern). An ihren Rändern werden die Brennstoffzellen 107, 107^{I}, 107", 107^{III} durch die Verteiler 109, 111 mit Medien 71, 73 versorgt und von den Produkten (z. B. von Produktwasser) befreit. Über die Verteiler 109, 111 strömen die Medien 71, 73 in und aus den Brennstoffzellen 107, 107^{I}, 107", 107^{III}. Weitere Anschlüsse zwischen Brennstoffzellenstack 103 und Stackanschlussblock 105 sind für eine Zu- und eine Ableitung des Kühlmittels 75, wodurch sowohl der Brennstoffzellenstack 103 als auch der Stackanschlussblock 105 thermisch stabilisiert werden.

Die Kanäle 143, 143^{I}, 143^{II}, 143^{III}, 143^{IV}, 143^{V} sind im Inneren des Stackanschlussblocks 105 geführt und leiten die Medien 71, 73, die zur Stromerzeugung benötigt werden, sowie das Kühlmittel 75 zur Unterseite 159 des Brennstoffzellenstacks 103. Ein erster Kanal 143 ist ein Zuleitungskanal für das Kühlmittel 75, das in den einen Verteiler 109 des Brennstoffzellenstapels 103 eingeleitet wird. Ein zweiter Kanal 143^{I} ist ein Zuleitungskanal für den ersten Reaktionspartner, genauer für das Wasserstoffgas, das an die Brennstoffzellen 107, 107^{I}, 107^{II}, 107^{III} gelangen soll. Des Weiteren hat der Stackanschlussblock 105 einen dritten Stackanschluss 135, der durch den ersten Kanal 143 versorgt wird. Über den dritten Stackanschluss 135 wird das Kühlmittel 75 in den Brennstoffzellenstack 103 eingeleitet. Neben dem dritten Stackanschluss 135 gibt es auch noch einen ersten Stackanschluss 131 und einen zweiten Stackanschluss 133. Neben den ersten drei Stackanschlüssen 131, 133, 135 weist der Stackanschlussblock 105 auch noch drei weitere Stackanschlüsse 137, 139, 141 auf. Über die drei weiteren Stackanschlüsse 137, 139, 141 können Medien, wie abgereicherte Edukte, produziertes Produktwasser (gasförmig und meist auch flüssig) und erwärmtes Kühlmittel, aus dem Brennstoffzellenstack 103, genauer mithilfe des Verteilers, der die Funktion eines Sammlers 111 übernimmt, ausgebracht werden.

Wie aus Figur 2 zu entnehmen ist, kann der Stackanschlussblock 105 bezüglich der Führung der Kanäle 143^{I}, 143^{IV} für das erste Medium 71 einfacher gestaltet sein als die Führung über die Kanäle 143", 143^{III}, 157, die mit dem Befeuchter 113 in Verbindung stehen. Der Befeuchter 113 ist in dem Stackanschlussblock 105 vollständig integriert und unterbricht die Kanäle 143^{II}, 143^{III}, die Zuleitungskanäle 145, 147 und Ableitungskanäle 149, 151 sind, um das zweite Medium 73, das als trockenes Gas in den Stackanschlussblock 105 eingeleitet wird, befeuchtet an dem zweiten Stackanschluss 133 dem Brennstoffzellenstack 103 zur Verfügung zu stellen.

Für eine ausreichende Befeuchtung des Mediums "Reaktionspartner" (siehe die Reaktionspartner 71, 73) gibt es in dem Stackanschlussblock 105 einen Befeuchter 113, der kleiner ist als das Volumen des Gesamthohlraums 129. Solange kein Befeuchter 113 in dem Stackanschlussblock 105 eingesetzt ist, handelt es sich bei dem Raum 125 um einen (Gesamt-)Hohlraum 129. Ist der Befeuchter 113 in dem Stackanschlussblock 105 eingesetzt, so reduziert sich der Hohlraum 129 um das Volumen des Befeuchters 113 entsprechend. Mit anderen Worten, das Volumen des Befeuchters 113 kann geringer ausfallen als das durch den Gesamthohlraum 129 maximal zur Verfügung gestellte Volumen. Aus diesem Grund gibt es Füllkörper 127, die den Befeuchter 113 in dem Hohlraum 125 ortsfest einspannen. Hierdurch ist die Möglichkeit geschaffen, einen Befeuchter 113 größen- bzw. dimensions- bzw. umsatzmäßig auszuwählen und ihn abgestimmt auf die Größe des Brennstoffzellenstacks 103 in den Stackanschlussblock 105 einzubauen. Der Befeuchter 113 ist in dem Stackanschlussblock 105 fixiert.

Durch die Anordnung des Befeuchters 113 in dem Stackanschlussblock 105 wird der (Gesamt-)Hohlraum 129 in die (Teil-)Hohlräume 125, 125^{I}, 125^{II}, 125^{III} unterteilt, durch die das zuströmende Medium 73 oder das abströmende Medium 73 zu und von dem Befeuchter 113 gelangen, um mithilfe des Befeuchters 113 das zuströmende Medium 73 durch Produktwasser aus dem Brennstoffzellenstack 103 anzureichern und so auch eine ausreichende Befeuchtung im Bereich von Einlässen bzw. in Anfangsbereichen des Kanalsystems der Brennstoffzellen 107, 107^{I}, 107^{II}, 107^{III} sicherzustellen.

Weil es unter bestimmten Bedingungen und unter bestimmten Betriebsszenarien (z. B. beim Abschalten des Brennstoffzellensystems 101) erforderlich sein kann, den Brennstoffzellenstack 103 mit einem unbefeuchteten Medium 73 zu betreiben, weist der Stackanschlussblock 105 eine Bypassleitung bzw. einen Bypasskanal 157 auf. Zu einem Betriebszeitpunkt wird das Medium 73 durch den Zuleitungskanal 145 in den Befeuchter 113 eingeleitet. Zu einem anderen Betriebszeitpunkt wird das Medium 73 durch den Bypasskanal 157 dem Verteiler 109 unmittelbar, d. h ohne Durchströmung des Befeuchters 113, zur Verfügung gestellt.

Ein abgereichertes, Sauerstoff enthaltenes Medium 73 wie Luft wird über den vierten Stackanschluss 139 in den ersten Ableitungskanal 149 eingeleitet, über den und über eine sich anschließende Mündung 153 das Medium 73 möglichst gleichmäßig verteilt in den Befeuchter 113 eingebracht wird. Abströmseitig des Befeuchters 113 ist der zweite Ableitungskanal 151, durch den das dank seines osmotischen Ausgleichs im Befeuchter 113 trocknere Abgas über die Mündung 155 aus dem Brennstoffzellensystem 101 austreten kann. Das anfänglich trockene Medium 73 wird über den ersten Zuleitungskanal 145 zu dem Teilhohlraum 125^{II} geführt, der nicht von dem Befeuchter 113 ausgefüllt ist. Der Befeuchter 113 hat eine eigene Form. Der Hohlraum 129 hat eine eigene Form. Die Formen des Befeuchters 113 und des Hohlraums 129 sind nicht vollständig identisch, insbesondere der Befeuchter 113 ist so gestaltet, dass er noch Teilhohlräume 125, 125^{I}, 125^{II}, 125^{III} übrig lässt. Somit gelangt aufgrund der unterschiedlichen Formen zwischen Befeuchter 113 und Hohlraum 129 der Befeuchter 113 nur bis an die Zuleitung 145. Genauso gelangt der Befeuchter 113 nur bis an den zweiten Zuleitungskanal 147 und auch zu den beiden Ableitungskanälen 149, 151. Das Medium 73 kann in den Befeuchter 113 einströmen. Das Medium 73 kann aus dem Befeuchter 113 auch wieder ausströmen. Der Befeuchter 113 schlägt an den Berührungsstellen 161, 161^{I} an der Wand des Hohlraums 129 an. Über den Teilhohlraum 125^{II} verteilt sich das trockene Medium 73 auf der anderen Seite des zwei Kammern umfassenden Befeuchters 113 möglichst gleichmäßig in die Zellen des Befeuchters 113, wo der osmotische Ausgleich zwischen abströmendem Medium 73 und zuströmendem Medium 73 stattfindet. Das befeuchtete Medium 73 wird in dem Teilhohlraum 125 zusammengeführt und über den zweiten Zuleitungskanal 147 an den zweiten Stackanschluss 133 herangeleitet, damit das befeuchtete Medium 73 als Reaktionspartner in den Brennstoffzellen 107, 107^{I}, 107^{II}, 107^{III} zur Verfügung steht.

Wie zusätzlich der Figur 2 zu entnehmen ist, kann der Befeuchter 113 Teil einer Befeuchterkartusche 121 sein, die als ein zusammengesetztes Bauteil vorkonfektioniert in den Stackanschlussblock 105 eingebracht werden kann.

So können die Brennstoffzellen 107, 107^{I}, 107^{II}, 107^{III} dazu verwendet werden, in Abhängigkeit eines zu wählenden Schwerpunktes einen elektrischen Strom und/oder eine thermische Energie (und jeweils ein Produktwasser) herzustellen und zu liefern. Je nach Schwerpunkt der durchzuführenden elektrochemischen Konvertierung sind unterschiedliche Befeuchtungspunkte zu wählen. Geht es schwerpunktmäßig um die Erzeugung von thermischer Energie, kann mit höheren inneren Widerständen der Brennstoffzellen 107, 107^{II}, 107^{II}, 107^{III} operiert werden als bei einer vorrangig zu beziehenden elektrischen Leistung aus den Brennstoffzellen 107, 107^{I}, 107^{II}, 107^{III}. Hierfür kann der Befeuchter ausgelegt werden. Der Stackanschlussblock 105 bietet die Flexibilität, den für die gewählte Betriebsweise des Brennstoffzellensystems 101 optimalen Befeuchter 113 in den Stackanschlussblock 105 setzen zu können.

Der in Figur 3 gezeigte Stackanschlussblock 205 umfasst mehr Bauteile als nur die Kanäle 143, 143^{I}, 143^{II}, 143^{III}, 143^{IV}, 143^{V}, 157 und einen Befeuchter 113 in dem eine Befeuchterkartusche 121 aufweisenden Stackanschlussblock 105, der in Figur 2 dargestellt ist. Der Stackanschlussblock 205 hat nicht nur die Kanäle 243, 243^{I}, 243^{II}, 243^{III}, 243^{IV}, 243^{V}, 243^{VI}, 243^{VII}, 243^{VIII}, 243^{IX}, 243^{X}, 243^{XI}, 243^{XII}, 257 und den komplett eingefassten Befeuchter 213, sondern auch Ventile 279, 281, 283, 285, 287, 289, 291.

Durch die Integration der Ventile 279, 281, 283, 285, 287, 289, 291 in den plattenartigen Stackanschlussblock 205 vereinfacht sich der Aufbau und der spätere Umgang mit dem Stackanschlussblock 205. Der Stackanschlussblock 205 schützt die in ihm verlaufenden Kanäle 243, 243^{I}, 243^{II}, 243^{III}, 243^{IV}, 243^{V}, 243^{VI}, 243^{VII}, 243^{VIII}, 243^{IX}, 243^{X}, 243^{XI}, 243^{XII}, 257. Der Stackanschlussblock 205 bietet einen mechanischen Schutz. Durch die weitergehende Einbindung der Ventile 279, 281, 283, 285, 287, 289, 291 in den Stackanschlussblock 205, vor allem dadurch, dass der Stackanschlussblock 205 für zumindest einige Ventile 279, 281, 283, 285, 287, 289, 291 als Ventilkörper genutzt wird, lässt sich der Grad der Integration weiter steigern.

Auch der durch den Füllkörper 227 örtlich in der Befeuchterkartusche 221 fixierte Befeuchter 213 bewegt sich mit dem gesamten Stackanschlussblock 205 mit, wenn dieser bewegt wird.

Über die Purgeventile 281, 283, wobei aus der Figur 3 ersichtlich ist, dass es auch ausreichend sein kann, wenn nur eines der beiden Purgeventile 281, 283 eingebaut ist, können in den Brennstoffzellen 207, 207^{I}, 207^{II}, 207^{III} und/oder in dem Sammler 211 vorhandenes Wasser und sich angesammelte Inertgase ausgetragen werden. Die in Figur 3 dargestellte Ausführungsform wird in der Regel in einem sogenannten "dead-end-Betrieb" betrieben. Hierbei wird der Reaktionspartner "Wasserstoff" nicht rezirkuliert, sondern es gibt das eine oder es gibt die beiden Purgeventile 281, 283, die bei Bedarf, z. B. bei einer zu hohen Anreicherung von Inertgas, geöffnet werden.

Der Stackanschlussblock 205 ist größer bzw. breiter als der Brennstoffzellenstack 203 und trägt den Brennstoffzellenstack 203 an der Unterseite 259. In den überstehenden Bereichen gibt es die nach außen Verbindungen herstellenden Sicherheitsventile 289, 291, die Überdruckventile sind. Der Stackanschlussblock 205 ist von zahlreichen Kanälen 243, 243^{I}, 243^{II}, 243^{III}, 243^{IV}, 243^{V}, 243^{VI}, 243^{VII}, 243^{VIII}, 243^{IX}, 243^{X}, 243^{XI}, 243^{XII} durchsetzt. Die Kanäle 243, 243^{I}, 243^{II}, 243^{II}, 243^{IV}, 243^{V}, 243^{VI}, 243^{VII}, 243^{VIII}, 243^{IX}, 243^{X}, 243^{XI}, 243^{XII} leiten wenigstens drei verschiedene Medien zu und von dem Brennstoffzellenstack 203. Daher können in den Kanälen 243, 243^{I}, 243^{II}, 243^{III}, 243^{IV}, 243^{V}, 243^{VI}, 243^{VII}, 243^{VIII}, 243^{IX}, 243^{X}, 243^{XI}, 243^{XII} unterschiedliche Drücke herrschen. Die Sicherheitsventile 289, 291 reagieren auf zu hohe Drücke in ausgewählten, zu schützenden Kanälen 243, 243^{I}, die von allen Kanälen 243, 243^{I}, 243^{II}, 243^{III}, 243^{IV}, 243^{V}, 243^{VI}, 243^{VII}, 243^{VIII}, 243^{IX}, 243^{X}, 243^{XI}, 243^{XII} besonders hohen Drücken ausgesetzt sein können, wenn z. B. der erste Reaktionspartner 71 mit einem Druck, der oberhalb eines Grenzdrucks liegt (z. B. 5 bar), in den Verteiler 209 eingeleitet werden würde.

Der Brennstoffzellenstapel (Brennstoffzellenstack) 203 umfasst den ersten Verteiler 209, den zweiten Verteiler 211, der funktionell (aufgrund des "CO-Flows" in den Bipolarplatten) ein Sammler ist, sowie eine größere Anzahl Brennstoffzellen 207, 207', 207", 207^{III}. Der Brennstoffzellenstack 203 kann die Kanäle 243, 243^{I}, 243^{II}, 243^{III}, 243^{IV}, 243^{V}, 243^{VI}, 243^{VII}, 243^{VIII}, 243^{IX}, 243^{X}, 243^{XI}, 243^{XII} an den Stackanschlüssen 231, 233, 235, 237, 239, 241 abdichtend auf dem Stackanschlussblock 205 aufliegen. Mit anderen Worten, an der Unterseite 259 des Brennstoffzellenstacks 203 befindet sich der Stackanschlussblock 205, damit die beiden Komponenten Brennstoffzellenstack 203 und Stackanschlussblock 205 zusammen ein Teil eines Brennstoffzellensystems 201 bilden. Aufgrund der dichtenden Verbindung zwischen Brennstoffzellenstack 203 und Stackanschlussblock 205 im Bereich der Stackanschlüsse 231, 233, 235, 237, 239, 241 kann die sich aus Brennstoffzellenstack 203 und Stackanschlussblock 205 zusammensetzende Einheit "Brennstoffzellensystem 201" abweichend von der dargestellten Anordnung mit Stackanschlussblock 205 unten und dem Brennstoffzellenstack 203 oben in ihrer endgültigen Position angeordnet werden. D. h., während der Montage wird vorteilhafterweise der Stackanschlussblock 205 an der Unterseite 259 des Brennstoffzellenstacks 203 platziert, aber anschließend kann auch eine solche Positionierung gewählt werden, dass der Stackanschlussblock 205 sich an einer Seite des Brennstoffzellenstacks 203 befindet.

Die zahlreichen Kanäle 243, 243^{I}, 243^{II}, 243^{III}, 243^{IV}, 243^{V}, 243^{VI}, 243^{VII}, 243^{VIII}, 243^{IX}, 243^{X}, 243^{XI}, 243^{XII} erfüllen unterschiedliche Funktionen und Aufgaben. In einem Kanal 243 sitzt das Eingangsventil 285, dem ausgangsseitig ein Druckregelventil 287 folgt. Ausgangsseitig des Druckregelventils 287 kann der erste Reaktionspartner 71 zu dem ersten Stackanschluss 231 gelangen (auf einem Druckniveau, der auch als Mitteldruck bzw. Versorgungsdruck des Brennstoffzellensystems 201 bezeichnet werden kann). Vor den Ventilen 285, 287 und nach den Ventilen 285, 287 gibt es als Sicherheitseinrichtungen die Sicherheitsventile 289, 291, die als mechanische Sicherheitseinrichtungen bei einer Grenzdrucküberschreitung ein Ablassen des ersten Reaktionspartners 71 aus dem Stackanschlussblock 205 durchführen (hierdurch wird ein Begrenzen des maximal möglichen Drucks, der von einem Tanksystem bereitgestellt wird, sichergestellt). Weil der zweite Reaktionspartner 73 nur mit einem geringen Überdruck in den Verteiler 209 durch den Kanal 243^{XI} über den zweiten Stackanschluss 233 eingeleitet wird, bedarf es keiner Sicherheitsventile, wie der Sicherheitsventile 289, 291 an den Kanälen 243, 243^{I}. Ähnlich verhält es sich mit dem Kanal 243^{III} für das Kühlmittel 75, das mit einem Druck bis zu 3 bar in den Verteiler 209 über den dritten Stackanschluss 235 eingeleitet wird.

Über den vierten Stackanschluss 237, über den fünften Stackanschluss 239 und über den sechsten Stackanschluss 241 gelangen die Medien 71, 73 und das Kühlmittel 75 zurück in die Kanäle 243^{VII}, 243^{VIII}, 243^{VI} des Stackanschlussblocks 205.

Der Kanal 243^{VIII} im Stackanschlussblock 205 ist ein erster Ableitungskanal 249, der über die Mündung 253 an den Befeuchter 213 in der Befeuchterkartusche 221 führt. In der Befeuchterkartusche 221 sitzt der Befeuchter 213. Der Befeuchter 213 nutzt nicht den Gesamthohlraum 229, sondern nur einen Teil des Hohlraums 229 und lässt (Teil-)Hohlräume 225, 225^{I}, 225^{II}, 225^{III} in der Befeuchterkartusche 221 übrig. Von der Befeuchterkartusche 221 führt ein zweiter Ableitungskanal 251 zu der Mündung 255, die das abgereicherte zweite Medium 73 an die Umgebung abgeben kann. Der weniger Volumen beanspruchende Befeuchter 213 ist in der Befeuchterkartusche 221 durch den Füllkörper 227 festgesetzt. Somit ist der Befeuchter 213 durch die Flächenberührungen an den Berührungsstellen 261, 261^{I} und dem Füllkörper 227 eingespannt. Während die 253 des ersten Ableitungskanals 249 für eine Verteilung des Mediums 73 an den Befeuchter 213 benötigt wird, ist die zweite Mündung 255 des zweiten Ableitungskanals 251 für ein leichtes Ausströmen des Restgases des zweiten Mediums 73 sinnvoll.

Neben den Ableitungskanälen 249, 251 gibt es zwei Zuleitungskanäle 245, 247, die zu der Kartusche 241 führen bzw. mit der Kartusche 241 in Verbindung stehen. Um die Kartusche 221 herum gibt es den Bypasskanal 257.

Der Stackanschlussblock 205 hat darüber hinaus zwei Purgeventile 281, 283, über die Wasser und Inertgas aus dem Kanal 243^{VII} und damit aus dem Brennstoffzellenstack 203 ausgebracht werden kann.

Wie aus der Figurenbeschreibung zu Figur 3 ersichtlich, kann der Stackanschlussblock 205 so gestaltet werden, dass er mehrere Ventile 281, 283, 285, 287, 289, 291 aufweist. Wie sich zusätzlich aus Figur 4 ergibt, können natürlich noch mehr Ventile in dem Stackanschlussblock 205, 305 integriert sein, z. B. ein Drainventil 393.

Figur 4 zeigt einen Stackanschlussblock 305, der in Bezug auf viele Ausführungsdetails dem Stackanschlussblock 205 nach Figur 3 (bzw. den Stackanschlussblöcken 5 (nach Figur 1) und 105 (nach Figur 2)) ähnelt. Daher kann die Beschreibung der vorherigen Stackanschlussblöcke 5, 105, 205 auch auf den Stackanschlussblock 305 nach Figur 4 übertragen werden, wobei die Bezugszeichen im Vergleich zu den Ausführungen in Bezug auf Figur 1 um 300 höher nummeriert sind, die Bezugszeichen im Vergleich zu den Ausführungen in Bezug auf Figur 2 um 200 höher nummeriert sind und die Bezugszeichen im Vergleich zu den Ausführungen in Bezug auf Figur 3 um 100 höher nummeriert sind.

Das Brennstoffzellensystem 301 funktioniert so ähnlich wie die Brennstoffzellensysteme 1, 101, 201 der Figuren 1, 2, 3.

Der Stackanschlussblock 305 nach Figur 4 hat nicht nur Ventile 381, 385, 387, 389, 391, 393 integriert, sondern an den Kanälen 343, 343^{I}, 343^{II}, 343^{III}, 343^{IV}, 343^{V}, 343^{VI}, 343^{VII}, 343^{VIII}, 343^{IX}, 343^{X}, 343^{XI}, 343^{XII} sind auch Messsensoren wie Temperatursensoren 398, 398^{I}, 398^{II} und wie Drucksensoren 399, 399^{I} angebracht.

Ein Temperatursensor 398 misst eine Temperatur des Kühlmittels 75 vor dem Eintritt in den Brennstoffzellenstack 303. Ein Temperatursensor 398^{I} misst eine Temperatur der Luft, die aus dem Brennstoffzellenstack 303 ausströmt. Ein Temperatursensor 398^{II} misst eine Temperatur des Kühlmittels 75, wenn dieses aus dem Brennstoffzellenstack 303 herausströmt. Folglich kann die Temperaturdifferenz zwischen eintretendem und austretendem Kühlmittel 75 bestimmt werden.

Mit einem Drucksensor 399 kann ein Druck des Wasserstoffs als eintretendes Medium 73 in den Brennstoffzellenstack 303 gemessen bzw. bestimmt werden.

Innerhalb der Brennstoffzellen 307, 307^{I}, 307^{II}, 307^{III} des Brennstoffzellenstacks 303 gelangt Produktwasser über die Brennstoffzellenmembranen an die Anoden der Brennstoffzellen 307, 307^{I}, 307^{II}, 307^{III}. Von dort wird ein Teil des Produktwassers über den Sammler 311 und den Kanal 343^{VII} ausgetragen.

Weil aufgrund des Wasseraustauschs über den Brennstoffzellenstack 303 mehr Wasser transportiert werden kann, als vom abgereicherten Restgas (abgereicherter Wasserstoff und Inertgas) aufgenommen werden kann, entsteht flüssiges Wasser, welches über den Kanal 343^{VII} zu einem Wasserabscheider 395 geführt wird. Im Wasserabscheider 395 wird das Wasser gesammelt und über ein Drainventil 393 kann das Wasser gesteuert aus dem Brennstoffzellensystem 301 ausgebracht werden.

Das abgereicherte Wasserstoffgas sowie das darin enthaltene, gasförmige Produktwasser können über eine Rezirkulation 397 wieder dem Brennstoffzellenstack 303 über die Medienzuleitung des Wasserstoffs 71 zur Verfügung gestellt werden.

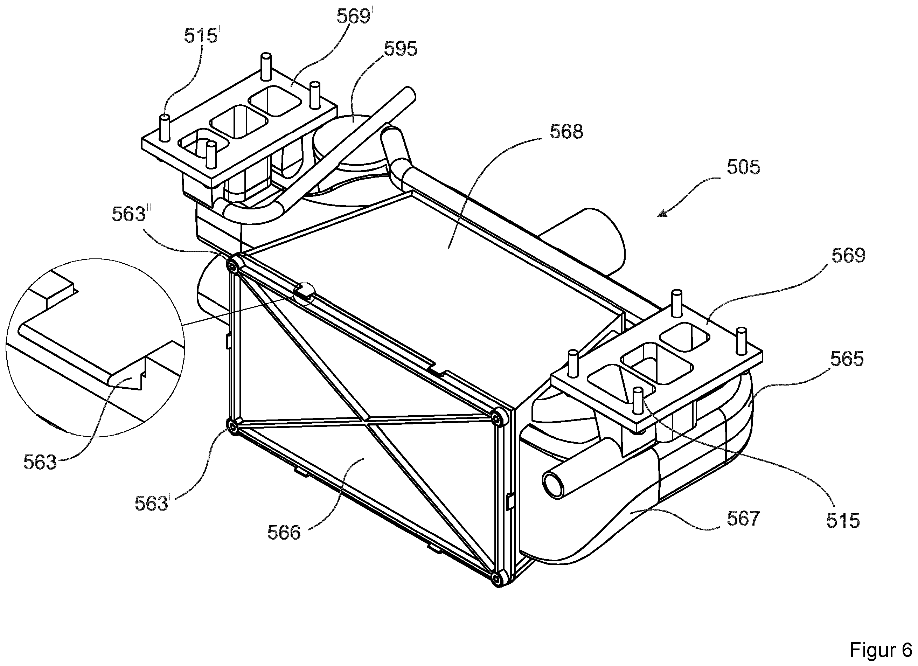

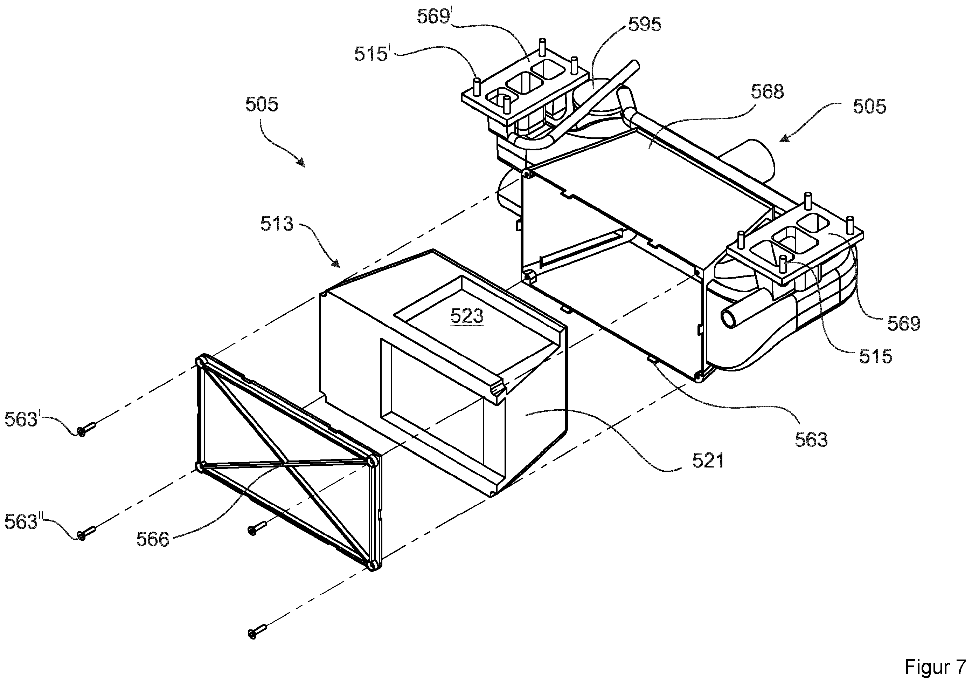

Der als konstruktives Beispiel in den Figuren 5, 6, 7 und 8 gezeigte Stackanschlussblock 505 hat eine pyramidenartige Befeuchterkartusche 521, in die die Befeuchterplatten 523 eingesetzt sind, um einen pyramidenstumpfförmigen Befeuchter 513 zu schaffen, der durch den Deckel 566 in dem Gehäuse 568 gehalten wird.

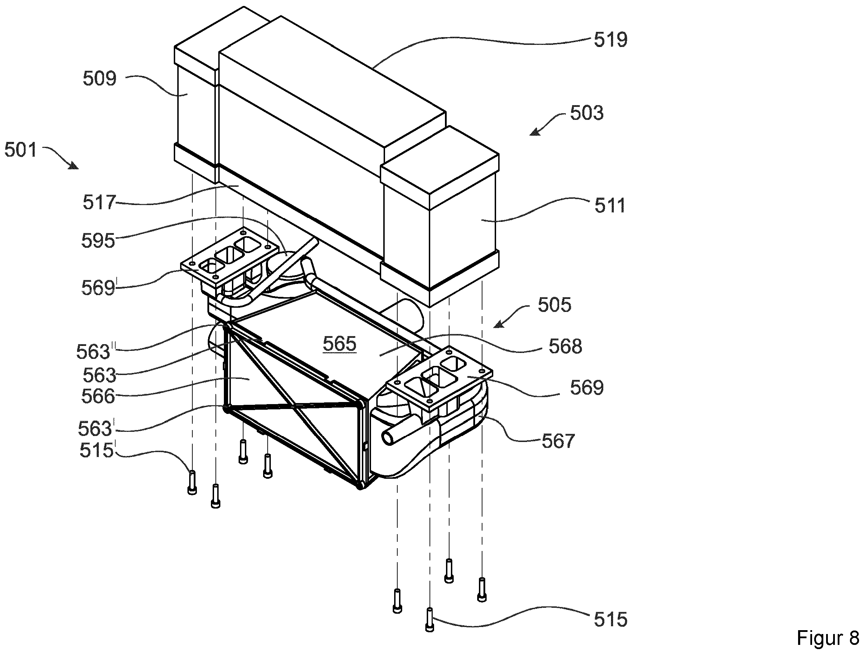

In Figur 8 ist nicht nur der Stackanschlussblock 505, sondern auch der Brennstoffzellenstack 503 dargestellt. Zu dem Brennstoffzellenstack 503 gehören auch die Stackendplatten 517, 519 und die Verteiler 509, 511. Somit werden in Figur 8 wesentliche Teile eines Brennstoffzellensystems 501 gezeigt.

Stackanschlussblock 505 und Brennstoffzellenstack 503 werden über Fixierungen 515, 515^{I} miteinander verbunden. Die Fixierungen 515, 515^{I} verbinden einen Flansch 569, 569^{I} des Stackanschlussblocks 505 mit dem Brennstoffzellenstack 503. Die Flansche 569, 569^{I} haben eine mechanische Festigkeit, die dazu ausgelegt ist, den Brennstoffzellenstack 503 zu tragen. Der Brennstoffzellenstack 503 mit seinen Stackendplatten 517, 519 und mit seinen Verteilern 509, 511 ruht auf dem Stackanschlussblock 505. Der Brennstoffzellenstack 503 ist durch die Fixierungen 515, 515^{I} mediendicht mit dem Stackanschlussblock 505 verbunden. Die Fixierungen 515, 515^{I} sichern den Brennstoffzellenstack 503 gegen ein seitliches Verrutschen von dem Stackanschlussblock 505.

Der Stackanschlussblock 505 hat nicht nur den Befeuchter 513 in seinem Inneren, sondern noch viele weitere Bauteile, wie den Wasserabscheider 595.

Auf das Gehäuse 568 passt der Deckel 566. Der Deckel 566 ist ein eigenständiges Spritzgussteil. Das Gehäuse 568 setzt sich aus mehreren Spritzgussteilen 565, 567 zusammen. Dichtende und isolierende Gehäuseteile, die für eine stabile Prozesstemperatur und für ein möglichst geringes Entweichen von Luft gestaltet sind, sind durch die Spannmittel 563, 563^{I}, 563^{II} mehrfach miteinander in sichernder Weise verbunden. Der Deckel 566 liegt an einer breitesten Seite der Befeuchterkartusche 521 an und presst Schrägen der Befeuchterkartusche 521 gegen Innenwände des Gehäuses 568.

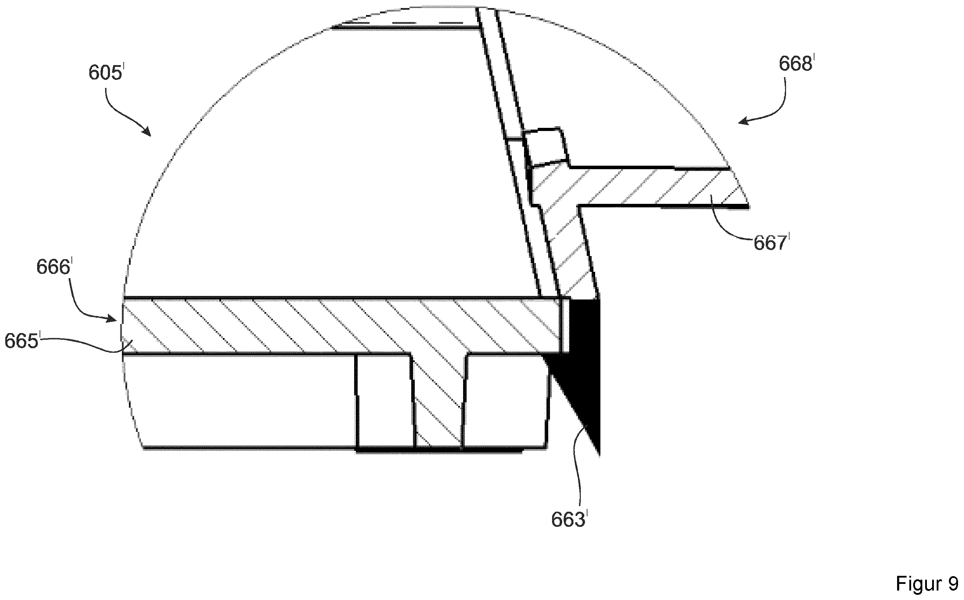

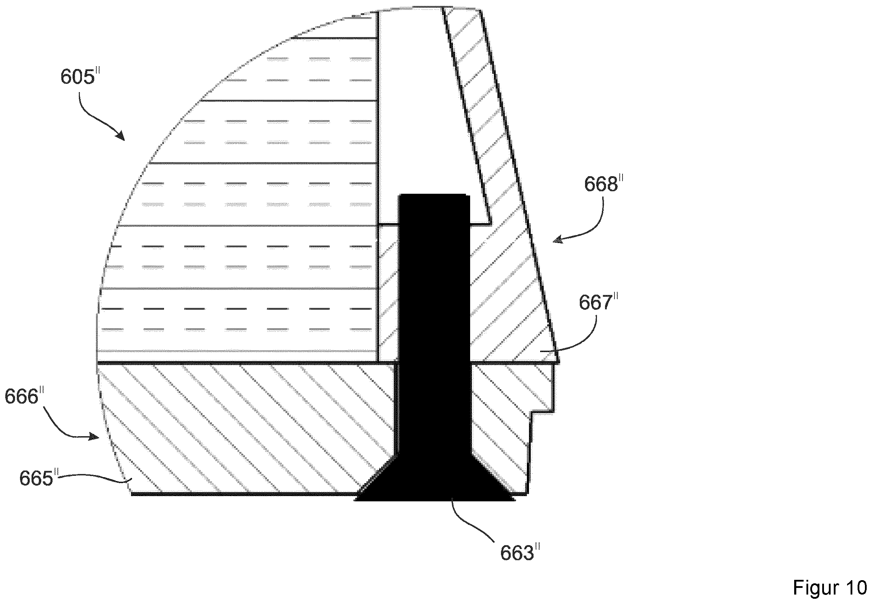

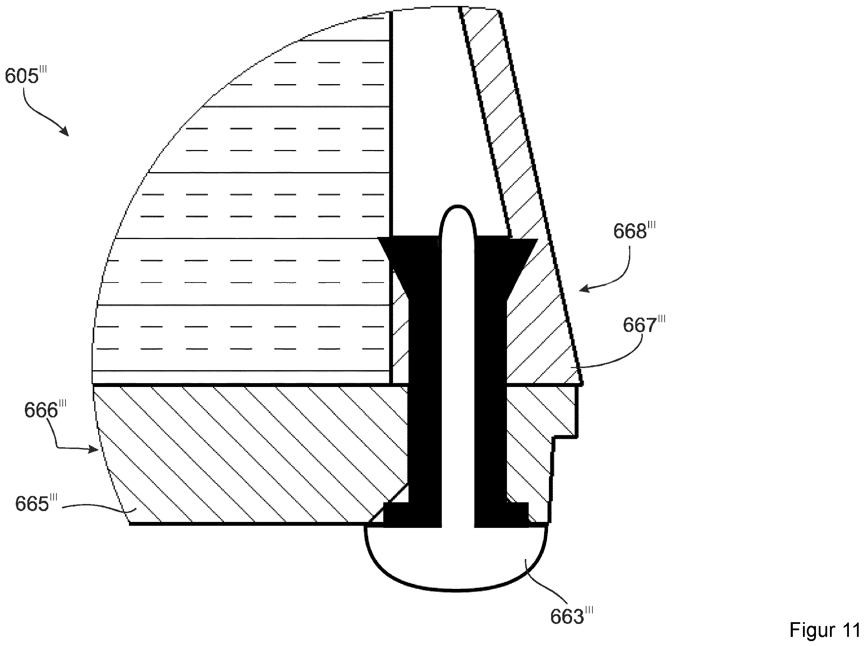

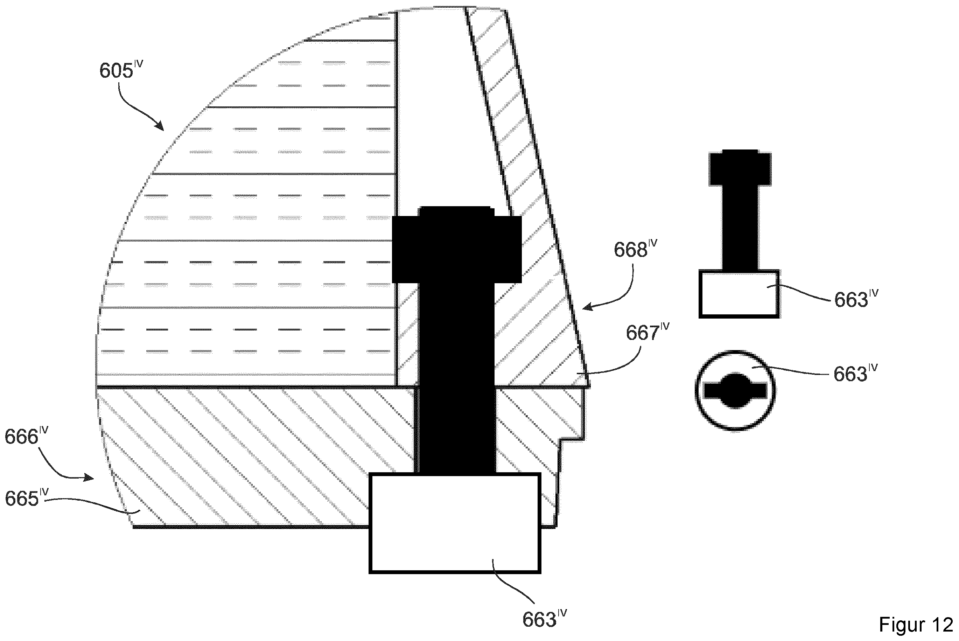

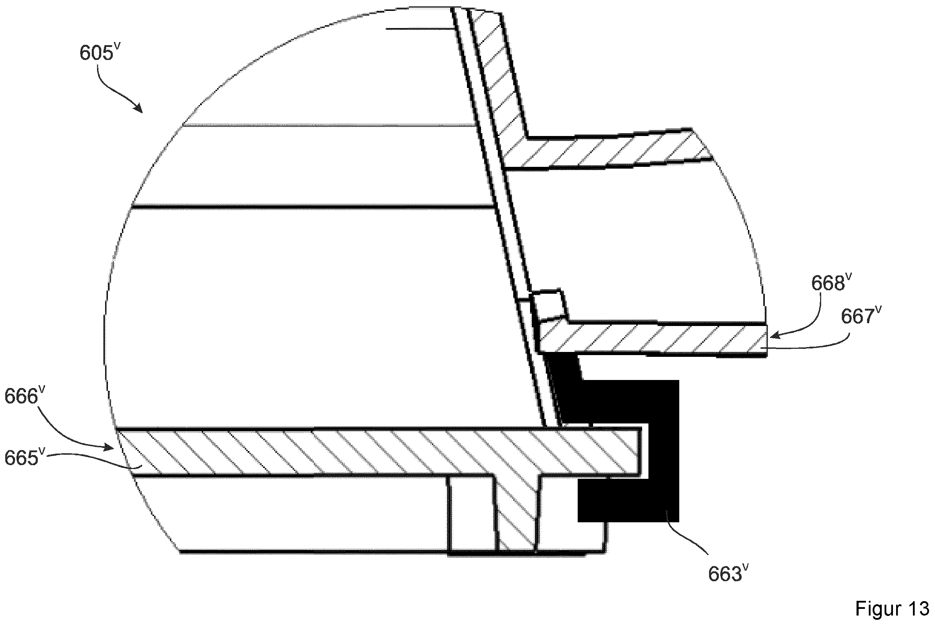

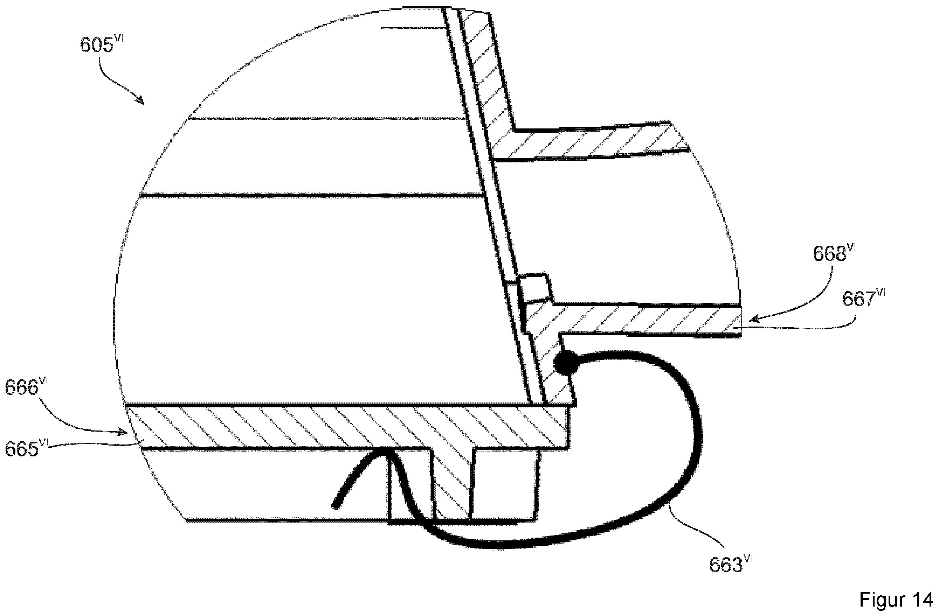

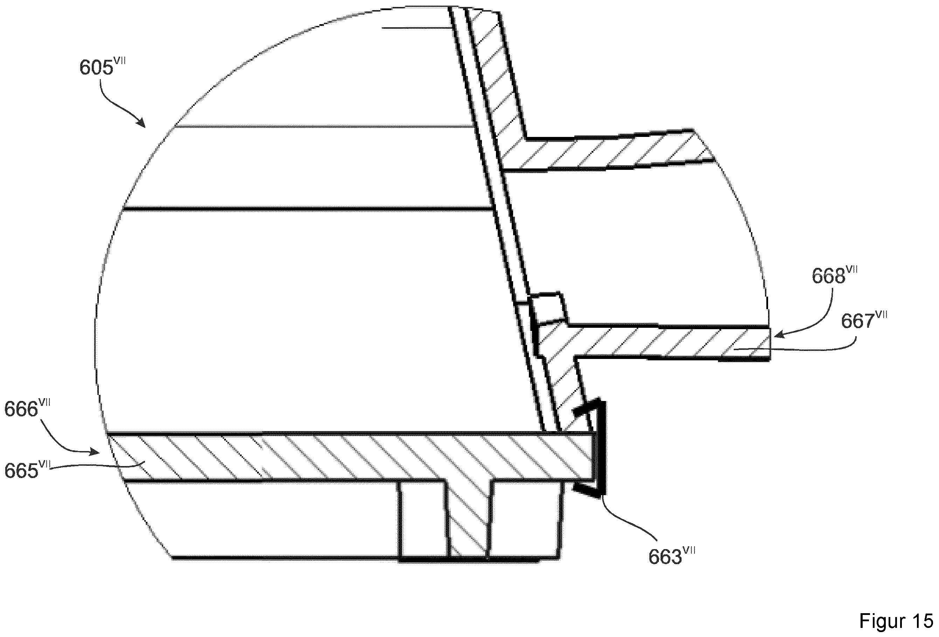

Die Figuren 9 bis 15 verdeutlichen verschiedene Verbindungstechniken, wie z. B. einen Clip 663^{I}, wie z. B. eine Schraube 663^{II}, wie z. B. einen Niet 663^{III}, zwischen Deckel 666^{I}, 666^{II}, 666^{III}, 666^{IV}, 666^{V}, 666^{VI}, 666^{VII} und Gehäuse 668^{I}, 668^{II}, 668^{III}, 668^{IV}, 668^{V}, 668^{VI}, 668^{VII} des Stackanschlussblocks , 605^{I}, 605^{II}, 605^{III}, 605^{IV}, 605^{V}, 605^{VI}, 605^{VII}.

Die in den einzelnen Figuren gezeigten Ausgestaltungsmöglichkeiten lassen sich auch untereinander in beliebiger Form verbinden.

So ist es möglich, wenn ein Brennstoffzellenstack trockener betrieben werden soll einen kleineren Befeuchter mit geringerer Befeuchterleistung für das Brennstoffzellensystem (z. B. eine Befeuchterzelle pro 4 Brennstoffzellen) vorzusehen.

Soll nicht nur einer der beiden Reaktionspartner 71, 73 befeuchtet werden, so ist es natürlich auch möglich, zwei Befeuchter, die ähnlich zu dem Plattenbefeuchter 13 nach Figur 1 (oder auch ähnlich zu dem Befeuchter 513 nach den Figuren 5 bis 8) gestaltet sind, in einen Stackanschlussblock (ähnlich dem Stackanschlussblock 5 nach Figur 1) einzubauen. Ein so modifizierter Stackanschlussblock besitzt für zwei Befeuchter zwei (Gesamt-)Hohlräume. In Abhängigkeit des zu betreibenden Brenstoffzellenstacks (siehe z. B. Brennstoffzellenstack 3 nach Figur 1) kann dann ein jeweils größerer oder kleinerer Befeuchter in den entsprechenden Hohlraum (in die Hohlräume) eingesetzt werden.

### Bezugszeichenliste

1, 101, 201, 301, 501 Brennstoffzellensystem
3, 103, 203, 303, 503 Brennstoffzellenstack
5, 105, 205, 305, 505, 605^{I}, 605^{II}, 605^{III}, 605^{IV}, 605^{V}, 605^{VI}, 605^{VII} Stackanschlussblock
7, 7^{I}, 7^{II}, 7^{III}, 107, 107^{I}, 107^{II}, 107^{III}, 207, 207', 207", 207^{III}, 307, 307', 307^{II}, 307^{III} Brennstoffzelle
9, 109, 209, 309, 509 erster Verteiler
11, 111, 211, 311, 511 zweiter Verteiler bzw. Sammler
13, 113, 213, 313, 513 Befeuchter, insbesondere Plattenbefeuchter
515, 515^{I} Fixierung, insbesondere zwischen Stackanschlussblock und Brennstoffzellenstack
517 erste Brennstoffzellenstackendplatte
519 zweite Brennstoffzellenstackendplatte
121, 221, 321, 521 Befeuchterkartusche
523 Befeuchterplatten, insbesondere Block aus Befeuchterplatten
25, 25^{I}, 25^{II}, 25^{III}, 125, 125', 125", 125^{III}, 225, 225^{I}, 225^{II}, 225^{III}, 325, 325', 325^{II}, 325^{III} Raum bzw. Hohlraum, insbesondere im Stackanschlussblock
127, 227, 327 Füllkörper, insbesondere im Stackanschlussblock
29, 129, 229, 329 Gesamthohlraum, insbesondere für eine Aufnahme eines Befeuchters wie eines Plattenbefeuchters
31, 131, 231, 331 erster Stackanschluss, insbesondere für einen ersten Reaktionspartner wie für einen Brennstoff (Wasserstoff)
33, 133, 233, 333 zweiter Stackanschluss, insbesondere für einen zweiten Reaktionspartner wie Luft
35, 135, 235, 335 dritter Stackanschluss, insbesondere für ein Kühlmedium
37, 137, 237, 337 vierter Stackanschluss, insbesondere für einen Brennstoff
39, 139, 239, 339 fünfter Stackanschluss, insbesondere für Luft
41, 141, 241, 341 sechster Stackanschluss, insbesondere für ein Kühlmedium
43, 43', 43^{III}, 43^{III}, 43^{IV}, 43^{V}, 143, 143', 143^{II}, 143^{III}, 143^{IV}, 143^{V}, 243, 243', 243^{II}, 243^{III}, 243^{IV}, 243^{V}, 243^{IV}, 243^{VII}, 243^{VIII}, 243^{IX}, 243^{X}, 243^{XI}, 243^{XII}, 343, 343^{I}, 343^{II}, 343^{III}, 343^{IV}, 343^{V}, 343^{VI}, 343^{VII}, 343^{VIII}, 343^{IX}, 343^{X}, 343^{XI}, 343^{XII} Kanal
45, 145, 245, 345 erster Zuleitungskanal
47, 147, 247, 347 zweiter Zuleitungskanal
49, 149, 249, 349 erster Ableitungskanal
51, 151, 251, 351 zweiter Ableitungskanal
53, 153, 253,353 Mündung des ersten Ableitungskanals
55, 155, 255, 355 Mündung des zweiten Ableitungskanals
157, 257, 357 Bypasskanal
59, 159, 259, 359 Unterseite, insbesondere des Brennstoffzellenstacks
61, 61^{I}, 161, 161^{I}, Berührungsstelle, insbesondere gebildet durch Befeuchter und Wand
261, 261',361, 361^{I} eines Hohlraums
563 Spannmittel bzw. Befestigungsmittel, insbesondere Spannnase
563^{I} Spannmittel bzw. Befestigungsmittel, insbesondere Schraube
563" Spannmittel bzw. Befestigungsmittel, insbesondere Schraube
663^{I} erstes Spannmittel bzw. Befestigungsmittel, insbesondere Clip (bzw. Klipp)
663^{II} zweites Spannmittel bzw. Befestigungsmittel, insbesondere Schraube
663^{III} drittes Spannmittel bzw. Befestigungsmittel, insbesondere Niet
663^{IV} viertes Spannmittel bzw. Befestigungsmittel, insbesondere Bajonett- Verschluss
663^{V} fünftes Spannmittel bzw. Befestigungsmittel, insbesondere Klammer
663^{VI} sechstes Spannmittel bzw. Befestigungsmittel, insbesondere Feder
663^{VII} siebtes Spannmittel bzw. Befestigungsmittel, insbesondere Blechkralle
565, 665^{I}, 665", erstes Spritzgussteil
665^{III}, 665^{IV}, 665^{V}, 665^{VI}, 665^{VII}566, 666^{I}, 666", 666^{III}, 666^{IV}, 666^{V}, 666^{VI}, 666^{VII} Deckel
567, 667^{I}, 667^{II}, 667^{III}, 667^{IV}, 667^{V}, 667^{VI}, 667^{VII} zweites Spritzgussteil
568, 668^{I}, 668^{II}, 668^{II}, 668^{IV}, 668^{V}, 668^{VI}, 668^{VII} Gehäuse
569, 569^{I} Flansch
71 erster Reaktionspartner bzw. erstes Medium, insbesondere Wasserstoff
73 zweiter Reaktionspartner bzw. zweites Medium, insbesondere mit Wasserdampf beaufschlagte Luft
75 drittes Medium, insbesondere Kühlmedium oder Kühlmittel
279, 379 Drei-Wege-Ventil
281, 381 erstes Purgeventil
283 zweites Purgeventil
285, 385 Eingangsventil
287, 387 Druckregelventil
289, 389 erstes Sicherheitsventil
291, 391 zweites Sicherheitsventil
393 Drainventil, insbesondere Wasserabscheideventil
395, 595 Wasserabscheider
397 Rezirkulationseinrichtung, insbesondere Jet-Pump
398, 398^{I}, 398^{II} Temperatursensor
399, 399^{I} Drucksensor

## Patentansprüche

1. Stackanschlusseinheit
mit einem Stackanschlussblock (5, 105, 205, 305, 505, 605^{I}, 605^{II}, 605^{III}, 605^{IV}, 605^{V}, 605^{VI}, 605^{VII}) und einem Befeuchter (13, 113, 213, 313, 513)
für einen mit wenigstens einem befeuchteten Medium (71, 73),
wie mit einer mit Wasserdampf beaufschlagten Luft (73),
betreibbaren Brennstoffzellenstack (3, 103, 203, 303, 503) mit Brennstoffzellen (7, 7^{I}, 7^{II}, 7^{III}, 107, 107^{I}, 107^{II}, 107^{III}, 207, 207^{I}, 207^{II}, 207^{III}, 307, 307^{I}, 307^{II}, 307^{III}) mit Elektrolytmembranen, die eine mittels einlagerbarem Wasser beeinflussbare Protonenleitfähigkeit, z. B. Polymerelektrolytmembranen basierend auf perfluorierten Sulfonsäuregruppen, aufweisen,
wobei der Stackanschlussblock (5, 105, 205, 305, 505, 605^{I}, 605^{II}, 605^{III}, 605^{IV}, 605^{V}, 605^{VI}, 605^{VII})
einen Stackanschluss (31, 37, 131, 137, 231, 237, 331, 337) für einen Brennstoff wie Wasserstoff,
einen Stackanschluss (33, 39, 133, 139, 233, 239, 333, 339) für einen Reaktionspartner wie Luft und
einen Stackanschluss (35, 41, 135, 141, 235, 241, 335, 341) für ein Kühlmedium umfasst,
wobei alle drei Stackanschlüsse (31, 33, 35, 37, 39, 41, 131, 133, 135, 137, 139, 141, 231, 233, 235, 237, 239, 241, 331, 333, 335, 337, 339, 341) für eine Verbindung mit dem Brennstoffzellenstack (3, 103, 203, 303, 503) gestaltet sind,
**dadurch gekennzeichnet, dass**
der Stackanschlussblock (5, 105, 205, 305, 505, 605^{I}, 605^{II}, 605^{III}, 605^{IV}, 605^{V}, 605^{VI}, 605^{VII}) für den in seinem Inneren in einem Befeuchterraum integrierten,
in seiner Leistungsfähigkeit in Abhängigkeit
eines Widerstands und/oder einer Leistungsfähigkeit des zu betreibenden Brennstoffzellenstacks (3, 103, 203, 303, 503)
anpassbaren Befeuchter (13, 113, 213, 313, 513),
wie für einen Plattenbefeuchter (13, 113, 213, 313, 513, 523),
durch Mittel zum Adaptieren eines Volumens des Befeuchterraums, in den der Befeuchter (13, 113, 213, 313, 513) gesetzt ist, gestaltet ist,
zu dem in dem Stackanschlussblock (5, 105, 205, 305, 505, 605^{I}, 605^{II}, 605^{III}, 605^{IV}, 605^{V}, 605^{VI}, 605^{VII}) wenigstens ein Zuleitungskanal (45, 47, 145, 147, 245, 247, 345, 347) und wenigstens ein Ableitungskanal (49, 51, 149, 151, 249, 251, 349, 351) geführt sind,
wobei der Zuleitungskanal (47, 147, 247, 347) in den Stackanschluss (33, 133, 233, 333) für den Reaktionspartner (73) ausmündet.

2. Stackanschlusseinheit
mit einem Stackanschlussblock (5, 105, 205, 305, 505, 605^{I}, 605^{II}, 605^{III}, 605^{IV}, 605^{V}, 605^{VI}, 605^{VII}) nach Anspruch 1,
**dadurch gekennzeichnet, dass**
der,
idealerweise auf eine Stackgröße in seiner Befeuchtungsleistung abgestimmte,
Befeuchter (13, 113, 213, 313, 513) in einem Hohlraum (25, 25^{I}, 25^{II}, 25^{III}, 29, 125, 125^{I}, 125^{II}, 125^{III}, 129, 225, 225^{I}, 225^{II}, 225^{III}, 229, 325, 325^{I}, 325^{II}, 325^{III}, 329) des Stackanschlussblocks (5, 105, 205, 305, 505, 605^{I}, 605^{II}, 605^{III}, 605^{IV}, 605^{V}, 605^{VI}, 605^{VII}) platziert ist,
der ein Volumen aufweist, in das ein Befeuchter (13, 113, 213, 313, 513) für einen durch eine Obergrenze dimensionsmäßig begrenzten, insbesondere maximal dimensionierten, Brennstoffzellenstack (3, 103, 203, 303, 503) einbaubar ist,
wobei vorzugsweise befeuchtungsleistungsmäßig kleinere Befeuchter (13, 113, 213, 313, 513) durch Füllkörper (127, 227, 327) auf eine Erstreckung des Hohlraums (25, 25^{I}, 25^{II}, 25^{III}, 29, 125, 125^{I}, 125^{II}, 125^{III}, 129, 225, 225^{I}, 225^{II}, 225^{III}, 229, 325, 325^{I}, 325^{II}, 325^{III}, 329) angepasst sind und unter Nutzung der Füllkörper (127, 227, 327) in dem Hohlraum (25, 25^{I}, 25^{II}, 25^{III}, 29, 125, 125^{I}, 125^{II}, 125^{III}, 129, 225, 225^{I}, 225^{II}, 225^{III}, 229, 325, 325^{I}, 325^{II}, 325^{III}, 329) gehalten sind.

3. Stackanschlusseinheit
mit einem Stackanschlussblock (5, 105, 205, 305, 505, 605^{I}, 605^{II}, 605^{III}, 605^{IV}, 605^{V}, 605^{VI}, 605^{VII}) nach einem der vorhergehenden Ansprüche,
**dadurch gekennzeichnet, dass**
der Befeuchter (13, 113, 213, 313, 513) an wenigstens drei Seiten, vorzugsweise allseits, durch den Stackanschlussblock (5, 105, 205, 305, 505, 605^{I}, 605^{II}, 605^{III}, 605^{IV}, 605^{V}, 605^{VI}, 605^{VII}) umhüllt, insbesondere thermisch gedämmt eingeschlossen, ist.

4. Stackanschlusseinheit
mit einem Stackanschlussblock (5, 105, 205, 305, 505, 605^{I}, 605^{II}, 605^{III}, 605^{IV}, 605^{V}, 605^{VI}, 605^{VII}) nach einem der vorhergehenden Ansprüche,
**dadurch gekennzeichnet, dass**
der Befeuchter (13, 113, 213, 313, 513) an vier Luft als Medium führenden Kanälen (45, 47, 49, 51, 145, 147, 149, 151, 245, 247, 249, 251, 345, 347, 349, 351), die durch das Innere des Stackanschlussblocks (5, 105, 205, 305, 505, 605^{I}, 605^{II}, 605^{III}, 605^{IV}, 605^{V}, 605^{VI}, 605^{VII}) gehen, angeschlossen ist,
wobei vorzugsweise zwei der vier Kanäle Zuleitungskanäle (45, 145, 245, 47, 147, 247, 345, 347) und zwei der vier Kanäle Ableitungskanäle (49, 149, 249, 51, 151, 251, 349, 351) sind.

5. Stackanschlusseinheit
mit einem Stackanschlussblock (5, 105, 205, 305, 505, 605^{I}, 605^{II}, 605^{III}, 605^{IV}, 605^{V}, 605^{VI}, 605^{VII}) nach einem der vorhergehenden Ansprüche,
**dadurch gekennzeichnet, dass**
der Stackanschlussblock (5, 105, 205, 305, 505, 605^{I}, 605^{II}, 605^{III}, 605^{IV}, 605^{V}, 605^{VI}, 605^{VII}) im Inneren einen Bypasskanal (157, 257, 357) für ein Medium wie Luft hat,
wobei der Bypasskanal (257, 357) vorzugsweise mit einem Kanal (243^{II}, 343^{XI} von dem Befeuchter (213, 313) zusammengeschlossen in einen Medienversorgungsport (133, 233, 333) des Stackanschlussblocks (5, 105, 205, 305, 505, 605^{I}, 605^{II}, 605^{III}, 605^{IV}, 605^{V}, 605^{VI}, 605^{VII}), der für einen Anschluss des Brennstoffzellenstacks (3, 103, 203, 303, 503) bestimmt ist, übergeht.

6. Stackanschlusseinheit
mit einem Stackanschlussblock (5, 105, 205, 305, 505, 605^{I}, 605^{II}, 605^{III}, 605^{IV}, 605^{V}, 605^{VI}, 605^{VII}) nach einem der vorhergehenden Ansprüche,
**dadurch gekennzeichnet, dass**
in seinem Inneren wenigstens ein Ventil (281, 381, 283, 285, 385, 287, 387, 289, 389, 291, 391, 393) integriert ist,
vorzugsweise eines oder mehrere der folgenden Ventile:
regelbares Ventil (287, 387),
Drei-Wege-Ventil (279, 379),
Purgeventil (281, 381) mit einem Ausgang zu einem Lufteinlass des Stacks (3, 103, 203, 303, 503),
Purgeventil mit einem Ausgang zu einem Lufteinlass eingangsseitig des Befeuchters (213, 313),
Purgeventil (283) mit einem Ausgang zu einem Luftauslass ausgangsseitig des Befeuchters (13, 113, 213, 313, 513),
Wasserabscheiderventil (393),
Sicherheitsventil (289, 389, 291, 391),
Druckregelventil (287, 387),
Überdruckventil (289, 389) als eine erste Sicherheitseinrichtung für einen Stackeingangsdruck, und/oder
Überdruckventil (291, 391) als eine, insbesondere zweite, Sicherheitseinrichtung für einen Versorgungsdruck.

7. Stackanschlusseinheit
mit einem Stackanschlussblock (5, 105, 205, 305, 505, 605^{I}, 605^{II}, 605^{III}, 605^{IV}, 605^{V}, 605^{VI}, 605^{VII}) nach einem der vorhergehenden Ansprüche,
**dadurch gekennzeichnet, dass**
im Inneren des Stackanschlussblocks (5, 105, 205, 305, 505, 605^{I}, 605^{II}, 605^{III}, 605^{IV}, 605^{V}, 605^{VI}, 605^{VII}) eine Rezirkulationseinrichtung (397),
wie eine Rezirkulationsdüse, eine Jet-Pump (397) oder eine Rezirkulationspumpe, integriert ist.

8. Stackanschlusseinheit
mit einem Stackanschlussblock (5, 105, 205, 305, 505, 605^{I}, 605^{I}, 605^{III}, 605^{IV}, 605^{V}, 605^{VI}, 605^{VII}) nach einem der vorhergehenden Ansprüche,
**dadurch gekennzeichnet, dass**
der Befeuchter (13, 113, 213, 313, 513), eine Befeuchterkartusche (121, 221, 321, 521) und/oder ein Befeuchterplattenblock (523) eine Form eines stumpfen Körpers, wie z. B. eine Pyramidenstumpfform, aufweist bzw. aufweisen,
wobei vorzugsweise ein Deckel (566, 666, 666^{I}, 666^{II}, 666^{III}, 666^{IV}, 666^{V}, 666^{VI}, 666^{VII} ) des Stackanschlussblocks (5, 105, 205, 305, 505, 605^{I}, 605^{II}, 605^{III}, 605^{IV}, 605^{V}, 605^{VI}, 605^{VII}) flächig an einer breitesten Seite des Befeuchters (13, 113, 213, 313, 513) zur Erzeugung eines Dichtpressdrucks mit einem Gehäuse (568, 668^{I}, 668^{II}, 668^{II}, 668^{IV}, 668^{V}, 668^{VI}, 668^{VII} ) des Stackanschlussblocks (5, 105, 205, 305, 505, 605^{I}, 605^{II}, 605^{III}, 605^{IV}, 605^{V}, 605^{VI}, 605^{VII}) verbunden ist,
z. B. mithilfe einer oder mehrerer Blechfedern bzw. Clips (663^{I}, 663^{VII}),
z. B. mithilfe einer oder mehrerer Verschlussschrauben (563, 563^{I}, 563^{II}, 663^{II}),
z. B. mithilfe einer oder mehrerer Schnappnieten (663^{III}),
z. B. mithilfe eines oder mehrerer Schraub-Bajonett-Verschlüsse (663^{IV}),
z. B. mithilfe einer Klemmfeder (663^{VI}),
z. B. mithilfe einer, insbesondere konisch zulaufenden, Schubkanal-Nasen-Verbindung,
z. B. mithilfe eines oder mehrerer Rasthaken (663^{V}).

9. Stackanschlusseinheit
mit einem Stackanschlussblock (5, 105, 205, 305, 505, 605^{I}, 605^{II}, 605^{III}, 605^{IV}, 605^{V}, 605^{VI}, 605^{VII}) nach einem der vorhergehenden Ansprüche,
**dadurch gekennzeichnet, dass**
der Stackanschlussblock (5, 105, 205, 305, 505, 605^{I}, 605^{II}, 605^{III}, 605^{IV}, 605^{V}, 605^{VI}, 605^{VII}) aus wenigstens zwei Spritzgussteilen (565, 567, 665, 665^{I}, 665^{II}, 665^{III}, 665^{IV}, 665^{V}, 665^{VI}, 665^{VII}, 667^{I}, 667^{I}, 667^{III}, 667^{IV}, 667^{V}, 667^{VI}, 667^{VII}),
vorzugsweise Kunststoffspritzgussteilen,
hergestellt ist,
von denen insbesondere wenigstens eines schalenartig, z. B. halbschalenartig, geformt ist.

10. Stackanschlusseinheit
mit einem Stackanschlussblock (5, 105, 205, 305, 505, 605^{I}, 605^{II}, 605^{III}, 605^{IV}, 605^{V}, 605^{VI}, 605^{VII}) nach einem der vorhergehenden Ansprüche,
**dadurch gekennzeichnet, dass**
der Stackanschlussblock (5, 105, 205, 305, 505, 605^{I}, 605^{II}, 605^{III}, 605^{IV}, 605^{V}, 605^{VI}, 605^{VII}) als Träger des anzuschließenden Brennstoffzellenstacks (3, 103, 203, 303, 503) für eine unterspannende Platzierung gestaltet ist, z. B. durch Befestigungsanschlusspunkte zur Fixierung des Stackanschlussblocks (5, 105, 205, 305, 505, 605^{I}, 605^{II}, 605^{III}, 605^{IV}, 605^{V}, 605^{VI}) mit dem Brennstoffzellenstack (3, 103, 203, 303, 503).

11. Stackanschlusseinheit
mit einem Stackanschlussblock (305, 505, 605^{I}, 605^{II}, 605^{III}, 605^{IV}, 605^{V}, 605^{VI}, 605^{VII}) nach einem der vorhergehenden Ansprüche,
**dadurch gekennzeichnet, dass**
der Stackanschlussblock (305, 505, 605^{I}, 605", 605^{III}, 605^{IV}, 605^{V}, 605^{VI}, 605^{VII}) zur Aufnahme wenigstens eines der nachfolgenden Sensoren (398, 398^{I}, 398^{II}, 399, 399^{I}) gestaltet ist:
ein Drucksensor (399) als Wasserstoffdrucksensor,
ein Drucksensor (399^{I}) als Luftdrucksensor,
ein Temperatursensor (398^{I}) als Luftabstromtemperatursensor,
ein Temperatursensor (398, 398^{II}) als Kühlmitteltemperatursensor.

12. Stackanschlusseinheit
mit einem Stackanschlussblock (305, 505, 605^{IV}, 605^{II}, 605^{III}, 605^{IV}, 605^{V}, 605^{VI}, 605^{VII}) nach einem der vorhergehenden Ansprüche,
**dadurch gekennzeichnet, dass**
ein Wasserabscheider (395, 595) in dem Stackanschlussblock (305, 505, 605^{IV}, 605^{II}, 605^{III}, 605^{IV}, 605^{V}, 605^{VI}) vorhanden ist,
der insbesondere für eine Abscheidung von Wasser aus einem Wasserstoffstrom, z. B. einem von dem Brennstoffzellenstack (3, 103, 203, 303, 503) abströmenden Wasserstoffstrom, vorgesehen ist.

13. Brennstoffzellensystem (1, 101, 201, 301, 501)
mit einem Brennstoffzellenstack (3, 103, 203, 303, 503),
der wenigstens eine Medienanschlussplatte oder wenigstens eine Brennstoffzellenstackendplatte (517, 519) mit wenigstens drei Anschlüssen an einer ersten Seite (59, 159, 259, 359) bietet und
vorzugsweise auf einer zweiten Seite der Medienanschlussplatte oder der Brennstoffzellenstackendplatte (517, 519) durch gestapelte Zellen leistungsmäßig erweiterbar ist, und
mit einer Stackanschlusseinheit mit einem Stackanschlussblock (5, 105, 205, 305, 505, 605^{I}, 605^{II}, 605^{III}, 605^{IV}, 605^{V}, 605^{VI}, 605^{VII}),
**dadurch gekennzeichnet, dass**
die Stackanschlusseinheit mit dem Stackanschlussblock (5, 105, 205, 305, 505, 605^{IV}, 605^{II}, 605^{III}, 605^{IV}, 605^{V}, 605^{VI}, 605^{VII}) nach einem der Ansprüche 1 bis 12 gestaltet ist,
wobei der Stackanschlussblock (5, 105, 205, 305, 505, 605^{I}, 605^{II}, 605^{III}, 605^{IV}, 605^{V}, 605^{VI}, 605^{VII}) durch wenigstens drei Stackanschlüsse in einer mediendichten Verbindung mit der Medienanschlussplatte des Brennstoffzellenstacks (3, 103, 203, 303, 503) steht,
und der Befeuchter (13, 113, 213, 313, 513) ein integrierter Teil des Stackanschlussblocks (5, 105, 205, 305, 505, 605^{I}, 605^{II}, 605^{III}, 605^{IV}, 605^{V}, 605^{VI}, 605^{VII}) ist.

14. Verfahren zur Mehrfachverwendung eines Stackanschlussblocks (5, 105, 205, 305, 505, 605^{I}, 605^{II}, 605^{III}, 605^{IV}, 605^{V}, 605^{VI}, 605^{VII})
an einem Brennstoffzellenstapel (3, 103, 203, 303, 503) mit einem ersten oder einem zweiten Befeuchter (13, 113, 213, 313, 513),
wobei der Stackanschlussblock (5, 105, 205, 305, 505, 605^{I}, 605^{II}, 605^{III}, 605^{IV}, 605^{V}, 605^{VI}, 605^{VII}) ein Volumen (25, 25^{I}, 25^{II}, 25^{III}, 29, 125, 125^{I}, 125^{II}, 125^{III}, 129, 225, 225^{I}, 225^{II}, 225^{III}, 229, 325, 325^{I}, 325^{II}, 325^{III}, 329) in seinem Inneren aufweist,
das von einem ersten, ausgewählten Befeuchter (13, 113, 213, 313, 513) für eine ausreichende Feuchtigkeit eines zuströmenden Mediums (73)
zumindest teilweise ausfüllbar ist,
wobei das Volumen (25, 25^{I}, 25^{II}, 25^{III}, 29, 125, 125^{I}, 125^{II}, 125^{III}, 129, 225, 225^{I}, 225^{II}, 225^{III}, 229, 325, 325^{I}, 325^{II}, 325^{III}, 329) in dem Stackanschlussblock (5, 105, 205, 305, 505, 605^{I}, 605^{II}, 605^{III}, 605^{IV}, 605^{V}, 605^{VI}, 605^{VII}) in seinen Abmessungen für eine Aufnahme eines Befeuchters (13, 113, 213, 313, 513) und insbesondere in seinen Abmessungen von Kanälen (43, 43^{I}, 43^{II}, 43^{III}, 43^{IV}, 43^{V}, 45, 47, 49, 51, 143, 143^{I}, 143^{II}, 143^{III}, 143^{IV}, 143^{V}, 145, 147, 149, 151, 157, 243, 243^{I}, 243^{II}, 243^{III}, 243^{IV}, 243^{II}, 243^{VI}, 243^{VII}, 243^{VIII}, 243^{IX}, 243^{X}, 243^{XI}, 243^{XII}, 245, 247, 249, 251, 257, 343, 343^{I}, 343^{II}, 343^{III}, 343^{IV}, 343^{V}, 343^{VI}, 343^{VII}, 343^{VIII}, 343^{IX}, 343^{X}, 343^{XI}, 343^{XII}, 345, 347, 349, 351, 357) für einen mit einer maximalen Leistung ausgelegten Brennstoffzellenstapel (3, 103, 203, 303, 503) dimensioniert ist,
wobei für eine erste Verwendung des Stackanschlussblocks (5, 105, 205, 305, 505, 605^{I}, 605^{II}, 605^{III}, 605^{IV}, 605^{V}, 605^{VI}, 605^{VII}) der erste Befeuchter (13, 113, 213, 313, 513) in den Stackanschlussblock (5, 105, 205, 305, 505, 605^{I}, 605^{II}, 605^{III}, 605^{IV}, 605^{V}, 605^{VI}, 605^{VII}) gesetzt wird, der in seinem Befeuchtungsvermögen auf eine Größe des Brennstoffzellenstapels (3, 103, 203, 303, 503) abgestimmt ist, und
bei einer unterschiedlichen Leistungsklasse des Brennstoffzellenstapels (3, 103, 203, 303, 503) ein zweiter Befeuchter (13, 113, 213, 313, 513) in den Stackanschlussblock (5, 105, 205, 305, 505, 605^{I}, 605^{II}, 605^{III}, 605^{IV}, 605^{V}, 605^{VI}, 605^{VII}) gesetzt wird, der für die unterschiedliche Leistungsklasse vorgesehen ist.

15. Verfahren zur Mehrfachverwendung eines Stackanschlussblocks (5, 105, 205, 305, 505, 605^{I}, 605^{II}, 605^{III}, 605^{IV}, 605^{V}, 605^{VI}, 605^{VII}) nach Anspruch 14,
wobei der Stackanschlussblock (5, 105, 205, 305, 505, 605^{I}, 605^{II}, 605^{III}, 605^{IV}, 605^{V}, 605^{VI}, 605^{VII}) nach einem der Ansprüche 1 bis 12 gestaltet ist,
**dadurch gekennzeichnet, dass**
der Brennstoffzellenstapel (3, 103, 203, 303, 503) ein Polymerelektrolytmembranbrennstoffzellenstapel ist, der in einem Temperaturbereich unterhalb von 100 °C zu betreiben ist.

## Claims

1. Stack connection unit,
comprising a stack connection block (5, 105, 205, 305, 505, 605^{I}, 605^{II}, 605^{III}, 605^{IV}, 605^{V}, 605^{VI}, 605^{VII}) and a humidifier (13, 113, 213, 313, 513),
for a fuel cell stack (3, 103, 203, 303, 503) that can be operated with at least one humidified medium (71, 73),
such as water vapor-charged air (73),
the fuel cell stack comprising fuel cells (7, 7^{I}, 7^{II}, 7^{III}, 107, 107^{I}, 107^{II} 107^{III}, 207, 207^{I}, 207^{II}, 207^{III}, 307, 307^{I}, 307^{II}, 307^{III}) with electrolyte membranes which have a proton conductivity that can be influenced by means of storable water, for example polymer electrolyte membranes based on perfluorinated sulfonic acid groups,
wherein the stack connection block (5, 105, 205, 305, 505, 605 , 605^{II}, 605^{III}, 605^{IV}, 605^{V}, 605^{VI}, 605^{VII}) comprises
a stack connection (31, 37, 131, 137, 231, 237, 331, 337) for a fuel such as hydrogen,
a stack connection (33, 39, 133, 139, 233, 239, 333, 339) for a reaction partner such as air, and
a stack connection (35, 41, 135, 141, 235, 241, 335, 341) for a cooling medium,
wherein all three stack connections (31, 33, 35, 37, 39, 41, 131, 133, 135, 137, 139, 141, 231, 233, 235, 237, 239, 241, 331, 333, 335, 337, 339, 341) are designed for connection to the fuel cell stack (3, 103, 203, 303, 503),
**characterized in that**
the stack connection block (5, 105, 205, 305, 505, 605^{I}, 605", 605^{III}, 605^{IV}, 605^{V}, 605^{VI}, 605^{VII}) is designed for the humidifier (13, 113, 213, 313, 513) integrated in the interior thereof in a humidifier space,
such as a plate humidifier (13, 113, 213, 313, 513, 523),
said humidifier being adjustable in terms of its performance,
as a function of a resistance and/or a performance of the fuel cell stack (3, 103, 203, 303, 503) to be operated,
by means for adapting a volume of the humidifier space in which the humidifier (13, 113, 213, 313, 513) is placed,
to which humidifier at least one feed channel (45, 47, 145, 147, 245, 247, 345, 347) and at least one discharge channel (49, 51, 149, 151, 249, 251, 349, 351) are guided in the stack connection block (5, 105, 205, 305, 505, 605^{I}, 605", 605^{III}, 605^{IV}, 605^{V}, 605^{VI}, 605^{VII}),
wherein the feed channel (47, 147, 247, 347) opens into the stack connection (33, 133, 233, 333) for the reaction partner (73).

2. Stack connection unit,
comprising a stack connection block (5, 105, 205, 305, 505, 605^{I}, 605", 605^{III}, 605^{IV}, 605^{V}, 605^{VI}, 605^{VII}) according to claim 1,
**characterized in that**
the humidifier (13, 113, 213, 313, 513),
which is ideally matched to a stack size in terms of its humidification capacity,
is placed in a cavity (25, 25^{I}, 25^{II}, 25^{III}, 29, 125, 125^{I}, 125", 125^{III}, 129, 225, 225^{I}, 225", 225^{III}, 229, 325, 325^{I}, 325", 325^{III}, 329) of the stack connection block (5, 105, 205, 305, 505, 605^{I}, 605^{II}, 605^{III}, 605^{IV}, 605^{V}, 605^{VI}, 605^{VII}),
which has a volume in which a humidifier (13, 113, 213, 313, 513) for a fuel cell stack (3, 103, 203, 303, 503) can be installed, said fuel cell stack being dimensionally limited by an upper limit, in particular being maximally dimensioned,
wherein preferably humidifiers (13, 113, 213, 313, 513) that have a lower humidification capacity are adapted to a size of the cavity (25, 25^{I}, 25", 25^{III}, 29, 125, 125^{I}, 125", 125^{III}, 129, 225, 225^{I}, 225^{II}, 225^{III}, 229, 325, 325^{I}, 325", 325^{III}, 329) by filler bodies (127, 227, 327) and are held in the cavity (25, 25^{I}, 25^{II}, 25^{III}, 29, 125, 125^{I}, 125", 125^{III}, 129, 225, 225^{I}, 225^{II}, 225^{III}, 229, 325, 325^{I}, 325^{II}, 325^{III}, 329) using the filler bodies (127, 227, 327).

3. Stack connection unit,
comprising a stack connection block (5, 105, 205, 305, 505, 605^{I}, 605", 605^{III}, 605^{IV}, 605^{V}, 605^{VI}, 605^{VII}) according to any one of the preceding claims,
**characterized in that**
the humidifier (13, 113, 213, 313, 513) is surrounded on at least three sides, preferably on all sides, by the stack connection block (5, 105, 205, 305, 505, 605^{I}, 605^{II}, 605^{III}, 605^{IV}, 605^{V}, 605^{VI}, 605^{VII}), in particular is enclosed in a thermally insulated manner.

4. Stack connection unit,
comprising a stack connection block (5, 105, 205, 305, 505, 605^{I}, 605", 605^{III}, 605^{IV}, 605^{V}, 605^{VI}, 605^{VII}) according to any one of the preceding claims,
**characterized in that**
the humidifier (13, 113, 213, 313, 513) is connected to four channels (45, 47, 49, 51, 145, 147, 149, 151, 245, 247, 249, 251, 345, 347, 349, 351) which conduct air as a medium and which pass through the interior of the stack connection block (5, 105, 205, 305, 505, 605^{I}, 605^{II}, 605^{III}, 605^{IV}, 605^{V}, 605^{VI}, 605^{VII}),
wherein preferably two of the four channels are feed channels (45, 145, 245, 47, 147, 247, 345, 347) and two of the four channels are discharge channels (49, 149, 249, 51, 151, 251, 349, 351).

5. Stack connection unit,
comprising a stack connection block (5, 105, 205, 305, 505, 605^{I}, 605", 605^{III}, 605^{IV}, 605^{V}, 605^{VI}, 605^{VII}) according to any one of the preceding claims,
**characterized in that**
the stack connection block (5, 105, 205, 305, 505, 605^{I}, 605", 605^{III}, 605^{IV}, 605^{V}, 605^{VI}, 605^{VII}) has in the interior a bypass channel (157, 257, 357) for a medium such as air,
wherein the bypass channel (257, 357), preferably connected to a channel (243", 343^{XI}) from the humidifier (213, 313), transitions into a media supply port (133, 233, 333) of the stack connection block (5, 105, 205, 305, 505, 605^{I}, 605", 605^{III}, 605^{IV}, 605^{V}, 605^{VI}, 605^{VII}), which is intended for connection of the fuel cell stack (3, 103, 203, 303, 503).

6. Stack connection unit,
comprising a stack connection block (5, 105, 205, 305, 505, 605^{I}, 605", 605^{III}, 605^{IV}, 605^{V}, 605^{VI}, 605^{VII}) according to any one of the preceding claims,
**characterized in that**
at least one valve (281, 381, 283, 285, 385, 287, 387, 289, 389, 291, 391, 393) is integrated in the interior thereof,
preferably one or more of the following valves:
controllable valve (287, 387),
three-way valve (279, 379),
purge valve (281, 381) with an outlet to an air inlet of the stack (3, 103, 203, 303, 503),
purge valve with an outlet to an air inlet on the inlet side of the humidifier (213, 313),
purge valve (283) with an outlet to an air outlet on the outlet side of the humidifier (13, 113, 213, 313, 513),
water separator valve (393),
safety valve (289, 389, 291, 391),
pressure control valve (287, 387),
pressure relief valve (289, 389) as a first safety device for a stack inlet pressure, and/or
pressure relief valve (291, 391) as a, in particular second, safety device for a supply pressure.

7. Stack connection unit,
comprising a stack connection block (5, 105, 205, 305, 505, 605^{I}, 605", 605^{III}, 605^{IV}, 605^{V}, 605^{VI}, 605^{VII}) according to any one of the preceding claims,
**characterized in that**
a recirculating device (397),
such as a recirculating nozzle, a jet pump (397) or a recirculating pump,
is integrated in the interior of the stack connection block (5, 105, 205, 305, 505, 605^{I}, 605", 605^{III}, 605^{IV}, 605^{V}, 605^{VI}, 605^{VII}).

8. Stack connection unit,
comprising a stack connection block (5, 105, 205, 305, 505, 605^{I}, 605", 605^{III}, 605^{IV}, 605^{V}, 605^{VI}, 605^{VII}) according to any one of the preceding claims,
**characterized in that**
the humidifier (13, 113, 213, 313, 513), a humidifier cartridge (121, 221, 321, 521) and/or a humidifier plate block (523) has/have the shape of a blunt body, such as a truncated pyramid shape,
wherein preferably a cover (566, 666, 666^{I}, 666^{II}, 666^{III}, 666^{IV}, 666^{V}, 666^{VI}, 666^{VII}) of the stack connection block (5, 105, 205, 305, 505, 605^{I}, 605", 605^{III}, 605^{IV}, 605^{V}, 605^{VI}, 605^{VII}) is connected flat against a broadest side of the humidifier (13, 113, 213, 313, 513),
for example by means of one or more plate springs or clips (663^{I}, 663^{VII}),
for example by means of one or more locking screws (563, 563^{I}, 563^{II}, 663^{II}),
for example by means of one or more snap rivets (663^{III}),
for example by means of one or more screw bayonet locks (663^{IV}),
for example by means of a clamping spring (663^{VI}),
for example by means of a, in particular conically tapering, push channel-lug connection, for example by means of one or more latching hooks (663^{V}),
in order to generate a sealing pressure with a housing (568, 668^{I}, 668^{II}, 668^{III}, 668^{IV}, 668^{V}, 668^{VI}, 668^{VII}) of the stack connection block (5, 105, 205, 305, 505, 605^{I}, 605", 605^{III}, 605^{IV}, 605^{V}, 605^{VI}, 605^{VII}).

9. Stack connection unit,
comprising a stack connection block (5, 105, 205, 305, 505, 605^{I}, 605", 605^{III}, 605^{IV}, 605^{V}, 605^{VI}, 605^{VII}) according to any one of the preceding claims,
**characterized in that**
the stack connection block (5, 105, 205, 305, 505, 605^{I}, 605", 605^{III}, 605^{IV}, 605^{V}, 605^{VI},
605^{VII}) is produced from at least two injection-molded parts (565, 567, 665, 665^{I}, 665^{II}, 665^{III}, 665^{IV}, 665^{V}, 665^{VI}, 665^{VII}, 667^{I}, 667^{II}, 667^{III}, 667^{IV}, 667^{V}, 667^{VI}, 667^{VII}), preferably plastic injection-molded parts,
of which in particular at least one is shell-shaped, for example half-shell-shaped.

10. Stack connection unit,
comprising a stack connection block (5, 105, 205, 305, 505, 605^{I}, 605^{II}, 605^{III}, 605^{IV}, 605^{V}, 605^{VI}, 605^{VII}) according to any one of the preceding claims,
**characterized in that**
the stack connection block (5, 105, 205, 305, 505, 605^{I}, 605^{II}, 605^{III}, 605^{IV}, 605^{V}, 605^{VI}, 605^{VII}), as a carrier of the fuel cell stack (3, 103, 203, 303, 503) to be connected, is designed to be placed spanning beneath the latter, for example by way of fastening connection points for fixing the stack connection block (5, 105, 205, 305, 505, 605^{I}, 605^{II}, 605^{III}, 605^{IV}, 605^{V}, 605^{VI}) to the fuel cell stack (3, 103, 203, 303, 503).

11. Stack connection unit,
comprising a stack connection block (305, 505, 605^{I}, 605", 605^{III}, 605^{IV}, 605^{V}, 605^{VI}, 605^{VII}) according to any one of the preceding claims,
**characterized in that**
the stack connection block (305, 505, 605^{I}, 605", 605^{III}, 605^{IV}, 605^{V}, 605^{VI}, 605^{VII}) is designed to accommodate at least one of the following sensors (398, 398^{I}, 398", 399, 399^{I}):
a pressure sensor (399) as a hydrogen pressure sensor,
a pressure sensor (399^{I}) as an air pressure sensor,
a temperature sensor (398^{I}) as an air outflow temperature sensor,
a temperature sensor (398, 398") as a coolant temperature sensor.

12. Stack connection unit,
comprising a stack connection block (305, 505, 605^{I}, 605", 605^{III}, 605^{IV}, 605^{V}, 605^{VI}, 605^{VII}) according to any one of the preceding claims,
**characterized in that**
a water separator (395, 595) is present in the stack connection block (305, 505, 605^{I}, 605^{II}, 605^{III}, 605^{IV}, 605^{V}, 605^{VI}),
which in particular is provided for separating water out of a hydrogen stream, for example a hydrogen stream flowing out of the fuel cell stack (3, 103, 203, 303, 503).

13. Fuel cell system (1, 101, 201, 301, 501),
comprising a fuel cell stack (3, 103, 203, 303, 503)
which offers at least one media connection plate or at least one fuel cell stack end plate (517, 519) having at least three connections on a first side (59, 159, 259, 359), and
is preferably expandable in terms of performance by way of stacked cells on a second side of the media connection plate or of the fuel cell stack end plate (517, 519), and
comprising a stack connection unit comprising a stack connection block (5, 105, 205, 305, 505, 605^{I}, 605^{II}, 605^{III}, 605^{IV}, 605^{V}, 605^{VI}, 605^{VII}),
**characterized in that**
the stack connection unit comprising the stack connection block (5, 105, 205, 305, 505, 605^{I}, 605", 605^{III}, 605^{IV}, 605^{V}, 605^{VI}, 605^{VII}) is designed according to any one of claims 1 to 12,
wherein the stack connection block (5, 105, 205, 305, 505, 605^{I}, 605", 605^{III}, 605^{IV}, 605^{V}, 605^{VI}, 605^{VII}) is connected to the media connection plate of the fuel cell stack (3, 103, 203, 303, 503) in a media-tight manner by at least three stack connections,
and the humidifier (13, 113, 213, 313, 513) is an integrated part of the stack connection block (5, 105, 205, 305, 505, 605^{I}, 605", 605^{III}, 605^{IV}, 605^{V}, 605^{VI}, 605^{VII}).

14. Method for multiple use of a stack connection block (5, 105, 205, 305, 505, 605^{I}, 605^{II}, 605^{III}, 605^{IV}, 605^{V}, 605^{VI}, 605^{VII})
on a fuel cell stack (3, 103, 203, 303, 503) comprising a first or a second humidifier (13, 113, 213, 313, 513),
wherein the stack connection block (5, 105, 205, 305, 505, 605^{I}, 605", 605^{III}, 605^{IV}, 605^{V}, 605^{VI}, 605^{VII}) has, in the interior thereof, a volume (25, 25^{I}, 25", 25^{III}, 29, 125, 125^{I}, 125^{II}, 125^{III}, 129, 225, 225^{I}, 225", 225^{III}, 229, 325, 325^{I}, 325", 325^{III}, 329) which can be at least partially filled
by a first, selected humidifier (13, 113, 213, 313, 513) for a sufficient humidity of an inflowing medium (73),
wherein the volume (25, 25^{I}, 25^{II}, 25^{III}, 29, 125, 125^{I}, 125", 125^{III}, 129, 225, 225^{I}, 225", 225^{III}, 229, 325, 325^{I}, 325^{II}, 325^{III}, 329) in the stack connection block (5, 105, 205, 305, 505, 605^{I}, 605", 605^{III}, 605^{IV}, 605^{V}, 605^{VI}, 605^{VII}), in terms of its dimensions for accommodating a humidifier (13, 113, 213, 313, 513) and in particular in terms of its dimensions of channels (43, 43^{I}, 43", 43^{III}, 43^{IV}, 43^{V}, 45, 47, 49, 51, 143, 143^{I}, 143", 143^{III}, 143^{IV}, 143^{V}, 145, 147, 149, 151, 157, 243, 243^{I}, 243", 243^{III}, 243^{IV}, 243^{V}, 243^{VI}, 243^{VII}, 243^{VIII}, 243^{IX}, 243^{X}, 243^{XI}, 243^{XII}, 245, 247, 249, 251, 257, 343, 343^{I}, 343", 343^{III}, 343^{V}, 343^{V}, 343^{VI}, 343^{VII}, 343^{VIII}, 343^{IX}, 343^{X}, 343^{XI}, 343^{XII}, 345, 347, 349, 351, 357), is dimensioned for a fuel cell stack (3, 103, 203, 303, 503) designed for a maximum power output,
wherein, for a first use of the stack connection block (5, 105, 205, 305, 505, 605^{I}, 605^{II}, 605^{III}, 605^{IV}, 605^{V}, 605^{VI}, 605^{VII}), the first humidifier (13, 113, 213, 313, 513), which in terms of its humidification capacity is matched to a size of the fuel cell stack (3, 103, 203, 303, 503), is placed in the stack connection block (5, 105, 205, 305, 505, 605^{I}, 605^{II}, 605^{III}, 605^{IV}, 605^{V}, 605^{VI}, 605^{VII}), and
for a different power class of the fuel cell stack (3, 103, 203, 303, 503) a second humidifier (13, 113, 213, 313, 513), which is intended for the different power class, is placed in the stack connection block (5, 105, 205, 305, 505, 605^{I}, 605^{II}, 605^{III}, 605^{IV}, 605^{V}, 605^{VI}, 605^{VII}).

15. Method for multiple use of a stack connection block (5, 105, 205, 305, 505, 605^{I}, 605^{II}, 605^{III}, 605^{IV}, 605^{V}, 605^{VI}, 605^{VII}) according to claim 14,
wherein the stack connection block (5, 105, 205, 305, 505, 605^{I}, 605", 605^{III}, 605^{IV}, 605^{V}, 605^{VI}, 605^{VII}) is designed according to any one of claims 1 to 12,
**characterized in that**
the fuel cell stack (3, 103, 203, 303, 503) is a polymer electrolyte membrane fuel cell stack which is to be operated in a temperature range below 100°C.

## Revendications

1. Unité de raccordement d'empilement
avec un bloc de raccordement d'empilement (5, 105, 205, 305, 505, 605^{I}, 605 , 605^{III} 605^{IV}, 605^{V}, 605^{VI} , 605^{VII}) et un humidificateur (13, 113, 213, 313, 513) pour un empilement de piles à combustible (3, 103, 203, 303, 503) avec des piles à combustible (7, 7^{I}, 7^{II}, 7^{III}, 107, 107^{I}, 107^{II}, 107^{III}, 207, 207^{I}, 207^{II}, 207^{III}, 307, 307 , 307^{II}, 307^{III}) pouvant fonctionner avec au moins un milieu (71, 73) humidifié, tel qu'avec un air (73) alimenté en vapeur d'eau, avec des membranes électrolytiques qui présentent une conductivité protonique pouvant être influencée au moyen d'eau pouvant être stockée, par exemple des membranes électrolytiques polymères à base de groupes acide sulfonique perfluorés,
dans laquelle le bloc de raccordement d'empilement (5, 105, 205, 305, 505, 605^{I}, 605 , 605^{III} , 605^{IV}, 605^{V}, 605^{VI}, 605^{VII}) comprend
un raccord d'empilement (31, 37, 131, 137, 231, 237, 331, 337) pour un combustible tel que de l'hydrogène,
un raccord d'empilement (33, 39, 133, 139, 233, 239, 333, 339) pour un partenaire réactionnel tel que l'air et
un raccord d'empilement (35, 41, 135, 141, 235, 241, 335, 341) pour un milieu de refroidissement
dans laquelle les trois raccords d'empilement (31, 33, 35, 37, 39, 41, 131, 133, 135, 137, 139, 141, 231, 233, 235, 237, 239, 241, 331, 333, 335, 337, 339, 341) sont tous conçus pour une liaison avec l'empilement de piles à combustible (3, 103, 203, 303, 503),
**caractérisée en ce que**
le bloc de raccordement d'empilement (5, 105, 205, 305, 505, 605^{I}, 605^{II}, 605^{III} 605^{IV}, 605^{V}, 605^{VI}, 605^{VII}) est conçu pour l'humidificateur (13, 113, 213, 313, 513) à intégration interne dans un espace d'humidificateur, dont la capacité de puissance peut être adaptée en fonction d'une résistance et/ou d'une capacité de puissance de l'empilement de piles à combustible (3, 103, 203, 303, 503) devant fonctionner, tel que pour un humidificateur à plaques (13, 113, 213, 313, 513, 523), par des moyens pour adapter un volume de l'espace d'humidificateur dans lequel est posé l'humidificateur (13, 113, 213, 313, 513), vers lequel au moins un canal d'amenée (45, 47, 145, 147, 245, 247, 345, 347) et au moins un canal d'évacuation (49, 51, 149, 151, 249, 251, 349, 351) sont guidés dans le bloc de raccordement d'empilement (5, 105, 205, 305, 505, 605^{I}, 605^{II}, 605^{III}, 605^{IV}, 605^{V}, 605^{VI} , 605^{VII}),
dans laquelle le canal d'amenée (47, 147, 247, 347) débouche dans le raccord d'empilement (33, 133, 233, 333) pour le partenaire réactionnel (73).

2. Unité de raccordement d'empilement
avec un bloc de raccordement d'empilement (5, 105, 205, 305, 505, 605^{I}, 605^{II} , 605^{III} 605^{IV}, 605^{V}, 605^{VI} , 605^{VII}) selon la revendication 1,
**caractérisée en ce que**
l'humidificateur (13, 113, 213, 313, 513), dont la puissance d'humidification est idéalement adaptée à une taille d'empilement, est placé dans une cavité (25, 25^{I}, 25^{I}, 25^{III}, 29, 125, 125^{I}, 125^{II}, 125^{III} 129, 225, 225^{I}, 225^{II}, 225^{III}, 229, 325, 325^{I}, 325^{III}, 325^{III}, 329) du bloc de raccordement d'empilement (5, 105, 205, 305, 505, 605^{I}, 605^{II}, 605^{III} 605^{IV}, 605^{V}, 605^{VI}, 605^{VII}),
qui présente un volume dans lequel peut être monté un humidificateur (13, 113, 213, 313, 513) pour un empilement de piles à combustible (3, 103, 203, 303, 503) délimité pour ce qui est de la dimension par une limite supérieure, en particulier dimensionné de façon maximale,
dans laquelle de préférence des humidificateurs (13, 113, 213, 313, 513) plus petits pour ce qui est de la puissance d'humidification sont adaptés à une étendue de la cavité (25, 25^{I}, 25^{II} 25^{III}, 29, 125, 125^{I}, 125^{II}, 125^{III}, 129, 225, 225^{I}, 225^{II}, 225^{III} , 229, 325, 325^{I}, 325^{II}, 325^{III}, 329) et sont maintenus dans la cavité (25, 25^{I}, 25^{I} , 25^{III} 29, 125, 125^{I}, 125^{II}, 125^{III}, 129, 225, 225^{I}, 225^{II}, 225^{III} 229, 325, 325^{I}, 325^{II}, 325^{III} 329) à l'aide des corps de remplissage (127, 227, 327) par des corps de remplissage (127, 227, 327).

3. Unité de raccordement d'empilement
avec un bloc de raccordement d'empilement (5, 105, 205, 305, 505, 605^{I}, 605^{II}, 605^{III}, 605^{IV}, 605^{V}, 605^{VI} , 605^{VII}) selon l'une quelconque des revendications précédentes,
**caractérisée en ce que**
l'humidificateur (13, 113, 213, 313, 513) est enveloppé sur au moins trois côtés, de préférence tous les côtés, par le bloc de raccordement d'empilement (5, 105, 205, 305, 505, 605^{I}, 605^{II}, 605^{III}, 605^{IV}, 605^{V}, 605^{VI} , 605^{VII}), en particulier enfermé de manière thermiquement isolée.

4. Unité de raccordement d'empilement
avec un bloc de raccordement d'empilement (5, 105, 205, 305, 505, 605^{I}, 605^{II}, 605^{III}, 605^{IV}, 605^{V}, 605^{VI} , 605^{VII}) selon l'une quelconque des revendications précédentes,
**caractérisée en ce que**
l'humidificateur (13, 113, 213, 313, 513) est raccordé à quatre canaux (45, 47, 49, 51, 145, 147, 149, 151, 245, 247, 249, 251, 345, 347, 349, 351) guidant l'air en tant que milieu, qui passent par l'intérieur du bloc de raccordement d'empilement (5, 105, 205, 305, 505, 605^{I}, 605^{II}, 605^{III} 605^{IV}, 605^{V}, 605^{VI}, 605^{VII}),
dans laquelle de préférence deux des quatre canaux sont des canaux d'amenée (45, 145, 245, 47, 147, 247, 345, 347) et deux des quatre canaux des canaux d'évacuation (49, 149, 249, 51, 151, 251, 349, 351).

5. Unité de raccordement d'empilement
avec un bloc de raccordement d'empilement (5, 105, 205, 305, 505, 605^{I}, 605 , 605^{III} 605^{IV}, 605^{V}, 605^{VI} , 605^{VII}) selon l'une quelconque des revendications précédentes,
**caractérisée en ce que**
le bloc de raccordement d'empilement (5, 105, 205, 305, 505, 605^{I}, 605^{II}, 605^{III}, 605^{IV}, 605^{V}, 605^{VI}, 605^{VII}) possède à l'intérieur un canal de dérivation (157, 257, 357) pour un milieu comme l'air,
dans laquelle le canal de dérivation (257, 357) de préférence réuni à un canal (243^{II} 343^{XI}) venant de l'humidificateur (213, 313) rejoint un orifice d'alimentation en milieux (133, 233, 333) du bloc de raccordement d'empilement (5, 105, 205, 305, 505, 605 , 605 , 605^{III} 605^{IV}, 605^{V}, 605^{VI}, 605^{VII}), qui est destiné à un raccordement de l'empilement de piles à combustible (3, 103, 203, 303, 503).

6. Unité de raccordement d'empilement
avec un bloc de raccordement d'empilement (5, 105, 205, 305, 505, 605^{I}, 605 , 605^{III}, 605^{IV}, 605^{II}, 605^{VI} , 605^{VII}) selon l'une quelconque des revendications précédentes,
**caractérisée en ce que**
au moins une vanne (281, 381, 283, 285, 385, 287, 387, 289, 389, 291, 391, 393) est intégrée en son sein,
de préférence une ou plusieurs des vannes suivantes :
vanne réglable (287, 387),
vanne trois voies (279, 379),
vanne de purge (281, 381) avec une sortie vers une admission d'air de l'empilement (3, 103, 203, 303, 503),
vanne de purge avec une sortie vers une admission d'air côté entrée de l'humidificateur (213, 313),
vanne de purge (283) avec une sortie vers une évacuation d'air côté sortie de l'humidificateur (13, 113, 213, 313, 513),
vanne de séparation d'eau (393),
vanne de sécurité (289, 389, 291, 391),
vanne de régulation de pression (287, 387),
vanne de surpression (289, 389) en tant que premier dispositif de sécurité pour une pression d'entrée d'empilement, et/ou
vanne de surpression (291, 391) en tant qu'un dispositif de sécurité, en particulier deuxième dispositif de sécurité, pour une pression d'alimentation.

7. Unité de raccordement d'empilement
avec un bloc de raccordement d'empilement (5, 105, 205, 305, 505, 605^{I}, 605 , 605^{III}, 605^{IV}, 605^{V}, 605^{VI} , 605^{VII}) selon l'une quelconque des revendications précédentes,
**caractérisée en ce que**
à l'intérieur du bloc de raccordement d'empilement (5, 105, 205, 305, 505, 605^{I}, 605 , 605^{III} 605^{IV}, 605^{II}, 605^{VI}, 605^{VII}**)**^{I} est intégré un dispositif de recirculation (397), tel qu'une buse de recirculation, une pompe à jet (397) ou une pompe de recirculation.

8. Unité de raccordement d'empilement
avec un bloc de raccordement d'empilement (5, 105, 205, 305, 505, 605^{I}, 605 , 605^{III}, 605^{IV}, 605^{V}, 605^{VI} , 605^{VII}**)** selon l'une quelconque des revendications précédentes,
**caractérisée en ce que**
l'humidificateur (13, 113, 213, 313, 513), une cartouche d'humidificateur (121, 221, 321, 521) et/ou un bloc de plaques d'humidificateur (523) présente ou présentent une forme d'un corps tronqué, tel que par exemple une forme de pyramide tronquée,
dans laquelle de préférence un couvercle (566, 666, 666^{I}, 666^{II}, 666^{III}, 666^{IV} 666^{V}, 666^{VI}, 666^{VII}) du bloc de raccordement d'empilement (5, 105, 205, 305, 505, 605^{I}, 605 , 605^{III}, 605^{IV}, 605^{V}, 605^{VI}, 605^{VII}) est relié à plat sur un côté le plus large de l'humidificateur (13, 113, 213, 313, 513) pour la génération d'une pression de compression d'étanchéité à un boîtier (568, 668^{I}, 668 , 668^{III} 668^{IV}, 668^{V}, 668^{V}, 668^{VII}) du bloc de raccordement d'empilement (5, 105, 205, 305, 505, 605^{I}, 605^{II}, 605^{III}, 605^{IV}, 605^{V}, 605^{VI} , 605^{VII}),
par exemple à l'aide d'un ou plusieurs ressorts en tôle ou clips (663^{I}, 663^{VII}),
par exemple à l'aide d'une ou plusieurs vis de fermeture (563, 563^{I}, 563^{II}, 663^{II}),
par exemple à l'aide d'un ou plusieurs rivets à encliquetage (663^{III}),
par exemple à l'aide d'une ou plusieurs fermetures à vis et à baïonnette (663^{IV}),
par exemple à l'aide d'un ressort de serrage (663^{VI}),
par exemple à l'aide d'une liaison canal de poussée-ergot, en particulier se terminant de manière conique,
par exemple à l'aide d'un ou plusieurs crochets d'encliquetage (663^{V}).

9. Unité de raccordement d'empilement
avec un bloc de raccordement d'empilement (5, 105, 205, 305, 505, 605^{I}, 605 , 605^{III}, 605^{IV}, 605^{V}, 605^{VI} , 605^{VII}) selon l'une quelconque des revendications précédentes,
**caractérisée en ce que**
le bloc de raccordement d'empilement (5, 105, 205, 305, 505, 605^{I}, 605^{II}, 605^{III}, 605^{IV}, 605^{V}, 605^{VI}, 605^{VII}) est fabriqué à partir d'au moins deux pièces moulées par injection (565, 567, 665, 665^{I}, 665^{II}, 665^{III}, 665^{IV} 665^{V}, 665^{VI}, 665^{VII}, 667^{I}, 667^{II}, 667^{III} 667^{IV}, 667^{V}, 667^{VI}, 667^{VII}), de préférence des pièces moulées par injection en matière plastique,
dont en particulier au moins une est formée à la manière d'une coque, par exemple à la manière d'une demi-coque.

10. Unité de raccordement d'empilement
avec un bloc de raccordement d'empilement (5, 105, 205, 305, 505, 605^{I}, 605 , 605^{III}, 605^{IV}, 605^{V}, 605^{VI} , 605^{VII}) selon l'une quelconque des revendications précédentes,
**caractérisée en ce que**
le bloc de raccordement d'empilement (5, 105, 205, 305, 505, 605^{I}, 605^{II}, 605^{III}, 605^{IV}, 605^{V}, 605^{VI} , 605^{VII}) est conçu en tant que support de l'empilement de piles à combustible (3, 103, 203, 303, 503) à raccorder pour un placement avec soutien, par exemple par des points de raccordement d'attache pour la fixation du bloc de raccordement d'empilement (5, 105, 205, 305, 505, 605^{I}, 605^{II}, 605^{III}, 605^{IV}, 605^{V}, 605^{VI}) avec l'empilement de piles à combustible (3, 103, 203, 303, 503).

11. Unité de raccordement d'empilement
avec un bloc de raccordement d'empilement (305, 505, 605^{I}, 605^{II}, 605^{III}, 605^{IV}, 605^{V}, 605^{VI}, 605^{VII}) selon l'une quelconque des revendications précédentes,
**caractérisée en ce que**
le bloc de raccordement d'empilement (305, 505, 605^{I}, 605^{II}, 605^{III}, 605^{IV}, 605^{V}, 605^{VI}, 605^{VII}) est conçu pour la réception d'au moins l'un des capteurs (398, 398 , 398^{II}, 399, 399^{I}) suivants :
un capteur de pression (399) en tant que capteur de pression d'hydrogène,
un capteur de pression (399^{I}) en tant que capteur de pression d'air,
un capteur de température (398^{I}) en tant que capteur de température d'écoulement d'air,
un capteur de température (398, 398^{II}) en tant que capteur de température de milieu de refroidissement.

12. Unité de raccordement d'empilement
avec un bloc de raccordement d'empilement (305, 505, 605^{I}, 605^{II}, 605^{III}, 605^{IV}, 605^{V}, 605^{VI}, 605^{VII}) selon l'une quelconque des revendications précédentes,
**caractérisée en ce que**
un séparateur d'eau (395, 595) est présent dans le bloc de raccordement d'empilement (305, 505, 605^{I}, 605^{II}, 605^{III}, 605^{IV}, 605^{V}, 605^{VI}),
qui est prévu en particulier pour une séparation d'eau d'un courant d'hydrogène, par exemple un courant d'hydrogène s'écoulant de l'empilement de piles à combustible (3, 103, 203, 303, 503).

13. Système de piles à combustible (1, 101, 201, 301, 501)
avec un empilement de piles à combustible (3, 103, 203, 303, 503),
qui présente au moins une plaque de raccordement pour milieux ou au moins une plaque d'extrémité d'empilement de piles à combustible (517, 519) avec au moins trois raccords sur un premier côté (59, 159, 259, 359) et de préférence pour ce qui est de la puissance peut être élargi sur un deuxième côté de la plaque de raccordement pour milieux ou de la plaque d'extrémité d'empilement de piles à combustible (517, 519) par des cellules empilées, et
avec une unité de raccordement d'empilement avec un bloc de raccordement d'empilement (5, 105, 205, 305, 505, 605^{I}, 605^{II}, 605^{III}, 605^{IV}, 605^{V}, 605^{VI} , 605^{VII}),
**caractérisé en ce que**
l'unité de raccordement d'empilement est conçue avec le bloc de raccordement d'empilement (5, 105, 205, 305, 505, 605^{I}, 605^{II}, 605^{III}, 605^{IV}, 605^{V}, 605^{VI}, 605^{VII}) selon l'une quelconque des revendications 1 à 12,
dans lequel le bloc de raccordement d'empilement (5, 105, 205, 305, 505, 605^{I}, 605 , 605^{III}, 605^{IV}, 605^{V}, 605^{VI} , 605^{VII}) est en liaison étanche aux milieux avec la plaque de raccordement pour milieux de l'empilement de piles à combustible (3, 103, 203, 303, 503) à l'aide d'au moins trois raccords d'empilement,
et l'humidificateur (13, 113, 213, 313, 513) fait partie intégrante du bloc de raccordement d'empilement (5, 105, 205, 305, 505, 605^{I}, 60^{II}, 605^{III}, 605^{IV}, 605^{V}, 605^{VI} , 605^{VII}).

14. Procédé pour l'utilisation multiple d'un bloc de raccordement d'empilement (5, 105, 205, 305, 505, 605^{I}, 605 , 605^{III}, 605^{IV}, 605^{V}, 605^{VI} , 605^{VII}) sur un empilement de piles à combustible (3, 103, 203, 303, 503) avec un premier ou un deuxième humidificateur (13, 113, 213, 313, 513),
dans lequel le bloc de raccordement d'empilement (5, 105, 205, 305, 505, 605^{I}, 605 , 605^{III}, 605^{IV}, 605^{V}, 605^{VI}, 605^{VII}) présente un volume (25, 25^{I}, 25^{II}, 25^{III}, 29, 125, 125^{I}, 125^{II}, 125^{III}, 129, 225, 225^{I}, 225 , 225^{III}, 229, 325, 325^{I}, 325^{II}, 325^{III}, 329) en son sein,
qui peut être rempli au moins en partie par un premier humidificateur (13, 113, 213, 313, 513) sélectionné pour une humidité suffisante d'un milieu (73) affluant,
dans lequel le volume (25, 25^{I}, 25^{II}, 25^{III}, 29, 125, 125^{I}, 125^{II}, 125^{III}, 129, 225, 225^{I}, 225^{II}, 225^{III}, 229, 325, 325^{I}, 325^{II}, 325^{III}, 329) dans le bloc de raccordement d'empilement (5, 105, 205, 305, 505, 605^{I}, 605^{II}, 605^{III}, 605^{IV}, 605^{V}, 605^{VI}, 605^{VII}) est dimensionné dans ses dimensions pour une réception d'un humidificateur (13, 113, 213, 313, 513) et en particulier dans ses dimensions de canaux (43, 43^{I}, 43^{II}, 43^{III} 43^{IV}, 43^{V}, 45, 47, 49, 51, 143, 143^{I}, 143 , 143^{III}, 143^{V}, 143^{V}, 145, 147, 149, 151, 157, 243, 243^{I}, 243 , 243^{III}, 243^{IV}, 243^{V}, 243^{VI}, 243^{VII}, 243^{VIII} 243^{IX}, 243^{X}, 243^{XI}, 243^{XII}, 245, 247, 249, 251, 257, 343, 343^{I}, 343^{II}, 343^{III}, 343^{IV}, 343^{V}, 343^{VI}, 343^{VII}, 343^{VII}, 343^{IX}, 343^{X}, 343^{XI}, 343^{XII}, 345, 347, 349, 351, 357) pour un empilement de piles à combustible (3, 103, 203, 303, 503) conçu avec une puissance maximale,
dans lequel pour une première utilisation du bloc de raccordement d'empilement (5, 105, 205, 305, 505, 605^{I}, 605 , 605^{III}, 605^{IV}, 605^{V}, 605^{VI}, 605^{VII}) le premier humidificateur (13, 113, 213, 313, 513) est posé dans le bloc de raccordement d'empilement (5, 105, 205, 305, 505, 605 , 605 , 605^{III}, 605^{IV}, 605^{V}, 605^{VI}, 605^{VII}), dont la capacité d'humidification est ajustée à une taille de l'empilement de piles à combustible (3, 103, 203, 303, 503), et
pour une catégorie de puissance différente de l'empilement de piles à combustible (3, 103, 203, 303, 503) un deuxième humidificateur (13, 113, 213, 313, 513) est posé dans le bloc de raccordement d'empilement (5, 105, 205, 305, 505, 605^{I}, 605^{II}, 605^{III}, 605^{IV}, 605^{V}, 605^{VI}, 605^{VII}), qui est prévu pour la catégorie de puissance différente.

15. Procédé pour l'utilisation multiple d'un bloc de raccordement d'empilement (5, 105, 205, 305, 505, 605^{I}, 605^{II}, 605^{III}, 605^{IV}, 605^{V}, 605^{VI}, 605^{VII}) selon la revendication 14,
dans lequel le bloc de raccordement d'empilement (5, 105, 205, 305, 505, 605^{I}, 605^{II}, 605^{III}, 605^{IV}, 605^{V}, 605^{VI} , 605^{VII}) est conçu selon l'une quelconque des revendications 1 à 12,
**caractérisé en ce que**
l'empilement de piles à combustible (3, 103, 203, 303, 503) est un empilement de piles à combustible à membrane électrolytique polymère, qui est destiné à fonctionner dans une plage de températures inférieure à 100 °C.
